# EUROPÄISCHE PATENTSCHRIFT

(11) **EP 3 740 815 B1**
(45) Veröffentlichungstag und Bekanntmachung des Hinweises auf die Patenterteilung: **07.04.2021**
(21) Anmeldenummer: 19707383.6
(22) Anmeldetag: 27.02.2019
(51) Int. Cl.: G02C 7/02, B29D 11/00, C23C 14/00, G02B 1/118, G03F 7/00, G02B 27/00, B05D 1/00, B05D 1/32, B05D 3/12, B82Y 20/00, B82Y 30/00, G02B 1/18

(54) **BRILLENGLAS UMFASSEND WENIGSTENS EINE NANOSTRUKTURIERTE UND/ODER MIKROSTRUKTURIERTE SCHICHT**
SPECTACLE LENS COMPRISING AT LEAST ONE NANOSTRUCTURED AND/OR MICRO-STRUCTURED LAYER
VERRE DE LUNETTES COMPRENANT AU MOINS UNE COUCHE NANOSTRUCTURÉE ET/OU MICROSTRUCTURÉE

(30) Priorität: 27.02.2018 EP 18159008
(43) Veröffentlichungstag der Anmeldung: 25.11.2020
(73) Patentinhaber: Carl Zeiss Vision International GmbH, 73430 Aalen (DE)
(72) Erfinder: LLOBERA ADAN, Andreu, 08290 Cerdanyola del Vallès Barcelona (ES); BETZLER, Svenja, 73434 Aalen (DE)
(74) Vertreter: Carl Zeiss AG - Patentabteilung
(86) Internationale Anmeldenummer: PCT/EP2019/054823
(87) Internationale Veröffentlichungsnummer: WO 2019/166472

(56) Entgegenhaltungen:
- EP-A1- 2 801 846
- WO-A1-2014/060097
- WO-A1-2015/082948
- WO-A2-2009/062140
- DE-A1-102007 004 524
- DE-C1- 19 519 975
- PIERRE COLSON ET AL: "Nanosphere Lithography: A Powerful Method for the Controlled Manufacturing of Nanomaterials", JOURNAL OF NANOMATERIALS, Bd. 2013, 1. Januar 2013 (2013-01-01), Seiten 1-19, XP055368542, US ISSN: 1687-4110, DOI: 10.1155/2013/948510 in der Anmeldung erwähnt

## Beschreibung

Die Erfindung betrifft ein Brillenglas umfassend wenigstens ein Substrat und wenigstens eine nanostrukturierte und/oder mikrostrukturierte Schicht und ein Verfahren zur Herstellung eines solchen Brillenglases.

WO 2014/060097 A1 offenbart ein Verfahren zur Herstellung eines Brillenglases, welches das Bereitstellen einer Mikrostruktur an zumindest einer ersten Oberfläche des Brillenglaskörpers sowie das Aufbringen einer Schutzschicht auf diese Mikrostruktur umfasst. Die Schutzschicht soll die Mikrostruktur zumindest teilweise bedecken und diese so vor Beschädigungen oder Verunreinigungen während der Herstellung des Brillenglases oder während des Gebrauchs durch den Brillenträger schützen. Die Schutzschicht weist beispielsweise auf der der Mikrostruktur abgewandten Seite eine Topographie auf, welche der entsprechenden Oberfläche des Brillenglases folgt. Die Mikrostruktur kann entweder bereits beim Gießen des Brillenglases durch entsprechende negative Mikrostrukturen in der Gießformschale erzeugt werden, durch Umformen, mechanisch spanend oder per Laserablation erzeugt werden. WO 2014/060097 A1 offenbart kein Verfahren, durch welches eine nanostrukturierte oder mikrostrukturierte Schicht mittels wenigstens einer Lage von Nanopartikeln und/oder Mikropartikeln hergestellt wird.

DE 10 2007 004524 A1 offenbart ein Verfahren zur Erzeugung einer sichtbaren Struktur mit mehreren nebeneinander angeordneten und räumlich ausgedehnten Gravurpunkten in einem transparenten Gegenstand, bei dem jeder Gravurpunkt aus einem Wirkvolumen gebildet wird, in das ein Strahl fokussiert wird. Die Gravurpunkte können auch in eine auf der Oberfläche befindliche Beschichtung eingebracht werden. Zur Gravur wird ein gepulster Laserstrahl verwendet, welcher in unmittelbarer Nähe des Fokus einen Strahldurchmesser erreicht, bei dem die Intensität den materialspezifischen Schwellwert zur Brechungsindexänderung erreicht hat. DE 10 2007 004524 A1 offenbart kein Herstellungsverfahren, welches Nanopartikel und/oder Mikropartikel zur Maskierung einer zu beschichtenden Oberfläche einsetzt.

WO 2009/062140 A2 offenbart eine mehrschichtige Entspiegelungsschicht, welche eine Vielzahl nanostrukturierter Schichten umfasst. Jede dieser Schichten hat eine abgestimmte Porosität und zumindest ein Teil dieser nanostrukturierten Schichten hat eine voneinander verschiedene Porosität um in diesen Schichten einen anderen Brechungsindex zu erzeugen. Die nanostrukturierten Schichten können mittels eines Sol-Gel-Prozesses, durch Kontrolle der Oberflächenbenetzung ("surfactant templation") und/oder mittels eines polymeren Vorläufers und der Zersetzung des organischen Anteils durch Erwärmen, Plasma oder Ozon erzeugt werden. Die die Entspiegelungsschicht umfassende Vorrichtung kann eine photovoltaische Absorberschicht umfassen. Des Weiteren kann die Entspiegelungsschicht als Beschichtung von Linsen dienen. WO 2009/062140 A2 offenbart kein Verfahren zur Herstellung der nanostrukturierten Schicht, welches Nanopartikel und/oder Mikropartikel zur Maskierung einer zu beschichtenden Oberfläche einsetzt.

Pierre Colson et al., Journal of Nanomaterials, Bd. 2013, 1. Januar 2013, Seiten 1 bis 19, offenbaren unter anderem ein Lithographieverfahren ("nanosphere lithography"), welches zunächst ein Substrat mit einer Suspension monodisperser sphärischer Kolloide, beispielweise aus Polystyrol, belegt. Nach Trocknung wird die Maske als eine hexagonal dichteste Kugelpackung in Form einer Monolage oder Doppellage ausgebildet, in deren Zwischenräume ein Material eingebracht werden kann. Die Entfernung der Maske kann das Material noch einem Härtungsschritt unterzogen werden. Eine der Oberflächen eines Brillenglases ist nicht als Substrat erwähnt. Des Weiteren ist eingebrachte Material nicht näher spezifiziert.

EP 2 801 846 A1 offenbart ein optisches Element, dessen Beschichtung eine Diffusivität hat, die das Aufnehmen von durch die Beschichtung hindurchtretenden Wassermolekülen in den Substratkörper und das Freigeben von Wassermolekülen aus dem Substratkörper durch die Beschichtung hindurch in einem Zeitintervall gewährleistet, welches um nicht mehr als 10 Stunden länger ist als die Wasseraufnahme und die Wasserabgabe des identischen Substratkörpers. Die Diffusivität der Beschichtung kann beispielsweise dadurch gewährleistet werden, dass Nanopartikel in das Grundmaterial des Substratkörpers oder in die Hartlackschicht eingebracht werden, die dann, sofern sie an der Oberfläche liegen, die chemische Bindungskraft der aufzubringenden Schicht lokal beeinflussen. An den Stellen, an denen die Partikel aus dem Grundmaterial an der Oberfläche liegen, werden in der aufgebrachten Schicht Störstellen hervorgerufen. Die Partikel werden gemäß EP 2 801 846 A1 anschließend nicht aus dem Substratkörper oder aus der Hartlackschicht nicht entfernt.

WO 2015/082948 A1 beschreibt eine ophthalmische Linse, welche wenigstens eine nanostrukturierte Oberfläche umfasst. Die nanostrukturierte Schicht kann mittels Nanoimprintlithographie hergestellt werden.

Aufgabe der Erfindung war es, ein Brillenglas zur Verfügung zu stellen, dessen funktionale Eigenschaften auf einfache Art und Weise verändert werden können. Des Weiteren war es Aufgabe der Erfindung, ein Verfahren zur Herstellung eines solchen Brillenglases zur Verfügung zu stellen.

Die Aufgabe wurde gelöst durch Bereitstellen eines Verfahrens gemäß Anspruch 1.

Zu den funktionalen Eigenschaften eines Brillenglases, welche erfindungsgemäß eingestellt und/oder verändert werden können, zählen unter anderem, dass die Oberfläche des Brillenglases nicht beschlägt, nicht vereist, sich selbstreinigt, sich selbst repariert, katalytische Eigenschaften, beispielsweise photokatalytische Eigenschaften, aufweist, polarisierend ist, elektrisch leitfähig ist, entspiegelnd wirkt, antibakteriell wirkt und/oder nicht verkratzt. Das Brillenglas kann vorstehend aufgeführte funktionale Eigenschaften jeweils allein oder als Kombination mehrerer Eigenschaften aufweisen. Mittels der erfindungsgemäßen wenigstens einen nanostrukturierte und/oder mikrostrukturierten Schicht können verschiedene der vorstehend aufgeführten funktionalen Eigenschaften gleichzeitig einer Oberfläche verliehen werden, ohne dass hierfür mehrere separate Schichten notwendig sind.

Das zu beschichtende Substrat kann wenigstens ein polymeres Material und/oder wenigstens ein mineralisches Glas umfassen, wobei das polymere Material oder das mineralische Glas jeweils als Brillenglas-Halbfertigprodukt, d.h. als Linsenrohling mit nur einer optisch fertig bearbeiteten Fläche gemäß DIN EN ISO 13666:2013-10, Absatz 8.4.2, oder als fertiges Brillenglas, d.h. als Brillenglas mit zwei fertig bearbeiteten optischen Flächen vor oder nach der Randbearbeitung gemäß DIN EN ISO 13666:2013-10, Absatz 8.4.6, vorliegen kann. Die Brillenglas-Halbfertigprodukte können als Einstärken-Brillenglas-Halbfertigprodukte, Mehrstärken-Brillenglas-Halbfertigprodukte oder Gleitsicht-Brillenglas-Halbfertigprodukte gemäß DIN EN ISO 13666:2013-10, Absätze 8.4.3, 8.4.4 und 8.4.5, vorliegen. Bei den fertigen Brillengläsern kann es sich um Einstärken-Brillengläser, Mehrstärken-Brillengläser, Zweistärken-Brillengläser, Dreistärken-Brillengläser, Gleitsicht-Brillengläser oder degressive Brillengläser gemäß DIN EN ISO 13666:2013-10, Absätze 8.3.1, 8.3.2, 8.3.3, 8.3.4, 8.3.5 und 8.3.6 handeln. Die als Substrat einsetzbaren Brillenglas-Halbfertigprodukte bzw. fertigen Brillengläser können beispielsweise auf den in nachstehender Tabelle 1 genannten Grundmaterialien basieren.

**Tabelle 1: Beispiele für Grundmaterialien für Brillenglas-Halbfertigprodukte bzw. fertige Brillengläser**

| Handelsname | Grundmaterial | Mittlerer Brechungsindex n^{*} | Abbe-Zahl v^{*} |
|---|---|---|---|
| CR 39, CR 330, CR 607, CR 630, RAV 700, 7NG, 7AT, 710, 713, 720 | Polyallyldiglycolcarbonat ((P)ADC) | 1,500 | 56 |
| RAVolution | Polyharnstoff / Polyurethan | 1,500 | 54 |
| Trivex | Polyharnstoff / Polyurethan | 1,530 | 45 |
| Panlite, Lexan | Polycarbonat (PC) | 1,590 | 29 |
| MR 6 | Polythiourcthan | 1,598 | |
| MR 8 | Polythiourethan | 1,598 | 41 |
| MR 7 | Polythiourethan | 1,664 | 32 |
| MR 10 | Polythiourethan | 1,666 | 32 |
| MR 174 | Polyepisulfid | 1,738 | 32 |
| MGC 1.76 | Polyepisulfid | 1,76 | 30 |
| | Mineral 1.5 | 1,525 | 58 |
| | Mineral 1.6 | 1,604 | 44 |
| | Mineral 1.7 | 1,701 | 39,2 |
| | Mineral 1.8 | 1,802 | 34,4 |
| | Mineral 1.9 | 1,885 | 30 |

| | | | |
|---|---|---|---|
| * Bezogen auf Natrium D-Linie | | | |

Die der optisch fertig bearbeiteten Fläche gegenüberliegende Fläche des Brillenglas-Halbfertigprodukts kann vor oder nach der Beschichtung der optisch fertig bearbeiteten Fläche des Brillenglas-Halbfertigprodukts bevorzugt durch mechanische Bearbeitung, wie beispielsweise Fräsen und/oder Schleifen und/oder Drehen und/oder Polieren, in die zweite optisch fertig bearbeitete Fläche überführt werden. Bevorzugt erfolgt diese mechanische Bearbeitung vor der Beschichtung der optisch fertig bearbeiteten Fläche des Brillenglas-Halbfertigprodukts.

Bei dem zu beschichtenden Substrat handelt es sich bevorzugt um ein fertiges Brillenglas. Besonders bevorzugt handelt es sich bei dem zu beschichtenden Substrat um ein fertiges Brillenglas basierend auf wenigstens einem polymeren Material.

Das zu beschichtende Substrat kann keine optische Korrektionswirkung aufweisen. Alternativ kann das zu beschichtende Substrat mit einer optischen Korrektionswirkung und/oder einer Bildfehlerkorrektion für das blickende Auge ausgestattet sein. Unter optischer Korrektionswirkung wird die sphärische Korrektion, die astigmatische Korrektion und die Korrektion der Achslage sowie optional die Korrektion durch ein Prisma mit Basislage verstanden. Diese optische Korrektionswirkung ist herkömmlicherweise für die Ferne oder für die Nähe in Einstärken-Brillengläsern verwirklicht. Bei Mehrstärken-Brillengläsern, Zweistärken-Brillengläsern, Dreistärken-Brillengläsern, Gleitsicht-Brillengläsern oder degressiven Brillengläsern kann die optische Korrektionswirkung für die Ferne und/oder für die Nähe jeweils eine sphärische Korrektion, eine astigmatische Korrektion, eine Korrektion der Achslage sowie optional eine Korrektion durch ein Prisma mit Basislage beinhalten. Die Bildfehlerkorrektion für das blickende Auge wird, unabhängig davon, ob es sich um eine Bildfehlerkorrektion für die Ferne oder für die Nähe handelt, bevorzugt analog zu Werner Köppen "Konzeption und Entwicklung von Gleitsichtgläsern", Deutsche Optiker Zeitschrift DOZ, Oktober 1995, Seite 42 - 45, berechnet. Hierzu werden die Flächeneigenschaften mindestens einer Substratoberfläche in einem Optimierungsprozess durch Iteration so lange verändert bis eine gewünschte Bildfehlerverteilung für das blickende Auge innerhalb einer vorgegebenen Toleranz erreicht ist, d.h. bis die Merit-Funktion einen vorgegeben Wert unterschritten hat.

Die Herstellung des zu beschichtenden Substrats kann entweder mittels Urformen und anschließender mechanischer Bearbeitung, wie beispielsweise Fräsen und/oder Schleifen und/oder Drehen und/oder Polieren oder, bei auf wenigstens einem polymerem Material basierenden Substraten, mittels eines additiven Herstellungsverfahrens erfolgen. Bei der Herstellung des zu beschichtenden, auf wenigstens einem polymeren Material basierenden Substrats mittels eines additiven Herstellungsverfahrens kann das Substrat einen einheitlichen Brechungsindex oder eine ortsabhängige Brechungsindexverteilung aufweisen. Die ortsabhängige Brechungsindexverteilung wird bevorzugt vorab mittels optischer Rechenprogramme, wie beispielsweise ZEMAX (Firma Zemax LLC), berechnet und optimiert. Für die Berechnung müssen bevorzugt die Position des zu beschichtenden Substrats vor dem dafür vorgesehenen Auge, die Pupillendistanz, die Vorneigung des zu beschichtenden Substrats, der Fassungsscheibenwinkel des zu beschichtenden Substrats sowie die Substratgröße bekannt sein. Darüber hinaus wird, insbesondere bei der Berechnung von Mehrstärken-Brillengläsern, Zweistärken-Brillengläsern, Dreistärken-Brillengläsern, Gleitsicht-Brillengläsern und degressiven Brillengläsern ein Objektabstandsmodell zugrunde gelegt, welches die Position von Objektpunkten im Blickfeld des Brillenträgers relativ zu dessen Augendrehpunkten beschreibt. Ein Gleitsicht-Brillenglas, welches eine ortsabhängige Brechungsindexverteilung aufweist, ist beispielsweise in EP 17152384.8 offenbart.

Das zu beschichtende Substrat kann sowohl auf der Vorderfläche, d.h. der objektseitigen Fläche, welche gemäß DIN EN ISO 13666:2013-10, Absatz 5.8, bestimmungsgemäß in der Brille vom Auge abgewandt liegt, als auch auf der Rückfläche, d.h. der augenseitigen Fläche, welche gemäß DIN EN ISO 13666:2013-10, Absatz 5.9, bestimmungsgemäß in der Brille dem Auge zugewandt liegt, wenigstens eine nanostrukturierte und/oder mikrostrukturierte Schicht umfassen. Bevorzugt umfasst das zu beschichtende Substrat sowohl auf der Vorderfläche als auch auf der Rückfläche wenigstens eine nanostrukturierte und/oder mikrostrukturierte Schicht.

Umfasst das zu beschichtende Substrat sowohl wenigstens ein polymeres Material als auch wenigstens ein mineralisches Glas, ist das mineralische Glas bevorzugt als Dünnstglas und das polymere Material bevorzugt als Brillenglas-Halbfertigprodukt oder als fertiges Brillenglas oder als wenigstens eine Kunststofffolie ausgebildet. Das Brillenglas-Halbfertigprodukt oder das fertige Brillenglas können auch bei dieser Ausführungsform mittels eines additiven Herstellungsverfahrens hergestellt sein und entweder einen einheitlichen Brechungsindex oder eine ortsabhängige Brechungsindexverteilung aufweisen. Umfasst bei dieser Ausführungsform das zu beschichtende Substrat wenigstens ein Dünnstglas und wenigstens eine Kunststofffolie, ist die wenigstens eine Kunststofffolie bevorzugt zwischen wenigstens zwei Dünnstgläsern angebracht. Die wenigstens eine Kunststofffolie basiert bevorzugt auf Polyethylen, Polypropylen, Polyethylenterephthalat, Polycarbonat, Polymethylmethacrylat, Polyvinylchlorid, Polyvinylacetat, Polyvinylbutyrat und/oder Mischungen hiervon. Die wenigstens eine Kunststofffolie kann beispielsweise mit Cellulosetriacetat stabilisiert werden. Die wenigstens eine Kunststofffolie kann eingefärbt oder nicht eingefärbt sein. Soll das zu beschichtende, wenigstens eine Kunststofffolie umfassende Substrat eingefärbt sein, ist bevorzugt die Kunststofffolie eingefärbt. Die wenigstens eine Kunststofffolie weist bevorzugt eine mittlere Dicke aus einem Bereich von 9 µm bis 205 µm, besonders bevorzugt aus einem Bereich von 14 µm bis 103 µm auf. Wenigstens ein Dünnstglas kann sich bei dieser Ausführungsform auf der Vorderfläche und/oder auf der Rückfläche des fertigen Brillenglases befinden. Bevorzugt befindet sich wenigstens ein Dünnstglas sowohl auf der Vorderfläche als auch auf der Rückfläche des fertigen Brillenglases. Bei der Verwendung eines Brillenglas-Halbfertigprodukts als polymeres Material wird bei dieser Ausführungsform zunächst die optisch nicht fertig bearbeitete Fläche bearbeitet und dann die Vorderfläche und/oder die Rückfläche des so erhaltenen fertigen Brillenglases mit wenigstens einem Dünnstglas verbunden. Alternativ wird bei der Verwendung eines Brillenglas-Halbfertigprodukts als polymeres Material das wenigstens eine Dünnstglas mit der bereits fertig bearbeiteten optischen Fläche verbunden, die optisch nicht fertig bearbeitete Fläche bearbeitet und diese bearbeitete Fläche optional anschließend mit wenigstens einem weiteren Dünnstglas verbunden. Die Verbindung mit wenigstens einem weiteren Dünnstglas ist hierbei bevorzugt. Bevorzugt handelt es sich bei der fertig bearbeiteten optischen Fläche des Brillenglas-Halbfertigprodukts um dessen Vorderfläche und bei der optisch nicht fertig bearbeiteten Fläche um dessen Rückfläche. Alternativ zu der Überführung der optisch nicht fertig bearbeiteten Fläche in eine zweite optisch fertig bearbeitete Fläche und deren anschließende Verbindung mit wenigstens einem Dünnstglas kann diese zweite optisch fertig bearbeitete Fläche mit wenigstens einer Beschichtung versehen werden. Diese Beschichtung wird bevorzugt aus der Gruppe bestehend aus wenigstens einer nanostrukturierten und/oder mikrostrukturierten Schicht, wenigstens einer Hartlackschicht, wenigstens einer Entspiegelungsschicht, wenigstens einer Antibeschlagsschicht, wenigstens einer elektrisch leitfähigen oder elektrisch halbleitenden Schicht und wenigstens einer Clean-Coat-Schicht ausgewählt. Besonders bevorzugt ist wenigstens eine nanostrukturierte und/oder mikrostrukturierte Schicht als Beschichtung.
Das wenigstens eine, mit der Vorderfläche des fertigen Brillenglases verbundene Dünnstglas kann identisch oder verschieden, beispielsweise in Bezug auf die Glaskomposition, die mittlere Dicke und/oder die Form, zu dem wenigstens einen, mit der Rückfläche des fertigen Brillenglases verbundenen Dünnstglas sein. Gleiches gilt auch bei der Verwendung eines Brillenglas-Halbfertigprodukts oder einer Kunststofffolie als polymeres Material, welches bzw. welche jeweils mit wenigstens einem Dünnstglas verbunden wird. Bei Verwendung eines Brillenglas-Halbfertigprodukts wird hierbei die optisch nicht fertig bearbeitete Fläche vor der Verbindung mit wenigstens einem Dünnstglas in eine optisch fertig bearbeitete Fläche überführt.
Die Verbindung des wenigstens einen Dünnstglases mit der optisch fertig bearbeiteten Fläche, bevorzugt der Vorderfläche, des Brillenglas-Halbfertigprodukts bzw. mit einer der fertig bearbeiteten optischen Flächen, bevorzugt der Vorderfläche, des fertigen Brillenglases erfolgt bevorzugt stoffschlüssig und formschlüssig. Bevorzugt wird die Rückfläche des wenigstens einen Dünnstglases mit der optisch fertig bearbeiteten Vorderfläche des Brillenglas-Halbfertigprodukts bzw. des fertigen Brillenglases verbunden. Die Rückfläche des wenigstens einen Dünnstglases und/oder die optisch fertig bearbeitete Vorderfläche des Brillenglas-Halbfertigprodukts bzw. des fertigen Brillenglases kann mit wenigstens einer Beschichtung versehen sein. Diese wenigstens eine Beschichtung kann wenigstens eine farbgebende Schicht, wenigstens eine photochrome Schicht und/oder wenigstens eine polarisierende Schicht umfassen. Die wenigstens eine farbgebende Schicht umfasst bevorzugt eine färbbare Schicht gemäß US 4,355,135 A, insbesondere gemäß Anspruch 1 der US 4,355,135 A, gemäß US 4,294,950 A, insbesondere gemäß einem der Ansprüche 1 oder 6 der US 4,294,950 A, oder gemäß US 4,211,823 A, insbesondere gemäß einem der Ansprüche 1 oder 2 der US 4,211,823 A. Besonders bevorzugt umfasst die farbgebende Schicht eine färbbare Schicht gemäß US 4,355,135 A. Die wenigstens eine photochrome Schicht umfasst bevorzugt eine Schicht gemäß US 2006/0269741 A1, insbesondere gemäß US 2006/0269741 A1, Anspruch 6, oder eine Schicht gemäß US 2004/0220292 A1, insbesondere gemäß US 2004/0220292 A1, Anspruch 1. Die wenigstens eine photochrome Schicht weist bevorzugt eine mittlere Dicke aus einem Bereich von 5 µm bis 200 µm, weiter bevorzugt aus einem Bereich von 9 µm bis 166 µm, besonders bevorzugt aus einem Bereich von 17 µm bis 121 µm und ganz besonders bevorzugt aus einem Bereich von 21 µm bis 81 µm auf. Die wenigstens eine polarisierende Schicht umfasst bevorzugt entweder eine Polarisationsfolie oder eine Schicht mit polarisierenden Eigenschaften. Als Polarisationsfolie kann eine Folie aus beispielsweise Polyvinylalkohol oder Polyethylenterephthalat eingesetzt werden, welche dichroitische Farbmittel umfasst. Die Polarisationsfolie kann einen einschichtigen oder mehrschichtigen Folienaufbau aufweisen. Die Polarisationsfolie kann passgenau zur Rückfläche des wenigstens einen Dünnstglases vorgeformt vorliegen. Bevorzugt wird die Polarisationsfolie unter Anlegen von Vakuum unter Zuhilfenahme einer Form, vorzugsweise einer Metallform, vorgeformt. Eine Schicht mit polarisierenden Eigenschaften ist beispielsweise in EP 1 965 235 A1, EP 0 217 502 A1, EP 1 674 898 A1, US 2006/0066947 A1, WO 2005/050265 A1, WO 2009/029198 A1, WO 2009/156784 A1 oder WO 2015/160612 A1 offenbart. In vorstehend genannten Anmeldungen ist die Schicht mit polarisierenden Eigenschaften jeweils Bestandteil einer dort beschriebenen Schichtenfolge. Im Rahmen dieser Erfindung wird vorzugsweise nur die in den genannten Anmeldungen beschriebene Schicht mit polarisierenden Eigenschaften als polarisierende Schicht eingesetzt.
Bevorzugt ist zwischen der Rückfläche des wenigstens einen Dünnstglases und der optisch fertig bearbeiteten Vorderfläche des Brillenglas-Halbfertigprodukts bzw. des fertigen Brillenglases nur eine einzige Schicht, ausgewählt aus wenigstens einer farbgebenden Schicht, wenigstens einer photochromen Schicht und wenigstens einer polarisierenden Schicht, vorhanden. Sind mehrere Schichten zwischen der Rückfläche des wenigstens einen Dünnstglases und der optisch fertig bearbeiteten Vorderfläche des Brillenglas-Halbfertigprodukts bzw. des fertigen Brillenglases vorhanden, liegen diese in nachstehenden bevorzugten Reihenfolgen von augenseitig nach objektseitig vor:
Dünnstglas / photochrome Schicht / polarisierende Schicht / farbgebende Schicht / Brillenglas-Halbfertigprodukt bzw. fertiges Brillenglas oder
Dünnstglas / photochrome Schicht / farbgebende Schicht / polarisierende Schicht / Brillenglas-Halbfertigprodukt bzw. fertiges Brillenglas oder
Dünnstglas / polarisierende Schicht / farbgebende Schicht / Brillenglas-Halbfertigprodukt bzw. fertiges Brillenglas.
Wird wenigstens eine Kunststofffolie als polymeres Material verwendet, ist die vorstehend beschriebene wenigstens eine farbgebende Schicht, wenigstens eine photochrome Schicht und/oder wenigstens eine polarisierende Schicht bevorzugt auf der Rückfläche des Dünnstglases aufgebracht. Umfasst die Rückfläche des Dünnstglases mehrere dieser Schichten ist deren Reihenfolge zwischen Dünnstglas und der wenigstens einen Kunststofffolie entsprechend den vorstehend beschriebenen Reihenfolgen zwischen Dünnstglas und Brillenglas-Halbfertigprodukt bzw. fertigem Brillenglas.

Die optionale, bevorzugte Verbindung der zweiten fertig bearbeiteten optischen Fläche des Brillenglas-Halbfertigprodukts bzw. des fertigen Brillenglases mit wenigstens einem weiteren Dünnstglas erfolgt bevorzugt ebenfalls stoffschlüssig und formschlüssig. Bevorzugt wird hierbei die optisch fertig bearbeitete Rückfläche des Brillenglas-Halbfertigprodukts bzw. des fertigen Brillenglases mit der Vorderfläche des wenigstens einen Dünnstglases verbunden. Die optisch fertig bearbeitete Rückfläche des Brillenglas-Halbfertigprodukts bzw. des fertigen Brillenglases und/oder die Vorderfläche des wenigstens einen Dünnstglases kann mit wenigstens einer Beschichtung versehen sein. Diese wenigstens eine Beschichtung umfasst bevorzugt eine farbgebende Schicht. Die farbgebende Schicht wurde bereits vorstehend definiert. Altemativ zu der Verbindung der optisch fertig bearbeiteten Rückfläche des Brillenglas-Halbfertigprodukts bzw. der Rückfläche des fertigen Brillenglases mit wenigstens einem Dünnstglas kann die jeweilige Rückfläche mit wenigstens einer Beschichtung versehen werden. Diese Beschichtung wird bevorzugt aus der Gruppe bestehend aus wenigstens einer nanostrukturierten und/oder mikrostrukturierten Schicht, wenigstens einer Hartlackschicht, wenigstens einer Entspiegelungsschicht, wenigstens einer Antibeschlagsschicht, wenigstens einer elektrisch leitfähigen oder elektrisch halbleitenden Schicht und wenigstens einer Clean-Coat-Schicht ausgewählt. Besonders bevorzugt umfasst die Beschichtung wenigstens eine nanostrukturierte und/oder mikrostrukturierte Schicht.

Die Beschichtung der Vorderfläche und/oder der Rückfläche des wenigstens einen Dünnstglases kann jeweils mittels eines PVD-Verfahrens, eines Tauchbeschichtungsverfahrens und/oder eines Schleuderbeschichtungsverfahrens erfolgen. Die anschließende Aushärtung der im Tauchbeschichtungsverfahren und/oder Schleuderbeschichtungsverfahren erhaltenen Beschichtung kann entweder thermisch oder strahlungshärtend erfolgen. Bevorzugt erfolgt die Aushärtung dieser Beschichtung strahlungshärtend.

Die Verbindung der jeweils optisch fertig bearbeiteten Fläche des Brillenglas-Halbfertigprodukts bzw. der wenigstens einen fertig bearbeiteten optischen Fläche des fertigen Brillenglases bzw. der wenigstens einen Kunststofffolie jeweils mit dem wenigstens einen Dünnstglas erfolgt bevorzugt mittels eines Klebemittels. Das Klebemittel kann hierbei beispielsweise als Primer oder Ausgleichsmaterial für die unterschiedliche Wärmeausdehnung der einzelnen Komponenten dienen. Weiterhin kann über die Auswahl des Klebemittels eine Angleichung eines gegebenenfalls vorhandenen Brechungsindexunterschieds Δn_{D} der einzelnen Komponenten zueinander erzielt werden. Vorzugsweise erfolgt hierbei nicht nur die Angleichung des Brechungsindex n_{D}, sondern auch die Angleichung der Abbe-Zahl, so dass die Änderung des Brechungsindex der einzelnen Komponenten über das sichtbare Spektrum hinweg gleich ist. Einsetzbare Klebemittel sind beispielsweise in der DE 10 2012 210 185 A1, der WO 2009/056196 A1 oder der WO 2015/121341 A1 beschrieben. Bevorzugt werden die einzelnen Komponenten mittels eines Klebemittels basierend auf einer aminkatalysierten Thiolhärtung von Epoxidharzen analog WO 2015/121341 A1, insbesondere analog Anspruch 1 der WO 2015/121341 A1, bei einer Temperatur aus einem Bereich von 20°C bis 80°C, bevorzugt aus einem Bereich von 40°C bis 70°C und besonders bevorzugt aus einem Bereich von 45°C bis 65°C miteinander verbunden.

Zwischen der, der fertig bearbeiteten optischen Fläche zugewandten Oberfläche des wenigstens einen Dünnstglases und der fertig bearbeiteten optischen Fläche kann wenigstens eine Schicht vorhanden sein. Diese wenigstens eine Schicht weist bevorzugt die gleiche Oberflächentopographie wie die jeweils darunter liegende Oberfläche, auf die diese wenigstens eine Schicht aufgebracht wurde, auf. Geringfügige Abweichungen in der Oberflächentopographie der beiden zusammenzufügenden Oberflächen können beispielsweise mittels eines Klebemittels verfüllt werden. Für eine formschlüssige Verbindung der jeweiligen Oberflächen ist es bevorzugt, dass die Krümmungsradien der jeweils miteinander zu verbindenden Komponenten bevorzugt weniger als 1 mm, weiter bevorzugt in einem Bereich von 0,03 mm bis ≤ 0,8 mm, besonders bevorzugt in einem Bereich von 0,04 mm bis ≤ 0,7 mm und ganz besonders bevorzugt in einem Bereich von 0,05 mm bis ≤ 0,6 mm voneinander abweichen.

Bevorzugt weisen das wenigstens eine Dünnstglas sowie das Brillenglas-Halbfertigprodukt bzw. das fertige Brillenglas vor dem Zusammenfügen mittels eines Klebemittels einen identischen Durchmesser auf. Bevorzugt weist die wenigstens eine Kunststofffolie einen Durchmesser auf, welcher ausreichend groß ist, dass die wenigstens eine Kunststofffolie die Vorderfläche des augenseitigen Dünnstglases und die Rückfläche des objektseitigen Dünnstglases komplett bedeckt. Etwaig überstehende Kunststofffolie wird bevorzugt abgeschnitten. Für den Fall, dass die wenigstens eine Kunststofffolie bereits den gleichen Krümmungsradius wie das hiermit zu verbindende Dünnstglas aufweist, weist die wenigstens eine Kunststofffolie bevorzugt den identischen Durchmesser wie das Dünnstglas auf.

Das wenigstens eine Dünnstglas kann auf diversen Glaskompositionen, wie beispielsweise Borosilikatglas, Aluminium-Borosilikatglas oder alkalifreiem Borosilikatglas, basieren. Bevorzugt basiert das wenigstens eine Dünnstglas auf einem Borosilikatglas oder einem Aluminium-Borosilikatglas.

Das wenigstens eine Dünnstglas weist bevorzugt eine mittlere Dicke aus einem Bereich von 10 µm bis 1000 µm, weiter bevorzugt aus einem Bereich von 13 µm bis 760 µm, weiter bevorzugt aus einem Bereich von 16 µm bis 510 µm, besonders bevorzugt aus einem Bereich von 18 µm bis 390 µm und ganz besonders bevorzugt aus einem Bereich von 19 µm bis 230 µm auf. Insbesondere bevorzugt weist das wenigstens eine Dünnstglas eine mittlere Dicke aus einem Bereich von 21 µm bis 121 µm auf. Unter der mittleren Dicke des wenigstens einen Dünnstglases wird das arithmetische Mittel verstanden, sofern nicht anders angeben. Unterhalb einer mittleren Dicke von 10 µm ist das wenigstens eine Dünnstglas mechanisch zu instabil, um mit der jeweils fertig bearbeiteten optischen Fläche des Brillenglas-Halbfertigprodukts bzw. des fertigen Brillenglases bzw. um mit wenigstens einer Kunststofffolie, verbunden werden zu können, ohne dass das wenigstens eine Dünnstglas zerbricht. Oberhalb einer mittleren Dicke von 1000 µm kann das wenigstens eine Dünnstglas bei Verwendung eines Brillenglas-Halbfertigprodukts bzw. eines fertigen Brillenglases, jeweils als polymeres Material und jeweils in Verbindung mit wenigstens einem Dünnstglas als Substrat, zu Brillengläsern führen, welche eine zu große Randdicke oder eine zu große Mittendicke aufweisen würden. Auch bei der Verwendung wenigstens einer Kunststofffolie als polymeres Material und in Verbindung mit wenigstens einem Dünnstglas als Substrat kann die Verwendung von wenigstens einem Dünnstglas mit einer mittleren Dicke von ≥ 1000 nm zu Brillengläsern führen, welche insgesamt zu dick und zu schwer werden, so dass auf diese Weise durch die Verwendung des wenigstens einen Dünnstglases in Bezug auf das Gewicht kein Vorteil gegenüber einem auf mineralischem Glas basierenden Brillenglas erzielt werden kann. Die mittlere Dicke des wenigstens einen Dünnstglases wird bevorzugt mit dem Messgerät Filmetrics F10-HC (Firma Filmetrics Inc.) vermessen. Die mittlere Dicke des wenigstens einen Dünnstglases wird bevorzugt anhand des wenigstens einen Dünnstglases vor dem Verbinden mit dem jeweiligen Substrat bestimmt. Alternativ kann die mittlere Dicke des wenigstens einen Dünnstglases mittels einer rasterelektronenmikroskopischen Aufnahme anhand eines Querschliffs bestimmt werden. Dies kann entweder anhand eines Querschliffs des wenigstens einen Dünnstglases oder anhand eines Querschliffs des Brillenglases umfassend das jeweilige polymere Material und wenigstens ein Dünnstglas erfolgen. Hierzu wird jeweils die Dicke des wenigstens einen Dünnstglases an wenigstens drei Stellen bestimmt und statistisch gemittelt. Die relative Standardabweichung der Dickenverteilung des wenigstens einen Dünnstglases liegt bevorzugt bei 0,1% bis 100%, bevorzugt bei 0,2% bis 81%, besonders bevorzugt bei 0,3% bis 66% und ganz besonders bevorzugt bei 0,4% bis 24%. Die relative Standardabweichung in [%] ist dabei der Quotient aus berechneter Standardabweichung und mittlerer Dicke.

Das wenigstens eine Dünnstglas weist bevorzugt eine Oberflächenrauigkeit Ra von < 1 nm auf. Weiter bevorzugt liegt die Oberflächenrauigkeit Ra des wenigstens einen Dünnstglases in einem Bereich von 0,1 nm bis 0,8 nm, besonders bevorzugt in einem Bereich von 0,3 nm bis 0,7 nm und ganz besonders bevorzugt in einem Bereich von 0,4 nm bis 0,6 nm. Vorstehend genannte Werte für die Oberflächenrauigkeit Ra beziehen sich jeweils auf die Vorderfläche und die Rückfläche des wenigstens einen nicht umgeformten, planen Dünnstglases. Nach einer Umformung gelten vorstehend genannte Werte jeweils bevorzugt nur für diejenige Oberfläche des wenigstens einen Dünnstglases, welche nicht mit dem zur Umformung verwendeten Formkörper in Kontakt gebracht wurde. In Abhängigkeit von dem zur Umformung eingesetzten Formkörper können vorstehend genannte Werte auch für die Oberfläche des wenigstens einen Dünnstglases gelten, welche mit dem zur Umformung eingesetzten Formkörper in Kontakt war. Die Oberflächenrauigkeit Ra des wenigstens einen Dünnstglases wird bevorzugt mittels Weißlichtinterferometrie, bevorzugt mit dem Gerät NewView 7100 (Firma Zygo Corporation) bestimmt. Weist das wenigstens eine Dünnstglas weitere oberflächliche Unebenheiten auf, so kann die flächenmäßige Analyse der jeweiligen Oberfläche weiterhin durch phasenmessende Deflektometrie, bevorzugt mit dem Gerät SpecGage (Firma 3D-Shape GmbH), bestimmt werden.

Die Transformationstemperatur T_{G} des wenigstens einen Dünnstglases liegt bevorzugt in einem Bereich von 400°C bis 800°C, weiter bevorzugt in einem Bereich von 430°C bis 770°C, besonders bevorzugt in einem Bereich von 490°C bis 740°C und ganz besonders bevorzugt in einem Bereich von 530°C bis 730°C. Die Transformationstemperatur T_{G} des wenigstens einen Dünnstglases kann jeweils mittels dynamisch-mechanischer Analyse, bevorzugt mit dem Messgerät DMA 8000 Dynamic Mechanical Analyzer (Firma Perkin Elmer Inc.), oder mittels dynamischer Differenzkalorimetrie, bevorzugt mit dem Messgerät DSC204CEL mit Controller TASC414/3A oder CC2001 (jeweils Firma Erich NETZSCH GmbH & Co. Holding KG), bestimmt werden. Bevorzugt wird die Transformationstemperatur T_{G} des wenigstens einen Dünnstglases mittels dynamischer Differenzkalorimetrie bestimmt.

Der Ausdehnungskoeffizient des wenigstens einen Dünnstglases liegt bevorzugt in einem Bereich von 1,8·10⁻⁶K⁻¹ bis 9,1·10⁻⁶K⁻¹, weiter bevorzugt in einem Bereich von 2,1·10⁻⁶K⁻¹ bis 8,8·10⁻⁶K⁻¹, besonders bevorzugt in einem Bereich von 2,6·10⁻⁶K⁻¹ bis 8,2·10⁻⁶K⁻¹ und ganz besonders bevorzugt in einem Bereich von 3,0·10⁻⁶K⁻¹ bis 7,4·10⁻⁶K⁻¹, jeweils bezogen auf den Temperaturbereich von 20°C bis 300°C. Der Ausdehnungskoeffizient des wenigstens einen Dünnstglases wird bevorzugt mittels Dilatometrie, bevorzugt mit dem Messgerät DIL 402 E/7 (Firma Erich NETZSCH GmbH & Co. Holding KG), erfasst. Das wenigstens eine Dünnstglas kann wenigstens ein Farbmittel oder kein Farbmittel umfassen. Bevorzugt umfasst das wenigstens eine Dünnstglas kein Farbmittel.

Weiterhin bevorzugt liegt die Transmission des wenigstens einen Dünnstglases ohne Farbmittel im Wellenlängenbereich von 400 nm bis 800 nm bei ≥ 90%, besonders bevorzugt bei ≥ 92%. Die Transmission des wenigstens einen Dünnstglases wird bevorzugt mittels eines UV/VIS Spektralphotometers, bevorzugt mit dem Messgerät LAMBDA 950 UV/Vis/NIR Spectrophotometer (Firma Perkin Elmer Inc.), bestimmt.

Das wenigstens eine Dünnstglas weist bevorzugt einen Brechungsindex aus einem Bereich von n = 1,490 bis n = 1,950, weiter bevorzugt aus einem Bereich von n = 1,501 bis n = 1,799, besonders bevorzugt aus einem Bereich von n = 1,510 bis n = 1,755 und ganz besonders bevorzugt aus einem Bereich von n = 1,521 bis n= 1,747 auf, wobei der Brechungsindex für die Wellenlänge der Natrium-D-Linie angeben ist. Der Brechungsindex des wenigstens einen Dünnstglases ist bevorzugt an die jeweils direkt angrenzende Beschichtung angepasst. An den jeweiligen Grenzflächen Dünnstglas/ Beschichtung oder Dünnstglas/ Klebemittel oder Dünnstglas/ polymeres Material ist der Brechungsindexunterschied jeweils bevorzugt kleiner als 0,3, weiter bevorzugt kleiner als 0,1, weiter bevorzugt kleiner als 0,05, besonders bevorzugt kleiner als 0,03 und ganz besonders bevorzugt kleiner als 0,01, sofern das polymere Material einen einheitlichen Brechungsindex aufweist. Sofern das polymere Material eine ortsabhängige Brechungsindexverteilung aufweist, unterscheidet sich der mittlere Brechungsindex des polymeren Materials an den jeweiligen Grenzflächen Beschichtung/ polymeres Material oder Klebemittel/ polymeres Material oder Dünnstglas/ polymeres Material bevorzugt um nicht mehr als 0,3, besonders bevorzugt um nicht mehr als 0,1 und ganz besonders bevorzugt um nicht mehr als 0,05. Bevorzugt weisen das wenigstens eine Dünnstglas, das polymere Material mit einheitlichem Brechungsindex, das oder die optional verwendete(n) Klebemittel sowie sämtliche Beschichtungen, ausgenommen der Entspiegelungsschicht, insbesondere einer mehrschichtigen Entspiegelungsschicht, einer mehrschichtigen Verspiegelungsschicht und der nanostrukturierten und/oder mikrostrukturierten Schicht, den gleichen Brechungsindex auf. Hierbei wird unter gleichem Brechungsindex ein Brechungsindexunterschied aus einem Bereich von 0,005 bis 0,015 toleriert. Der Brechungsindex wird vorzugsweise refraktometrisch an den jeweiligen Bestandteilen des Brillenglases separat bestimmt. Als Messgerät kann beispielsweise das Gerät Anton Paar Abbemat MW (Firma Anton Paar GmbH) eingesetzt werden.

Das wenigstens eine Dünnstglas weist bevorzugt eine Abbezahl aus einem Bereich von 20 bis 85, weiter bevorzugt aus einem Bereich von 23 bis 74, besonders bevorzugt aus einem Bereich von 29 bis 66 und ganz besonders bevorzugt aus einem Bereich von 33 bis 61 auf. Bevorzugt weisen das wenigstens eine Dünnstglas, das polymere Material mit einheitlichem Brechungsindex, das oder die optional verwendete(n) Klebemittel sowie sämtliche vorhandenen Beschichtungen ausgenommen der Entspiegelungsschicht, insbesondere einer mehrschichtigen Entspiegelungsschicht, einer mehrschichtigen Verspiegelungsschicht und der nanostrukturierten und/oder mikrostrukturierten Schicht, die gleiche Abbezahl auf. Unter gleicher Abbezahl wird ein Unterschied der Abbezahl aus einem Bereich von 0,1 bis 5, bevorzugt aus einem Bereich von 0,1 bis 2,1 toleriert. Je höher der Brechungsindex sämtlicher Bestandteile des Brillenglases ist, desto größere Unterschiede der Abbezahl werden toleriert. Bevorzugt weist das wenigstens eine Dünnstglas sowie das polymere Material jeweils bei einem gegebenen Brechungsindex n bzw. bei einem gegebenen mittleren Brechungsindex eine möglichst hohe Abbezahl auf.

Das wenigstens eine Dünnstglas kann eine Transformationstemperatur T_{G} aus einem Bereich von 421°C bis 781°C, bevorzugt aus einem Bereich von 501°C bis 766°C, sowie für den Temperaturbereich von 20°C bis 300°C jeweils einen Ausdehnungskoeffizienten aus einem Bereich von 2,9·10⁻⁶K⁻¹ bis 8,3·10⁻⁶K⁻¹, bevorzugt aus einem Bereich von 3,1·10⁻⁶K⁻¹ bis 7,3·10⁻⁶K⁻¹, aufweisen.

Das wenigstens eine Dünnstglas kann eine mittlere Dicke aus einem Bereich von 17 µm bis 190 µm, bevorzugt aus einem Bereich von 24 µm bis 166 µm, sowie eine Transformationstemperatur T_{G} aus einem Bereich von 510°C bis 730°C, bevorzugt aus einem Bereich von 555°C bis 721°C, aufweisen. Dünnstgläser sind beispielsweise kommerziell erhältlich unter den Bezeichnungen D 263® T eco, D 263® LA eco, D 263® M, AF 32® eco, SCHOTT AS 87 eco, B 270® i, jeweils Fa. Schott AG, Corning Willow Glass oder Corning Gorilla Glass, jeweils Fa. Corning Inc.

Das wenigstens eine Dünnstglas kann mit unterschiedlichen Formgebungen, beispielsweise plan oder in einer bestimmten Form vorliegen. Im Zusammenhang mit der Form des wenigstens einen Dünnstglases wird unter "plan" verstanden, dass das wenigstens eine Dünnstglas keine makroskopisch sichtbare Biegung oder Krümmung aufweist. Weist das wenigstens eine Dünnstglas eine nicht plane Oberfläche auf, kann eine gewünschte Oberflächentopographie, beispielsweise sphärisch, torisch, asphärisch, atorisch oder progressiv durch Verformen eines planen Dünnstglases auf einer entsprechenden Negativform erreicht werden. Beispielsweise kann das wenigstens eine Dünnstglas in Form einer sphärischen Linse mit einem bestimmten Krümmungsradius ausgestaltet sein. Zur Umformung eines planen Dünnstglases kann dieses zunächst, bevorzugt in Form eines Kreises, beispielsweise mittels eines Lasers, ausgeschnitten werden. Im Randbereich kann dieser ausgeschnittene Dünnstglaskreis anschließend abgeflammt werden, um eventuell entstandene Mikrorisse zu versiegeln. Um möglichst wenig Dünnstglasverschnitt zu erzeugen, wird der Ausschnitt des Dünnstglases so ausgewählt, dass nach dem Zusammenfügen des wenigstens einen Dünnstglases mit wenigstens einer Oberfläche des polymeren Materials möglichst wenig, bevorzugt kein überstehendes Dünnstglas, entfernt werden muss. Das ausgeschnittene Dünnstglas kann beispielsweise auf eine zur Umformung geeignete Formschale gelegt, gegebenenfalls mittels einer Halterung befestigt, und vorzugsweise zusammen mit der Formschale, gegebenenfalls zusammen mit der Halterung, bis zur Transformationstemperatur T_{G} der Glaskomposition oder bis zu einer Temperatur, welche vorzugsweise maximal 20°C über der Transformationstemperatur T_{G} der Glaskomposition liegt, erwärmt werden. Die Formschale kann beispielsweise konvex oder konkav ausgeformt sein. Beispielsweise wird das ausgeschnittene Dünnstglas mit Hilfe eines zur Formschale passenden Gegenstücks in diese hinein gedrückt oder der Dünnstglasausschnitt wird unter Anlegen von Vakuum und/oder einfach mittels Schwerkraft in die Formschale geformt. Bevorzugt ist eine Umformung des Dünnstglases unter Anlegen von Vakuum in eine Formschale. Das umgeformte Dünnstglas wird vorzugsweise komplett in oder über der Formschale abkühlen gelassen, bevor es von der Formschale getrennt wird. Die Umformung eines vorzugsweise planen Ausschnitts eines Dünnstglases erfolgt vorzugsweise in einer Schutzgasatmosphäre. Die Formschale kann hierbei als Negativform der bei der Umformung zu erzielenden Vorderfläche oder Rückfläche des Dünnstglases ausgestaltet sein. Beispielsweise kann die Formschale sphärisch, asphärisch, asphärisch rotationssymmetrisch, torisch, atorisch, als symmetrische Freiformfläche oder unsymmetrische Freiformfläche ausgeformt sein. Alternativ kann das Dünnstglas in nicht zugeschnittener Form, vorzugsweise planer Form, mit Hilfe eines Thermoformprozesses umgeformt werden.

Der Krümmungsradius des wenigstens einen Dünnstglases liegt bevorzugt in einem Bereich von 10 mm bis unendlich, bevorzugt in einem Bereich von 20 mm bis 1600 mm, weiter bevorzugt in einem Bereich von 35 mm bis 1535 mm, weiter bevorzugt in einem Bereich von 56 mm bis 600 mm, besonders bevorzugt in einem Bereich von 66 mm bis 481 mm und ganz besonders bevorzugt in einem Bereich von 75 mm bis 376 mm. Ein Krümmungsradius des wenigstens einen Dünnstglases von unendlich entspricht hierbei einer planen Oberfläche. Bei nicht sphärischen Oberflächen des wenigstens einen Dünnstglases beziehen sich die vorstehend angegebenen Krümmungsradien jeweils auf eine angenäherte sphärische Form.

Die zur Umformung einsetzbare Formschale umfasst vorzugsweise ein Material, welches sich spanend bearbeiten lässt, keine Strukturen im umgeformten Dünnstglas hervorruft und darüber hinaus mit dem Dünnstglas keine untrennbare Verbindung eingeht. Die Formschale kann beispielsweise aus Graphit, einer Metall(legierung) oder einer Keramik, wie beispielsweise in WO 2006/050891 A2 beschrieben, bestehen. Die Formschale kann weiterhin oberflächenmodifiziert sein, so dass eine Anhaftung des Dünnstglases weiter minimiert wird.

Das wenigstens eine Dünnstglas kann auf der jeweils dem polymeren Material abgewandten Oberfläche mit wenigstens einer nanostrukturierten und/oder mikrostrukturierten Schicht, wenigstens einer Entspiegelungsschicht und/oder mit wenigstens einer Clean-Coat-Schicht belegt sein. Objektseitig ist die dem polymeren Material abgewandte Oberfläche des wenigstens einen Dünnstglases dessen Vorderfläche, augenseitig dessen Rückfläche. Bevorzugt umfasst das wenigstens eine Dünnstglas auf der jeweils dem polymeren Material abgewandten Oberfläche wenigstens eine nanostrukturierte und/oder mikrostrukturierte Schicht, wenigstens eine Entspiegelungsschicht und wenigstens eine Clean-Coat-Schicht, wobei die Clean-Coat-Schicht bevorzugt die am weitesten vom Substrat entfernte Schicht darstellt. Ganz besonders bevorzugt umfasst das wenigstens eine Dünnstglas wenigstens eine nanostrukturierte und/oder mikrostrukturierte Schicht. Die Beschichtung der jeweils dem polymeren Material abgewandten Oberfläche des wenigstens einen Dünnstglases kann jeweils mittels eines PVD-Verfahrens, eines Tauchbeschichtungsverfahrens und/oder eines Schleuderbeschichtungsverfahrens erfolgen. Die anschließende Aushärtung der im Tauchbeschichtungsverfahren und/oder Schleuderbeschichtungsverfahren erhaltenen Beschichtung kann entweder thermisch oder strahlungshärtend erfolgen. Bevorzugt erfolgt die Aushärtung dieser Beschichtung strahlungshärtend.

Ein Brillenglas kann im Alltagsgebrauch der Brille durch Mikrokratzer beschädigt werden. Diese Mikrokratzer können in der Regel ungefähr 300 nm bis ungefähr 5000 nm tief und/oder ungefähr 1 µm bis ungefähr 150 µm breit in eine der Oberflächen eines Brillenglases, d.h. in dessen Beschichtung und/oder in dessen Substrat, eindringen. Die Beschichtung eines Brillenglases kann eine Schicht oder mehrere Schichten in einer Schichtenfolge umfassen. Durch im Alltagsgebrauch der Brille unvermeidbaren Kontakt des Brillenglases beispielsweise mit Feuchtigkeit, Verunreinigungen, in Schweiß oder Hautfetten enthaltenen Fettsäuren oder pH-sauren Komponenten, können diese Mikrokratzer innerhalb der kompletten Schichtenfolge der Beschichtung in Richtung Substrat und/oder innerhalb wenigstens einer der Schichten der Beschichtung und/oder im Substrat des Brillenglases vergrößert werden. Durch das Eindringen von beispielsweise pH sauren Substanzen, Feuchtigkeit oder Wasser kann es in einem durch Mikrokratzer beschädigten Brillenglas zu einer Quellung wenigstens einer der Schichten der Beschichtung und/oder des Substrats kommen. Diese Quellung kann jeweils irreversibel sein. Auch die durch eine Quellung hervorgerufenen Beschädigungen eines Brillenglases können irreversibel sein. Eine Quellung wenigstens einer der Schichten der Beschichtung verursacht in der Regel auch eine Erhebung oder ein Aufwerfen oder eine Aufwölbung derjenigen Schicht, welche auf derselben Oberfläche des Substrats und in Bezug auf die wenigstens eine Schicht mit Quellung substratabgewandt benachbart in der Schichtenfolge der Beschichtung des Brillenglases angeordnet ist. Eine Quellung des Substrats verursacht in der Regel auch eine Erhebung oder ein Aufwerfen oder eine Aufwölbung derjenigen Schicht, welche auf derselben Oberfläche des Substrats, auf welcher die Quellung vorliegt, substratabgewandt angrenzend an das Substrat in der Schichtenfolge des Brillenglases angeordnet ist. Eine Erhebung oder ein Aufwerfen oder eine Aufwölbung einer an die Schicht mit Quellung benachbarten Schicht oder einer an das Substrat mit Quellung angrenzenden Schicht hat wiederum zur Folge, dass sich alle angrenzenden substratabgewandten Schichten der Schichtenfolge erheben oder aufwerfen oder aufwölben können. Ein Brillenglas, in welchem wenigstens eine Schicht und/oder das Substrat eine Quellung aufweist, wirkt an genau dieser Stelle wie eine Mikrolinse oder eine Lupe, was von einem Brillenträger als störend empfunden werden kann. Darüber hinaus kann eine Quellung wenigstens einer Schicht der Beschichtung und/oder des Substrats bewirken, dass sich die Beschichtung des Brillenglases ausgehend von derjenigen Stelle, an welcher sich ursprünglich der Mikrokratzer befunden hat, komplett vom Substrat ablöst und/oder dass sich einzelne Schichten in der Schichtenfolge der Beschichtung voneinander trennen. Eine Quellung der Beschichtung und/oder des Substrats tritt insbesondere dann zum Vorschein, wenn die Beschichtung des Brillenglases und/oder wenigstens eine der Schichten in der Schichtenfolge der Beschichtung eine so hohe Wasserbarriere aufweist, dass eine durch Mikrokratzer verursachte Wasseraufnahme im Substrat größer ist als die Wasserfreigabe aus dem Substrat durch die Beschichtung hindurch an die Luftatmosphäre. Bedingt durch Mikrokratzer in der Beschichtung kommt es zu einer lokalen Wasseraufnahme im Substrat, wobei das Wasser über die Zeit in Abhängigkeit von der Wasseraufnahmefähigkeit des Substratmaterials im Substrat verteilt wird. An der Stelle des jeweiligen Mikrokratzers kommt es zu einer lokalen Quellung des Substrats. Diese lokale Quellung kann sich durch eine Verteilung des aufgenommenen Wassers im Substrat zu einer Quellung eines Teils der Oberfläche des Substrats, einer Quellung der gesamten Oberfläche des Substrats oder einer Quellung des gesamten Substrats ausweiten. Eine lokale Quellung des Substrats wiederum kann eine Erhebung oder ein Aufwerfen oder eine Aufwölbung einer daran angrenzenden Schicht verursachen, was sich wiederum durch die komplette Schichtenfolge der Beschichtung fortsetzen und letztendlich zu einer Trennung der Schichten der Schichtenfolge oder zu einer kompletten Ablösung der Beschichtung vom Substrat jeweils angrenzend an den jeweiligen Mikrokratzer führen kann. Eine Quellung eines Teils der Oberfläche des Substrats, eine Quellung der gesamten Oberfläche des Substrats oder eine Quellung des gesamten Substrats kann beispielsweise ausgehend von dem Mikrokratzer zu Rissbildung der Beschichtung, zu einer Trennung der Schichten der Schichtenfolge oder zu einer kompletten Ablösung der Beschichtung vom Substrat führen. Eine lokale Quellung wenigstens einer Schicht in der Beschichtung kann für die weiteren substratabgewandten Schichten die gleichen Folgen wie vorstehend für die lokale Quellung des Substrats beschrieben aufweisen. Durch eine Verteilung des aufgenommenen Wassers in wenigstens einer Schicht kann es außerdem zu einer Quellung eines Teils der Oberfläche der wenigstens einen Schicht, einer Quellung der gesamten Oberfläche der wenigstens einen Schicht oder einer Quellung der gesamten wenigstens einen Schicht kommen. Auch in diesem Fall kann es ausgehend von der wenigstens einen Schicht zu Rissbildungen oder einer Ablösung oder Auftrennung der Schichten in der Beschichtung kommen. Weist die Beschichtung des Brillenglases nun eine so hohe Wasserbarriere auf, dass das Substrat das auf diese Weise aufgenommene Wasser durch veränderte Umgebungsbedingungen nicht abgeben kann, kann die Quellung des Substrats auch zu einer Erhebung oder einem Aufwerfen oder einer Aufwölbung der an das Substrat angrenzenden Schicht führen. Diese Erhebung oder dieses Aufwerfen oder diese Aufwölbung der angrenzenden Schicht wiederum kann sich substratabgewandt durch die komplette Schichtenfolge fortsetzen und letztendlich zu einem Aufbrechen der Beschichtung des Brillenglases führen. Ein Aufbrechen der Beschichtung kann, wie vorstehend in Bezug auf einen Mikrokratzer beschrieben, angrenzend an diejenige Stelle, an der die Beschichtung aufgebrochen ist, letztendlich zur einer kompletten Ablösung der Beschichtung vom Substrat oder zu einer Auftrennung einzelner Schichten in der Schichtenfolge führen.

Eine hohe Wasserbarriere wenigstens einer Schicht bewirkt, dass diese wenigstens eine Schicht wenig oder keine Wasserdurchlässigkeit aufweist. Weist die wenigstens eine Schicht wenig oder keine Wasserdurchlässigkeit auf, kann vom Substratmaterial aufgenommenes Wasser nicht oder nicht in ausreichender Menge durch diese wenigstens eine Schicht an die Luftatmosphäre abgegeben werden. Im Unterschied hierzu bewirkt eine niedrige Wasserbarriere der Beschichtung eines Brillenglases, dass sich diese Beschichtung genauso oder annähernd genauso verhält als wäre sie nicht auf dem Substrat vorhanden. Verhält sich die Beschichtung eines Brillenglases genauso oder annähernd genauso als wäre sie nicht auf dem Substrat vorhanden, verursachen Mikrokratzer dieses Brillenglases nicht ein Abplatzen der kompletten Beschichtung oder eine Auftrennung einzelner Schichten in der Schichtenfolge, wie vorstehend im Zusammenhang mit Mikrokratzern einer Beschichtung mit hoher Wasserbarriere beschrieben. Die Wasserbarriere der Beschichtung eines Brillenglases wird bevorzugt analog zu dem in DE 195 19 975 C1, weiter bevorzugt analog zu dem in DE 195 19 975 C1, Anspruch 1, beschriebenen Verfahren bestimmt. Hierzu wird das beschichtete Brillenglas zusammen mit einem identischen unbeschichteten Substrat solange einer Atmosphäre mit konstanter erhöhter Temperatur und konstantem erhöhtem Feuchtigkeitsgehalt ausgesetzt, bis die Änderung des Wassergehalts einen konstanten oder annähernd konstanten Gleichgewichtswert erreicht hat. Bevorzugt wird das beschichtete Brillenglas zusammen mit dem unbeschichteten Substrat vorab bei 23°C und 50% relativer Luftfeuchtigkeit gemäß EP 2 801 846 A1, insbesondere gemäß EP 2 801 846 A1, Anspruch 1, gelagert, bis die Änderung des Wassergehalts einen konstanten oder annähernd konstanten Gleichgewichtswert erreicht hat. Unter konstanter erhöhter Temperatur wird bevorzugt eine konstante Temperatur aus einem Bereich von 30°C bis 50°C, besonders bevorzugt aus einem Bereich von 36°C bis 46°C, verstanden. Unter konstantem Feuchtigkeitsgehalt wird bevorzugt ein konstanter Feuchtigkeitsgehalt aus einem Bereich von 86% bis 97% relativer Luftfeuchtigkeit, weiter bevorzugt aus einem Bereich von 90% bis 96% relativer Luftfeuchtigkeit, verstanden. Unter einem annähernd konstanten Gleichgewichtswert wird die Änderung des Wassergehalts eines Brillenglases verstanden, welche bevorzugt 90% des zu erreichenden Gleichgewichtswerts entspricht. Der annähernd konstante Gleichgewichtswert wird bevorzugt nach wenigstens 143 Stunden, weiter bevorzugt nach wenigstens 151 Stunden, besonders bevorzugt nach wenigstens 160 Stunden und ganz besonders bevorzugt nach wenigstens 168 Stunden bestimmt. Die Änderung des Wassergehalts wird bevorzugt mittels Nah-Infrarot-Spektroskopie bestimmt. Die Änderung des Wassergehalts wird im Wesentlichen über die Änderung des Wassergehalts des Substrats bestimmt, während der Wassergehalt der Beschichtung vernachlässigbar ist. Aus der Änderung des Wassergehalts des Brillenglases über die Zeit kann die Geschwindigkeit der Veränderung des Wassergehalts des Substrats bestimmt werden. Da die Geschwindigkeit der Wasseraufnahme des Substrats wiederum von der Wasserdurchlässigkeit der Beschichtung abhängt, ist die Geschwindigkeit der Wasseraufnahme des Substrats ein Maß für die Wasserdurchlässigkeit der Beschichtung. Eine Schicht oder eine Beschichtung mit hoher Wasserbarriere ist eine Schicht oder eine Beschichtung, welche bewirkt, dass der konstante oder annähernd konstante Gleichgewichtswert, in einer Atmosphäre mit konstanter erhöhter Temperatur und konstantem erhöhtem Feuchtigkeitsgehalt wenigstens um mehr als 10 Stunden später erreicht wird als von dem unbeschichteten Substrat unter identischen Bedingungen.

Weist wenigstens eine der Schichten in der Schichtenfolge der Beschichtung eines Brillenglases eine so hohe Wasserbarriere auf, dass es beim Auftreten von wenigstens einem Mikrokratzer in der Beschichtung und/oder im Substrat des Brillenglases zu vorstehend beschriebenem Quellungsverhalten kommen kann, wird erfindungsgemäß vorgeschlagen, diese wenigstens eine Schicht als nanostrukturierte und/oder mikrostrukturierte Schicht auszugestalten. Eine Entspiegelungsschicht oder eine Verspiegelungsschicht, welche jeweils auch eine Schichtenfolge von mehreren Schichten umfassen kann, wird nachstehend unabhängig von der Anzahl der Schichten in der Schichtenfolge als eine Entspiegelungsschicht oder als eine Verspiegelungsschicht bezeichnet. Durch die Ausgestaltung der wenigstens einen Schicht mit hoher Wasserbarriere als nanostrukturierte und/oder mikrostrukturierte Schicht wird nun diese wenigstens eine Schicht unterbrochen. Somit kann im Substrat aufgenommenes Wasser nicht nur an der Stelle des jeweiligen Mikrokratzers durch diesen hindurch an die Luftatmosphäre gelangen, sondern gleichzeitig auch durch die Unterbrechungen dieser wenigstens einen Schicht. Umfasst die Beschichtung eines Brillenglases mehrere Schichten mit hoher Wasserbarriere, ist bevorzugt jede dieser Schichten nanostrukturiert und/oder mikrostrukturiert ausgestaltet und jede dieser Schichten umfasst bevorzugt Unterbrechungen. Alternativ können auch alle Schichten in der Schichtenfolge der Beschichtung nanostrukturiert und/oder mikrostrukturiert ausgestaltet sein und somit Unterbrechungen umfassen. Die Strukturierung oder die Unterbrechung wenigstens einer Schicht muss also nicht nur die wenigstens eine Schicht mit hoher Wasserbarriere umfassen. Die Unterbrechungen der wenigstens einen Schicht entstehen dadurch, dass bei Aufbringung dieser wenigstens einen Schicht die zu beschichtende Oberfläche an derjenigen Stelle, an welcher sich nach Beendigung der Aufbringung der wenigstens einen Schicht eine Unterbrechung befindet, maskiert ist. Diese Maskierung der zu beschichtenden Oberfläche gelingt bevorzugt mit wenigstens einem Nanopartikel und/oder wenigstens einem Mikropartikel, besonders bevorzugt mit wenigstens einer Lage von Nanopartikeln und/oder Mikropartikeln. Nach Aufbringung der wenigstens einen Schicht mit hoher Wasserbarriere, welche sowohl auf der zu beschichtenden Oberfläche als auch auf dem wenigstens einen Nanopartikel und/oder wenigstens einen Mikropartikel, bevorzugt der wenigstens einen Lage von Nanopartikeln und/oder Mikropartikeln, vorliegt, deren anschließender Trocknung und/oder Aushärtung, wird der wenigstens eine Nanopartikel und/oder wenigstens eine Mikropartikel, bevorzugt die Nanopartikel und/oder Mikropartikel der wenigstens einen Lage, entfernt. Auf diese Weise bleibt an derjenigen Stelle, an der der wenigstens eine Nanopartikel und/oder der wenigstens eine Mikropartikel die zu beschichtete Oberfläche berührt hat, die zu beschichtende Oberfläche unbeschichtet zurück und die wenigstens eine Schicht mit hoher Wasserbarriere ist an genau dieser Stelle unterbrochen. Die mittlere Dicke der zu beschichtenden Oberfläche beträgt bevorzugt nicht mehr als 75% der mittleren Partikelgröße der zur Maskierung eingesetzten Nanopartikel und/oder Mikropartikel. Somit ist gewährleistet, dass sich die Nanopartikel und/oder Mikropartikel leicht aus der wenigstens einen aufgebrachten Schicht entfernbar sind.

Die Strukturierung oder Unterbrechung wenigstens einer Schicht mit hoher Wasserbarriere bewirkt, dass das Erreichen des annähernd konstanten Gleichgewichtswerts eines Brillenglases, welches wenigstens eine nanostrukturierte und/oder mikrostrukturierte Schicht umfasst, in einer Atmosphäre mit konstanter erhöhter Temperatur und konstantem erhöhtem Feuchtigkeitsgehalt bevorzugt weniger als 10 Stunden, weiter bevorzugt weniger als 8 Stunden, weiter bevorzugt weniger als 5 Stunden, besonders bevorzugt weniger als 3 Stunden und ganz besonders bevorzugt weniger als 2 Stunden länger ist als das Erreichen des annähernd konstanten Gleichgewichtswerts eines identischen, aber unbeschichteten Substrats unter identischen Bedingungen. Die konstante erhöhte Temperatur wird hierbei bevorzugt aus einem Bereich von 30°C bis 50°C, besonders bevorzugt aus einem Bereich von 33°C bis 46°C, ausgewählt. Der konstante erhöhte Feuchtigkeitsgehalt wird bevorzugt aus einem Bereich von 86% bis 97% relativer Luftfeuchtigkeit, weiter bevorzugt aus einem Bereich von 90% bis 96% relativer Luftfeuchtigkeit, ausgewählt. Vorab wird bevorzugt das mit wenigstens einer nanostrukturierten und/oder mikrostrukturierten Schicht beschichtete Brillenglas zusammen mit dem unbeschichteten Substrat bei 23°C und 50% relativer Luftfeuchtigkeit gemäß EP 2 801 846 A1, insbesondere gemäß EP 2 801 846 A1, Anspruch 1, gelagert, bis die Änderung des Wassergehalts einen konstanten oder annähernd konstanten Gleichgewichtswert erreicht hat. Der annähernd konstante Gleichgewichtswert entspricht in Bezug auf die Wasseraufnahmefähigkeit und die Wasserabgabefähigkeit eines Brillenglases 90% des zu erreichenden Gleichgewichtswerts.

Besonders bevorzugt wird die zu beschichtende Oberfläche vor Aufbringung der wenigstens einen Schicht mit hoher Wasserbarriere mit wenigstens einer Monolage von Nanopartikeln und/oder Mikropartikeln oder mit wenigstens einer Doppelschicht von Nanopartikeln und/oder Mikropartikeln maskiert, ganz besonders bevorzugt mit wenigstens einer Monolage von Nanopartikeln und/oder Mikropartikeln. Bei der zu beschichtenden Oberfläche kann es sich um die komplette zu beschichtende Oberfläche oder nur einen Teilbereich der zu beschichtenden Oberfläche handeln. Soll nur ein Teilbereich einer zu beschichtenden Oberfläche wenigstens eine nanostrukturierte und/oder mikrostrukturierte Schicht umfassen, wird derjenige Teilbereich der Oberfläche, welcher keine nanostrukturierte und/oder mikrostrukturierte Schicht umfassen soll, beispielweise abgeschirmt oder abgedeckt oder abgeklebt. Bei der zu beschichtenden Oberfläche kann es sich um eine optisch fertig bearbeitete Fläche eines Brillenglas-Halbfertigprodukts, um wenigstens eine der optisch fertig bearbeiteten Flächen eines fertigen Brillenglases oder um die Vorderfläche oder die Rückfläche eines Dünnstglases handeln. Die zu beschichtende Oberfläche kann bereits wenigstens eine Schicht umfassen.

Unter einer Monolage von Nanopartikeln und/oder Mikropartikeln ist deren nebeneinander Anordnung auf der zu beschichtenden Oberfläche zu verstehen. In einer Monolage von Nanopartikeln und/oder Mikropartikeln liegen diese aneinander angrenzend und/oder benachbart auf der zu beschichtenden Oberfläche vor. In einer Monolage von Nanopartikeln und/oder Mikropartikeln können sich die Nanopartikel und/oder Mikropartikel berühren, aber sie überlappen nicht. In einer Monolage von Nanopartikeln und/oder Mikropartikeln liegen bevorzugt wenigstens 50%, weiter bevorzugt wenigstens 60%, besonders bevorzugt wenigstens 70% und ganz besonders bevorzugt wenigstens 80% der Nanopartikel und/oder Mikropartikel auf der jeweils zu beschichtenden Oberfläche vor. In einer Monolage von Nanopartikeln und/oder Mikropartikeln kann zwischen benachbart aufgebrachten Nanopartikeln und/oder Mikropartikeln, welche sich nicht berühren, ein Teil der zu beschichtenden Oberfläche nicht mit aneinander angrenzenden Nanopartikeln und/oder Mikropartikeln belegt sein. Die vorstehend genannten Zahlenwerte beziehen sich auf die jeweils zu beschichtende Oberfläche. Sie berücksichtigen beispielsweise nicht die komplette zu beschichtende Vorderfläche oder die komplette zu beschichtende Rückfläche eines Brillenglases, wenn die Vorderfläche oder die Rückfläche nur teilweise, z.B. zur Hälfte, mit wenigstens eines nanostrukturierten und/oder mikrostrukturierten Schicht versehen werden soll.

In einer Monolage von Nanopartikeln und/oder Mikropartikeln liegen bevorzugt weniger als 10% der aufgebrachten Nanopartikel und/oder Mikropartikel, weiter bevorzugt weniger als 0,1 % der aufgebrachten Nanopartikel und/oder Mikropartikel, besonders bevorzugt weniger als 0,001% der aufgebrachten Nanopartikel und/oder Mikropartikel und ganz besonders bevorzugt weniger als 0,00001% der aufgebrachten Nanopartikel und/oder Mikropartikel, jeweils bezogen auf die gesamte zu beschichtende Oberfläche nicht auf der zu beschichtenden Oberfläche vor. In diesem Fall können die aufgebrachten Nanopartikel und/oder Mikropartikel, welche nicht auf der zu beschichtenden Oberfläche vorliegen, über wenigstens einem Nanopartikel und/oder Mikropartikel, welcher bereits auf der zu beschichtenden Oberfläche vorliegt, angeordnet sein.

Unter einer Doppelschicht von Nanopartikeln und/oder Mikropartikeln sind zwei übereinander angeordnete Monolagen zu verstehen, wobei eine der Monolagen auf der zu beschichtenden Oberfläche und die andere Monolage daran angrenzend und/oder benachbart, aber von der zu beschichtenden Oberfläche abgewandt oder entgegengesetzt zu dieser vorliegt. Die Nanopartikel und/oder Mikropartikel der beiden Monolagen liegen in der Doppelschicht aneinander angrenzend und/oder benachbart vor. Die Nanopartikel und/oder Mikropartikel können sich in der Doppelschicht berühren, aber nicht überlappen. Die Nanopartikel und/oder Mikropartikel der beiden übereinander angeordneten Monolagen können direkt übereinander und/oder versetzt zueinander in der Doppelschicht angeordnet sein. Bevorzugt sind die Nanopartikel und/oder Mikropartikel versetzt zueinander in der Doppelschicht angeordnet. Die versetzte Anordnung ist bevorzugt die dichtest mögliche oder kompakteste Anordnung, in welcher die Nanopartikel und/oder Mikropartikel aneinander angrenzend angeordnet sein können. In einer Doppelschicht von Nanopartikeln und/oder Mikropartikeln liegen bevorzugt weniger als 0,1% der Nanopartikel und/oder Mikropartikel, weiter bevorzugt weniger als 0,01% der Nanopartikel und/oder Mikropartikel, besonders bevorzugt weniger als 0,001% und ganz besonders bevorzugt weniger als 0,0001% der Nanopartikel und/oder Mikropartikel, jeweils bezogen auf die gesamte zu beschichtende Oberfläche aufzubringenden Nanopartikel und/oder Mikropartikel nicht in der Doppelschicht bzw. nicht als Doppelschicht vor. Nicht in der bzw. nicht als Doppelschicht vorliegende Nanopartikel und/oder Mikropartikel können beispielsweise in einer Monolage auf der zu beschichtenden Oberfläche oder auf denjenigen Nanopartikeln und/oder Mikropartikeln der Doppelschicht vorliegen, welche in der Doppelschicht nicht an die zu beschichtende Oberfläche angrenzen.

Um die wenigstens eine Schicht mit hoher Wasserbarriere in der Beschichtung eines Brillenglases in eine nanostrukturierte und/oder mikrostrukturierte Schicht zu überführen, können die Nanopartikel und/oder Mikropartikel in beliebiger Form oder in Mischung verschiedener Formen vorliegen. Die Nanopartikel und/oder Mikropartikel können bevorzugt kugelförmig, annähernd kugelförmig, stäbchenförmig oder oval geformt sein oder eine Mischform aus vorstehend genannten Formen einnehmen. Annähernd kugelförmige Nanopartikel und/oder Mikropartikel weisen bevorzugt einen volumenäquivalenten Kugeldurchmesser zu einem kugelförmigen Nanopartikel und/oder Mikropartikel auf. Die in einer Monolage oder einer Doppelschicht vorliegenden Nanopartikel und/oder Mikropartikel sind bevorzugt annähernd kugelförmig oder stäbchenförmig. In einer Monolage oder einer Doppelschicht vorhandene Nanopartikel und/oder Mikropartikel können in Bezug auf ihre Form auch als eine Mischung von kugelförmigen und annähernd kugelförmigen Nanopartikeln und/oder Mikropartikeln vorliegenden.

Um die wenigstens eine Schicht mit hoher Wasserbarriere in der Beschichtung eines Brillenglases in eine nanostrukturierte und/oder mikrostrukturierte Schicht zu überführen, können die Nanopartikel und/oder Mikropartikel basierend auf unterschiedlichen Materialien vorliegen. Die Nanopartikel und/oder Mikropartikel können hierbei auch auf einer Mischung aus wenigstens zwei unterschiedlichen Materialien basieren. Die Nanopartikel und/oder Mikropartikel basieren bevorzugt auf wenigstens einem polymeren Material, wenigstens einem Metall und/oder wenigstens einem Metalloxid, Metallhydroxid und/oder Metalloxidhydrat, besonders bevorzugt auf einem polymeren Material. Das wenigstens eine polymere Material umfasst bevorzugt Polyethylen, Polypropylen, Polystyrol und/oder Polymethylmethacrylat, besonders bevorzugt Polystyrol. Die Nanopartikel und/oder Mikropartikel basierend auf wenigstens einem polymeren Material können beispielsweise auch als Mischung von Nanopartikeln und/oder Mikropartikeln basierend auf Polystyrol und von Nanopartikeln und/oder Mikropartikeln basierend auf Polyethylen vorliegen. Auf wenigstens einem Metall basierende Nanopartikel und/oder Mikropartikel können beispielsweise auf Gold, Silber, Kupfer und/oder Aluminium basierende Nanopartikel und/oder Mikropartikel umfassen. Auf wenigstens einem Metalloxid, Metallhydroxid und/oder Metalloxidhydrat basierende Nanopartikel und/oder Mikropartikel können beispielsweise auf einem Metalloxid, Metallhydroxid und/oder Metalloxidhydrat aus oder mit Titan, aus oder mit Eisen, aus oder mit Silizium und/oder aus oder mit Mangan basierende Nanopartikel und/oder Mikropartikel umfassen. Die Nanopartikel und/oder Mikropartikel können beispielsweise mit einer Amino- und/oder einer Carboxylatgruppe funktionalisiert oder oberflächenmodifiziert sein. Damit beispielsweise stäbchenförmige Nanopartikel und/oder Mikropartikel in ihrer längsten Ausdehnung abgewandt von der zu beschichtenden Oberfläche vorliegen, kann es erforderlich sein, die zu beschichtende Oberfläche ebenfalls zu funktionalisieren oder zu modifizieren.

Um die wenigstens eine Schicht mit hoher Wasserbarriere in der Beschichtung eines Brillenglases in eine nanostrukturierte und/oder mikrostrukturierte Schicht zu überführen, können die kugelförmigen oder annähernd kugelförmigen Nanopartikel und/oder Mikropartikel in einer mittleren Partikelgröße aus Bereich von 3 nm bis 450 nm vorliegen. Die Nanopartikel und/oder Mikropartikel können als Mischung von Nanopartikeln und/oder Mikropartikeln unterschiedlicher mittlerer Partikelgröße vorliegen. Die Nanopartikel und/oder Mikropartikel liegen hierbei bevorzugt in einer mittleren Partikelgröße aus einem Bereich 1 von 3 nm bis ≤ 50 nm, weiter bevorzugt aus einem Bereich von 5 nm bis 40 nm, besonders bevorzugt aus einem Bereich von 7 nm bis 35 nm, ganz besonders bevorzugt aus einem Bereich von 9 nm bis 30 nm vor. Die Nanopartikel und/oder Mikropartikel liegen ebenfalls bevorzugt in einer mittleren Partikelgröße aus einem Bereich 2 von 50 nm bis 450 nm, weiter bevorzugt aus einem Bereich von 55 nm bis 360 nm, besonders bevorzugt aus einem Bereich von 60 nm bis 290 nm und ganz besonders bevorzugt aus einem Bereich von 65 nm bis 150 nm vor. Werden Nanopartikel und/oder Mikropartikel einer mittleren Partikelgröße beispielsweise aus vorstehend beschriebenem Bereich 2 zur Ausbildung wenigstens einer nanostrukturierten und/oder mikrostrukturierten Schicht A eingesetzt, kann diese dann erhaltene wenigstens eine nanostrukturierte und/oder mikrostrukturierte Schicht A wiederum als zu beschichtende Oberfläche zur Ausbildung einer nanostrukturierten und/oder mikrostrukturierten Schicht B dienen. Zur Ausbildung der nanostrukturierten und/oder mikrostrukturierten Schicht B werden dann bevorzugt die Nanopartikel und/oder Mikropartikel einer mittleren Partikelgröße aus dem vorstehend genannten Bereich 1 eingesetzt. Die nanostrukturierte und/oder mikrostrukturierte Schicht A kann alternativ auch als zu beschichtenden Oberfläche zur Ausbildung wenigstens einer nanostrukturierten und/oder mikrostrukturierten Schicht B' dienen, indem Nanopartikel und/oder Mikropartikel einer mittleren Partikelgröße aus dem vorstehend genannten Bereich 2 zur Maskierung der zu beschichtenden Oberfläche Verwendung finden. Entsprechend können auch Nanopartikel und/oder Mikropartikel aus vorstehend genanntem Bereich 1 zur Ausbildung wenigstens einer nanostrukturierten und/oder mikrostrukturierten Schicht C dienen. Diese nanostrukturierte und/oder mikrostrukturierte Schicht C wiederum kann als zu beschichtende Oberfläche wenigstens einer nanostrukturierten und/oder mikrostrukturierten Schicht C' unter Verwendung von Nanopartikeln und/oder Mikropartikeln einer mittleren Partikelgröße aus vorstehend genanntem Bereich 1 dienen. Optional kann die jeweilige nanostrukturierte und/oder mikrostrukturierte Schicht, welche als zu beschichtende Oberfläche eingesetzt werden soll, vor Belegung mit wenigstens einem Nanopartikel und/oder wenigstens einem Mikropartikel mit wenigstens einer Schicht versehen werden. Weiter optional kann die Beschichtung eines Brillenglases, welche die bereits vorstehend beschriebenen wenigstens zwei nanostrukturierten und/oder mikrostrukturierten Schichten umfasst, wenigstens eine weitere nanostrukturierte und/oder mikrostrukturierte Schicht umfassen.

Soll die Beschichtung eines Brillenglases wenigstens zwei nanostrukturierte und/oder mikrostrukturierte Schichten umfassen können diese, wie vorstehend beschrieben, unter Verwendung von Nanopartikeln und/oder Mikropartikel der gleichen Form, der gleichen oder einer voneinander verschiedenen mittleren Partikelgröße gebildet werden. Soll die Beschichtung eines Brillenglases wenigstens zwei nanostrukturierte und/oder mikrostrukturierte Schichten umfassen können diese alternativ auch unter Verwendung von Nanopartikeln und/oder Mikropartikeln gebildet werden, welche für jede der wenigstens zwei auszubildenden nanostrukturierten und/oder mikrostrukturierten Schichten eine voneinander verschiedene Form und/oder eine unterschiedliche Partikelgröße aufweisen.

Um die wenigstens eine Schicht mit hoher Wasserbarriere in der Beschichtung eines Brillenglases in eine nanostrukturierte und/oder mikrostrukturierte Schicht zu überführen, können die ovalen oder stäbchenförmigen Nanopartikel und/oder Mikropartikel bevorzugt mit einer Länge aus einem Bereich von 100 nm bis 1 µm und einer Breite aus einem Bereich von 15 nm bis 300 nm, weiter bevorzugt mit einer Länge aus einem Bereich von 120 nm bis 960 nm und einer Breite aus einem Bereich von 10 nm bis 250 nm, besonders bevorzugt mit einer Länge aus einem Bereich von 160 nm bis 790 nm und einer Breite aus einem Bereich von 7 nm bis 150 nm, ganz besonders bevorzugt mit einer Länge aus einem Bereich von 50 nm bis 600 nm und einer Breite aus einem Bereich von 5 nm bis 50 nm vorliegen. Bei ovalen Nanopartikeln und/oder Mikropartikeln beziehen die vorstehenden Angaben in Bezug auf die Breite auf die Stelle mit der zweitgrößten Ausdehnung nach deren Länge.
Um die wenigstens eine Schicht mit hoher Wasserbarriere in der Beschichtung eines Brillenglases in eine nanostrukturierte und/oder mikrostrukturierte Schicht zu überführen, können bei einer weiteren Ausführungsform der Erfindung die Nanopartikel und/oder Mikropartikel einer einzigen Monolage oder einer einzigen Doppelschicht jeweils eine unterschiedliche Form und/oder eine unterschiedliche mittlere Partikelgröße aufweisen.

Wird zur Überführung wenigstens einer Schicht mit hoher Wasserbarriere in eine nanostrukturierte und/oder mikrostrukturierte Schicht eine Monolage aneinander angrenzender Nanopartikel und/oder Mikropartikel verwendet, weist die mit wenigstens einer Schicht zu beschichtende Oberfläche an genau den Stellen, an denen die Nanopartikel und/oder Mikropartikel zu liegen kommen, Unterbrechungen auf. Die Unterbrechungen dieser wenigstens einen Schicht befinden sich im Fall von kugelförmigen oder annähernd kugelförmigen Nanopartikeln und/oder Mikropartikeln bevorzugt in einem Abstand, welcher dem Durchmesser der zur Maskierung der zu beschichtenden Oberfläche eingesetzten kugelförmigen Nanopartikel und/oder Mikropartikel oder dem volumenäquivalenten Kugeldurchmesser der annähernd kugelförmigen Nanopartikel und/oder Mikropartikel entspricht. Im Fall von zur Maskierung eingesetzten stäbchenförmigen Nanopartikeln und/oder Mikropartikeln entspricht der Abstand der hierdurch in der wenigstens einen Schicht hervorgerufenen Unterbrechungen bevorzugt deren Breite. Im Fall von zur Maskierung eingesetzten ovalen Nanopartikeln und/oder Mikropartikeln entspricht der Abstand der hierdurch in der wenigstens einen Schicht hervorgerufenen Unterbrechungen bevorzugt deren Breite, d.h. an deren zweitgrößten Ausdehnung nach deren Höhe.

Bei einer weiteren Ausfuhrungsform der Erfindung kann die wenigstens eine nanostrukturierte und/oder mikrostrukturierte Schicht in Bezug auf ihre Unterbrechung individuell an die Wasseraufnahmefähigkeit des Substrats angepasst werden. Eine Anpassung der Unterbrechungen der nanostrukturierten und/oder mikrostrukturierten Schicht kann beispielsweise erfordern, dass sich mehr Nanopartikel und/oder Mikropartikel in der Mitte der zu beschichtenden Oberfläche, beispielsweise in einem Radius von wenigstens 1 cm vom geometrischen Mittelpunkt auf einer Oberfläche eines Brillenglases, als am Rand der zu beschichtenden Oberfläche des Brillenglases befinden. Der geometrische Mittelpunkt des Brillenglases ist gemäß DIN EN ISO 13666:2013-10, Absatz 5.5, definiert als Schnittpunkt der horizontalen und vertikalen Mittellinie des rechteckigen Kastens, der die Form des Brillenglas-Halbfertigprodukts oder des ungerandeten Brillenglases umschreibt. Mehr Nanopartikel und/oder mehr Mikropartikel in der Mitte der zu beschichtenden Oberfläche bedeuten gleichzeitig mehr Unterbrechungen in der auf die zu beschichtende Oberfläche aufzubringenden Schicht in der Mitte. Mehr Nanopartikel und/oder mehr Mikropartikel in der Mitte der zu beschichtenden Oberfläche lassen sich beispielsweise dadurch erreichen, dass die Nanopartikel und/oder Mikropartikel mittels eines Schleuderbeschichtungsverfahrens auf die zu beschichtende Oberfläche aufgebracht werden. Mehr Nanopartikel und/oder mehr Mikropartikel in der Mitte einer zu beschichtenden Oberfläche und somit mehr Unterbrechungen der wenigstens einen aufzubringenden Schicht und weniger Nanopartikel und/oder Mikropartikel am Rand einer zu beschichtenden Oberfläche und somit weniger Unterbrechungen der wenigstens einen aufzubringenden Schicht, können beispielsweise dann gewünscht sein, wenn die Wasserabgabe von im Substrat aufgenommenem Wasser über die zwischen der Vorderfläche und der Rückfläche des Brillenglases liegende Randfläche annähernd ausreichend ist, um eine Quellung des Substrat und/oder der Beschichtung zu vermeiden. Um auf jeden Fall eine Quellung des Substrats und/oder der Beschichtung zu vermeiden, sind wenige Unterbrechungen der aufzubringenden Schicht am Rand der zu beschichtenden Oberfläche des Brillenglases ausreichend. Wenn dagegen in der Mitte der zu beschichtenden Oberfläche des Brillenglases die Wasserbarriere der aufzubringenden Schicht zu hoch ist, um im Substrat aufgenommenes Wasser in ausreichender Menge und/oder in ausreichender Geschwindigkeit an die Luftatmosphäre abgeben zu können, sind dort mehr Unterbrechungen der aufzubringenden Schicht notwendig, um eine Quellung des Substrats und/oder der Beschichtung zu vermeiden.

Eine weitere Möglichkeit in der Anpassung der Unterbrechungen der wenigstens einen aufzubringenden Schicht besteht darin, dass größere Nanopartikel und/oder Mikropartikel in der Mitte einer zu beschichtenden Oberfläche, beispielsweise in einem Radius von 1 cm um den geometrischen Mittelpunkt auf einer Oberfläche des Brillenglases, und kleinere Nanopartikel und/oder Mikropartikel am Rand einer zu beschichtenden Oberfläche eines Brillenglases angeordnet werden. Die Aufbringung von Nanopartikeln und/oder Mikropartikeln mit zwei unterschiedlichen mittleren Partikelgrößen kann beispielsweise in einem Schleuderbeschichtungsverfahren mittels zwei unterschiedlichen Auftragungsvorrichtungen erfolgen. Eine dieser Auftragungsvorrichtungen umfasst hierbei die Nanopartikel und/oder Mikropartikel in der mittleren Partikelgröße, welche für die Mitte der zu beschichtenden Oberfläche vorgesehen sind. Die andere der Auftragungsvorrichtungen umfasst entsprechend die Nanopartikel und/oder Mikropartikel in der mittleren Partikelgröße, welche für den Rand der zu beschichtenden Oberfläche vorgesehen sind. Die entsprechenden Auftragungseinrichtungen sind dann bevorzugt über der Mitte und über dem Rand der zu beschichtenden Oberfläche positioniert. Größere Nanopartikel und/oder Mikropartikel verursachen größere Unterbrechungen in der aufzubringenden Schicht und können somit äquivalent zu einer Vielzahl kleinerer Nanopartikel und/oder Mikropartikel sein. In Bezug auf eine aufzubringende Schicht mit Wasserbarriere bedeutet dies, dass die Wasserabgabe vom im Substrat aufgenommenen Wasser anstelle durch eine Vielzahl kleiner Unterbrechungen dann durch wenige größere Unterbrechungen erfolgt.

Alternativ kann die individuelle Anpassung der wenigstens einen nanostrukturierten und/oder mikrostrukturierten Schicht in Bezug auf deren Unterbrechungen auch umfassen, dass die mittlere Partikelgröße der in einer Monolage aufgebrachten Nanopartikel und/oder Mikropartikel verkleinert werden kann, nachdem diese auf die zu beschichtende Oberfläche aufgebracht wurden. Die verwendeten Nanopartikel und/oder Mikropartikel basieren hierbei bevorzugt auf einem polymeren Material. Die Verkleinerung der Nanopartikel und/oder Mikropartikel erfolgt bevorzugt unter Eintrag hochfrequenter Energie in Gegenwart von Sauerstoff, Ozon, Tetrafluormethan und/oder Trifluormethan. Da die Nanopartikel und/oder Mikropartikel nach ihrer Aufbringung auf die zu beschichtende Oberfläche bevorzugt ortsfest sind und ihre einmal auf der zu beschichtenden Oberfläche eingenommene Position nicht mehr verändern, wird durch eine Verkleinerung der Nanopartikel und/oder Mikropartikel weniger der zu beschichtenden Oberfläche durch diese maskiert. Somit wird die wenigstens eine aufzubringende Schicht an weniger Stellen unterbrochen. Weniger Unterbrechungen der aufzubringenden Schicht bedeuten gleichzeitig weniger Störstellen in der aufzubringenden Schicht und somit beispielsweise weniger mögliche Streuzentren der Schicht. Während des Verkleinerungsvorgangs können diejenigen Nanopartikel und/oder Mikropartikel der Monolage, welche nicht verkleinert werden sollen, komplett abgeschirmt werden. Durch die komplette Abschirmung bildet sich von den nicht zu verkleinernden Nanopartikeln und/oder Mikropartikel zu den zu verkleinernden Nanopartikel und/oder Mikropartikeln hin ein Gradient in Bezug auf deren mittlere Partikelgröße aus. Je weiter ein Nanopartikel und/oder Mikropartikel von der Abschirmung entfernt auf der zu beschichtenden Oberfläche angeordnet ist, desto größer ist die Verkleinerung. Während des Verkleinerungsprozesses können des Weiteren Nanopartikel und/oder Mikropartikel durch geeignet ausgewählte Bedingungen im Hinblick auf den Eintrag hochfrequenter Energie in Gegenwart von Sauerstoff, Ozon, Tetrafluormethan und/oder Trifluormethan komplett entfernt werden. Durch eine komplette Entfernung von Nanopartikeln und/oder Mikropartikeln aus einer Monolage beispielsweise im Randbereich einer zu beschichtenden Oberfläche können dann mehr Nanopartikel und/oder Mikropartikel in der Mitte einer zu beschichtenden Oberfläche angeordnet sein und dort zu mehr Unterbrechungen der wenigstens einen aufzubringenden Schicht führen, wie bereits vorstehend beschrieben. Die komplette Entfernung von Nanopartikeln und/oder Mikropartikeln durch den Eintrag hochfrequenter Energie in Gegenwart von Sauerstoff, Ozon, Tetrafluormethan und/oder Trifluormethan kann sich beispielsweise dann zunutze gemacht werden, wenn die Lage von Nanopartikeln und/oder Mikropartikeln mittels eines Tauchbeschichtungsprozesses auf die zu beschichtende Oberfläche aufgebracht wurde.

Eine gezielte Unterbrechung der wenigstens einen Schicht mit Wasserbarriere kann auch umfassen, dass, wenn sich mehr Nanopartikel und/oder Mikropartikel in der Mitte der zu beschichtenden Oberfläche, beispielsweise in einem Radius von 1 cm vom geometrischen Mittelpunkt auf einer Oberfläche eines Brillenglases, als am Rand der zu beschichtenden Oberfläche des Brillenglases befinden sollen, diese Nanopartikel und/oder Mikropartikel alternativ auch die gleiche mittlere Partikelgröße aufweisen und/oder auf dem gleichen polymeren Material basieren können. Hierzu werden die Nanopartikel und/oder Mikropartikel bevorzugt mittels Schleuderbeschichtung auf die zu beschichtende Oberfläche aufgebracht und während des Verkleinerungsprozesses mittels einer geeigneten Maske abgeschirmt.

Bei einer weiteren Ausführungsform können die Nanopartikel und/oder Mikropartikel alternativ mittels eines Inkjet-Verfahrens in einer vorab definierten mittleren Partikelgröße, in einer vorab definierten Verteilung an eine vorab definierte Position direkt auf die zu beschichtende Oberfläche aufgebracht werden. Alternativ können die Nanopartikel und/oder Mikropartikel bevorzugt mittels eines Inkjet-Verfahrens in einer vorab definierten mittleren Partikelgröße, in einer vorab definierten Verteilung und in einer vorab definierten Position auf einem Substrat aufgebracht werden und von dort auf die zu beschichtende Oberfläche transferiert werden. Optional können die dann jeweils auf der zu beschichtenden Oberfläche vorliegenden Nanopartikel und/oder Mikropartikel beispielsweise unter Einwirkung von hochfrequenter Energie in Gegenwart von Sauerstoff, Ozon, Tetrafluormethan und/oder Trifluormethan verkleinert werden.

Die sich nach dem Entfernen der Nanopartikel und/oder Mikropartikel ausgebildete wenigstens eine nanostrukturierte und/oder mikrostrukturierte Schicht kann eine regelmäßige oder unregelmäßige Zwischenraumstruktur aufweisen. Die Zwischenraumstruktur bildet sich auf der mit wenigstens einem Nanopartikel und/oder wenigstens einem Mikropartikel belegten zu beschichtenden Oberfläche aus, nachdem der wenigstens eine Nanopartikel und/oder der wenigstens eine Mikropartikel aus der wenigstens einen aufgebrachten Schicht entfernt wurden. Um unerwünschte diffraktive Eigenschaften der wenigstens einen nanostrukturierten und/oder mikrostrukturierten Schicht zu vermeiden, kann es vorteilhaft sein, wenn die ausgebildete Zwischenraumstruktur unregelmäßig oder aperiodisch ist. Ist die Zwischenraumstruktur der wenigstens einen nanostrukturierten und/oder mikrostrukturierten Schicht jedoch klein genug, d.h. unterhalb der Größenordnung der Lichtwellenlänge, kann diese Zwischenraumstruktur auch regelmäßig sein. Mit klein genug der Zwischenraumstruktur ist gemeint, dass die Höhe und die benachbarte Anordnung der einzelnen Strukturelemente der Zwischenraumstruktur unterhalb der Größenordnung der Lichtwellenlänge liegt und somit keinen signifikanten Beitrag zu diffraktiven Eigenschaften der nanostrukturierten und/oder mikrostrukturierten Schicht leisten. Wird ein isoliertes Strukturelement dieser Zwischenraumstruktur betrachtet, welches eine Größenordnung unterhalb der Lichtwellenlänge aufweist, beeinflusst dieses isolierte Strukturelement die Lichtausbreitung nicht. Ist der Abstand zwischen den einzelnen Strukturelementen sowie deren Höhe in wenigstens einer nanostrukturierten und/oder mikrostrukturierten Schicht kleiner als die Lichtwellenlänge, wird das einfallende Licht weder von den einzelnen Strukturelementen noch von allen Strukturelementen der wenigstens einen nanostrukturierten und/oder mikrostrukturierten Schicht beeinflusst. Insbesondere die Transmission oder die Reflexion der wenigstens einen nanostrukturierten und/oder mikrostrukturierten Schicht wird in diesem Fall bevorzugt nicht beeinflusst.

Bevorzugt weist die wenigstens eine nanostrukturierte und/oder mikrostrukturierte Schicht eine regelmäßige Zwischenraumstruktur auf.

Umfasst die wenigstens eine nanostrukturierte und/oder mikrostrukturierte Schicht eine regelmäßige Zwischenraumstruktur, welche durch Maskierung oder Belegung der zu beschichtenden Oberfläche mit einer Monolage aus kugelförmigen Nanopartikeln und/oder Mikropartikeln hervorgerufen wurde, folgt der Abstand a der einzelnen Strukturelemente dieser regelmäßigen Zwischenraumstruktur bevorzugt der Gleichung a = 0.15·r, wobei r der Radius der Nanopartikel und/oder Mikropartikel ist. Die sich zwischen kugelförmigen Nanopartikeln und/oder Mikropartikeln ausbildende Zwischenraumstruktur erinnert in einer seitlichen rasterelektronenmikroskopischen Querschliffaufnahme an ein Dreieck, dessen Seiten bedingt durch die Krümmung der zu beschichtenden Oberfläche und die Abschattung der zu beschichtenden Oberfläche durch die kugelförmigen Nanopartikel und/oder Mikropartikel jeweils keine Geraden sind. Die sich zwischen kugelförmigen Nanopartikeln und/oder Mikropartikeln ausbildende Zwischenraumstruktur erinnert in der Aufsicht einer rasterelektronenmikroskopischen Querschliffaufnahme an ein Dreieck, dessen Seiten bedingt durch die kugelförmigen Nanopartikel und/oder Mikropartikel jeweils keine Geraden sind. Der Abstand a ist derjenige Abstand, d.h. die kürzeste Verbindungslinie, zwischen einer Seite dieses Dreiecks und der gegenüberliegenden Spitze.
Umfasst die wenigstens eine nanostrukturierte und/oder mikrostrukturierte Schicht eine unregelmäßige Zwischenraumstruktur, welche durch Maskierung oder Belegung der zu beschichtenden Oberfläche mit einer Monolage aus kugelförmigen Nanopartikeln und/oder Mikropartikeln hervorgerufen wurde, folgt der Abstand s der einzelnen Strukturelemente dieser unregelmäßigen Zwischenraumstruktur bevorzugt der Gleichung s = 0.75·r, wobei r der Radius der Nanopartikel und/oder Mikropartikel ist. Der Abstand s ist derjenige Abstand, d.h. die kürzeste Verbindungslinie, zwischen einem Nanopartikel und/oder Mikropartikel und dem Berührungspunkt von zwei benachbarten Nanopartikeln und/oder Mikropartikeln, welche an ersteren Nanopartikel und/oder Mikropartikel nicht direkt angrenzen.

Die zu beschichtende Oberfläche umfasst bevorzugt mit wenigstens einer Hartlackschicht, wenigstens einer Entspiegelungsschicht und optional wenigstens einer Clean-Coat-Schicht oder optional wenigstens einer Antibeschlagsschicht, welche nachstehend näher beschrieben werden. Hierbei ist die wenigstens eine Hartlackschicht die der zu beschichtenden Oberfläche nächstliegende Schicht und die optionale wenigstens eine Clean-Coat-Schicht oder die wenigstens eine Antibeschlagsschicht die auf derselben zu beschichtenden Oberfläche am weitesten entfernt von der zu beschichtenden Oberfläche entfernt liegende Schicht. Umfasst oder ist wenigstens eine dieser Schichten eine Schicht mit hoher Wasserbarriere kann, wird bevorzugt diese wenigstens eine Schicht in eine nanostrukturierte und/oder mikrostrukturierte Schicht überführt. Handelt es sich bei der wenigstens einen Schicht um die wenigstens eine Entspiegelungsschicht, wird bevorzugt nur diese wenigstens eine Entspiegelungsschicht in eine nanostrukturierte und/oder mikrostrukturierte Schicht überführt. Die substratnähere Hartlackschicht wird in diesem Fall somit bevorzugt nicht als nanostrukturierte und/oder mikrostrukturierte Schicht, d.h. ohne Unterbrechungen, ausgebildet. Die substratfernere optionale Clean-Coat-Schicht oder die substratfernere optionale Antibeschlagsschicht werden in diesem Fall bevorzugt auf die bereits nanostrukturierte und/oder mikrostruktuierte Entspiegelungsschicht aufgebracht. Alternativ kann die optionale Clean-Coat-Schicht oder die optionale Antibeschlagsschicht zusammen mit der wenigstens einen Entspiegelungsschicht nanostrukturiert und/oder mikrostrukturiert werden. Weiter bevorzugt kann die wenigstens eine Entspiegelungsschicht partiell in eine nanostrukturierte und/oder mikrostrukturierte Schicht überführt werden. Dies kann insbesondere dann bevorzugt sein, wenn innerhalb einer mehrschichtigen Entspiegelungsschicht wenigstens eine dieser Schichten eine hohe Wasserbarriere umfasst. Auch innerhalb der Schichten einer Entspiegelungsschicht kann nur die wenigstens eine Schicht mit hoher Wasserbarriere in eine nanostrukturierte und/oder mikrostrukturierte Schicht überführt werden. Alternativ können alle auf die wenigstens eine Schicht der Entspiegelungsschicht mit hoher Wasserbarriere substratabgewandt folgenden Schichten der mehrschichtigen Entspiegelungsschicht und der optionalen Clean-Coat-Schicht oder der optionalen Antibeschlagsschicht zusammen mit der wenigstens einen Schicht mit hoher Wasserbarriere nanostrukturiert und/oder mikrostrukturiert werden. Bei einer weiteren Ausführungsform in Bezug auf eine Beschichtung umfassend wenigstens eine Hartlackschicht, wenigstens eine Entspiegelungsschicht, optional wenigstens eine Clean-Coat-Schicht oder wenigstens eine Antibeschlagsschicht kann auch die komplette Beschichtung unabhängig davon, bei welcher Schicht es sich um diejenige mit hoher Wasserbarriere handelt, nanostrukturiert und/oder mikrostrukturiert vorliegen.

Werden zur Maskierung einer zu beschichtenden Oberfläche kugelförmige Nanopartikel und/oder Mikropartikel oder annähernd kugelförmige Nanopartikel und/oder Mikropartikel eingesetzt, beträgt die mittlere Schichtdicke der wenigstens einen aufzubringenden Schicht jeweils bevorzugt 75% des Kugeldurchmessers. Im Fall von stäbchenförmigen oder ovalen Nanopartikeln und/oder Mikropartikeln beträgt die mittlere Schichtdicke der wenigstens einen aufzubringenden Schicht jeweils bevorzugt 75% von deren Höhe. Auf diese Weise ist gewährleistet, dass die Nanopartikel und/oder Mikropartikel leicht aus der wenigstens einen aufgebrachten Schicht entfernbar sind. Übersteigt die mittlere Schichtdicke der wenigstens einen aufzubringenden Schicht 75% des Kugeldurchmessers bzw. der Höhe der jeweiligen Nanopartikel und/oder Mikropartikel können diese dennoch aus der wenigstens einen aufgebrachten Schicht entfernt werden, wenn diese zuvor beispielsweise mit einer Lauge und/oder mit Plasma behandelt wurde.

Bei einer weiteren Ausführungsform kann es sich bei der zu beschichtende Oberfläche um eine Hartlackschicht handeln, welche sich auf einer optisch fertig bearbeiteten Oberfläche des Brillenglas-Halbfertigprodukts oder auf einer der optisch fertig bearbeiteten Oberflächen des fertigen, gegebenenfalls ungerandeten Brillenglases, befindet. Wird diese Hartlackschicht nun mit einer Monolage von Nanopartikeln und/oder Mikropartikeln belegt und die so belegte Oberfläche einer Atmosphäre von beispielsweise Tetrafluormethan ausgesetzt, hat dies zum einen den Effekt, dass die Nanopartikel und/oder Mikropartikel verkleinert werden, zum anderen, dass die Hartlackschicht angeätzt wird und an derjenigen Position, an der ein Nanopartikel und/oder ein Mikropartikel auf der Hartlackschicht angeordnet ist, eine Vertiefung in der Hartlackschicht ausgebildet wird. Ist diese Vertiefung in der Hartlackschicht so groß, dass sie im Wellenlängenbereich des sichtbaren Lichts liegt, kann nach Entfernen der Nanopartikel und/oder Mikropartikel aus den jeweiligen Vertiefungen, auf das Aufbringen einer Entspiegelungsschicht verzichtet werden. Optional kann die so erhaltene strukturierte Hartlackschicht mit wenigstens einer Clean-Coat-Schicht oder mit wenigstens einer Antibeschlagsschicht beschichtet werden. Ist diese Vertiefung in der Hartlackschicht so klein, dass sie unterhalb der Wellenlängen des sichtbaren Lichts liegt, kann auf die strukturierte Hartlackschicht wenigstens eine Entspiegelungsschicht und optional wenigstens eine Clean-Coat-Schicht oder eine Antibeschlagsschicht aufgebracht werden. In diesem Fall kann die Entspiegelungsschicht zusätzlich eine polarisierende Wirkung entfalten. Bevorzugt ist die Strukturierung der Hartlackschicht in beiden vorstehend beschriebenen Fällen regelmäßig.

Erfindungsgemäß umfasst das zu beschichtende Substrat wenigstens eine nanostrukturierte und/oder mikrostrukturierte Schicht. Die wenigstens eine nanostrukturierte und/oder mikrostrukturierte Schicht kann auf wenigstens einer optisch fertig bearbeiteten Fläche des Brillenglas-Halbfertigprodukts oder des fertigen Brillenglases oder auf einer zu beschichtenden Oberfläche eines Dünnstglases oder auf wenigstens einer auf dem Substrat vorhandenen Beschichtung vorliegen. Die nanostrukturierte und/oder mikrostrukturierte Schicht bildet auf der zu beschichtenden Oberfläche eine strukturierte Oberfläche aus. Die strukturierte Oberfläche kann hierbei eine regelmäßige oder eine unregelmäßige Struktur umfassen. Die strukturierte Oberfläche wird bevorzugt mittels einer Maskierung der jeweils zu beschichtenden Oberfläche erzielt. Zur Maskierung der zu beschichtenden Oberfläche wird bevorzugt wenigstens eine Lage von Nanopartikeln und/oder Mikropartikeln verwendet. Bei der wenigstens einen Lage von Nanopartikeln und/oder Mikropartikeln handelt es sich bevorzugt um eine Doppelschicht oder um eine Monolage von Nanopartikeln und/oder Mikropartikeln, besonders bevorzugt um eine Monolage von Nanopartikeln und/oder Mikropartikeln. In einer Monolage von Nanopartikeln und/oder Mikropartikeln liegen die Nanopartikel und/oder Mikropartikel benachbart und/oder aneinander angrenzend auf der zu beschichtenden Oberfläche vor. In einer Monolage von Nanopartikeln und/oder Mikropartikeln liegen die Nanopartikel und/oder Mikropartikel nebeneinander, aber nicht überlappend auf der zu beschichtenden Oberfläche vor. Eine Doppelschicht von Nanopartikeln und/oder Mikropartikeln umfasst zwei übereinander angeordnete Monolagen von Nanopartikeln und/oder Mikropartikeln, welche bevorzugt versetzt zueinander übereinander angeordnet sind. Durch die versetzte Anordnung der Nanopartikel und/oder Mikropartikel in einer Doppelschicht wird bevorzugt deren dichtest mögliche oder kompakteste Anordnung erreicht. In Bezug auf die nicht innerhalb einer Monolage oder nicht innerhalb einer Doppelschicht vorliegenden Nanopartikel und/oder Mikropartikel wird auf vorstehend genannte Bereiche verwiesen. Insbesondere ist es bevorzugt wenigstens eine Monolage sich selbst organisierender Nanopartikel und/oder Mikropartikel auf der jeweils zu beschichtenden Oberfläche zu immobilisieren. Diese wenigstens eine Lage von Nanopartikeln und/oder Mikropartikeln wird anschließend mit wenigstens einer Schicht beschichtet. Hierbei bedeckt ein Teil dieser wenigstens einen Schicht die Nanopartikel und/oder Mikropartikel der wenigstens einen Lage und ein Teil dieser wenigstens einen Schicht gelangt auf die jeweils zu beschichtende Oberfläche. Die mit wenigstens einer Schicht beschichteten Nanopartikel und/oder Mikropartikel werden anschließend entfernt. Auf diese Weise bleibt eine nanostrukturierte und/oder mikrostrukturierte Oberfläche auf der jeweils zu beschichtenden Oberfläche zurück. Diese zurückbleibende nanostrukturierte und/oder mikrostrukturierte Oberfläche wird auch als nanostrukturierte und/oder mikrostrukturierte Schicht oder strukturierte Oberfläche oder strukturierte Schicht bezeichnet. Die nanostrukturierte und/oder mikrostrukturierte Schicht entsteht also bevorzugt dadurch, dass auf eine zu beschichtende Oberfläche an derjenigen Stelle, an der ein Nanopartikel und/oder Mikropartikel auf der zu beschichtenden Oberfläche immobilisiert ist, und an derjenigen Stelle der zu beschichtenden Oberfläche, welche durch den immobilisierten Nanopartikel und/oder Mikropartikel maskiert und/oder abgeschattet ist, keine weitere Schicht aufgebracht werden kann. Bei der zu beschichtenden Oberfläche kann es sich um wenigstens eine optisch fertig bearbeitete Fläche des Substrats oder um wenigstens eine Oberfläche einer auf dem Substrat vorliegenden Beschichtung oder um die zu beschichtende Oberfläche eines Dünnstglases oder um die zu beschichtende Oberfläche eines beschichteten Dünnstglases handeln. Bevorzugt ist zur Herstellung der nanostrukturierten und/oder mikrostrukturierten Schicht derjenige Teil der zu beschichtenden Oberfläche, welcher eine nanostrukturierte und/oder mikrostrukturierte Schicht umfassen soll, mit immobilisierten Nanopartikeln und/oder Mikropartikeln maskiert. Diese mit immobilisierten Nanopartikeln und/oder Mikropartikeln maskierte, zu beschichtende Oberfläche wird bevorzugt mit wenigstens einer Schicht belegt und die immobilisierten, mit wenigstens einer Schicht belegten, Nanopartikel und/oder Mikropartikel werden anschließend entfernt. Nach Entfernung der Nanopartikel und/oder Mikropartikel wird eine nanostrukturierte und/oder mikrostrukturierte Schicht erhalten, welche die zu beschichtende Oberfläche bedingt durch die zur Maskierung und/oder Abschattung eingesetzten Nanopartikel und/oder Mikropartikel, insbesondere deren Form und deren Partikelgröße, bevorzugt deren mittlere Partikelgröße, nicht durchgehend bzw. nicht vollständig belegt. Nicht durchgehend bzw. nicht vollständig belegt bezieht sich in diesem Zusammenhang nur auf die durch die Maskierung und/oder Abschattung entstandenen Lücken oder Freiräume oder Unterbrechungen der nanostrukturierten und/oder mikrostrukturierten Schicht, nicht auf die Belegung der zu beschichtenden Oberfläche mit der wenigstens einen nanostrukturierten und/oder mikrostrukturierten Schicht. Durch die Lücken oder Freiräume oder Unterbrechungen der nanostrukturierten und/oder mikrostrukturierten Schicht kann bevorzugt mittels einer lichtmikroskopischen Aufnahme oder mittels einer rasterelektronenmikroskopischen Aufnahme die zu beschichtende Oberfläche erkannt werden. Die nanostrukturierte und/oder mikrostrukturierte Schicht kann über die komplette zu beschichtende Oberfläche oder nur einen Teilbereich derselben angeordnet sein. Bei der zu beschichtenden Oberfläche, welche wenigstens eine nanostrukturierte und/oder mikrostrukturierte Schicht umfassen soll, kann es sich beispielsweise um die komplette Vorderfläche und/oder um die komplette Rückfläche eines Brillenglases handeln. Bei der zu beschichtenden Oberfläche, welche wenigstens eine nanostrukturierte und/oder mikrostrukturierte Schicht umfassen soll, kann es sich beispielsweise auch nur um einen Teil der Vorderfläche und/oder der Rückfläche eines Brillenglases handeln. Bei dem Teil der Vorderfläche und/oder der Rückfläche kann es sich beispielsweise um die jeweilige obere Hälfte handeln, während die jeweilige untere Hälfte der Vorderfläche und/oder der Rückfläche des Brillenglases beispielsweise durch geeignete Abdeckung oder Abklebung nicht zur Ausbildung wenigstens einer nanostrukturierten und/oder mikrostrukturierten Schicht zur Verfügung steht. Die nanostrukturierte und/oder mikrostrukturierte Schicht kann des Weiteren mit wenigstens einer weiteren Schicht beschichtet werden. Die optional mit wenigstens einer weiteren Schicht beschichtete nanostrukturierte und/oder mikrostrukturierte Schicht kann auch als zu beschichtende Oberfläche zur Ausbildung wenigstens einer weiteren nanostrukturierten und/oder mikrostrukturierten Schicht dienen. Die zur Ausbildung der wenigstens einen weiteren nanostrukturierten und/oder mikrostrukturierten Schicht einsetzbaren Nanopartikel und/oder Mikropartikel können in Bezug auf deren mittlere Partikelgröße und/oder in Bezug auf deren Form jeweils gleich oder verschieden zu den Nanopartikeln und/oder Mikropartikeln sein, welche zur Ausbildung derjenigen nanostrukturierten und/oder mikrostrukturierten Schicht verwendet, welche nun als zu beschichtende Oberfläche dient.

Mit nanostrukturierter und/oder mikrostrukturierter Schicht ist im Rahmen dieser Erfindung eine Schicht gemeint, welche auf einer zu beschichtenden Oberfläche eine Zwischenraumstruktur innerhalb wenigstens einer Lage von Nanopartikeln und/oder Mikropartikeln, ausbildet. Diese Zwischenraumstruktur bildet sich bevorzugt auf der jeweils zu beschichtenden Oberfläche innerhalb einer Doppelschicht oder innerhalb einer Monolage jeweils von Nanopartikeln und/oder Mikropartikeln bevorzugt nur an denjenigen Stellen aus, an denen sich die Nanopartikel und/oder Mikropartikel nicht berühren. Die zu beschichtende Oberfläche kann vollständig oder teilweise mit wenigstens einer Lage von Nanopartikeln und/oder Mikropartikeln belegt sein. Eine vollständige Belegung der zu beschichtenden Oberfläche mit wenigstens einer Lage von Nanopartikeln und/oder Mikropartikeln kann beispielsweise dann vorliegen, wenn die komplette zu beschichtende Vorderfläche und/oder die komplette zu beschichtende Rückfläche eines Brillenglases jeweils zur Ausbildung wenigstens einer nanostrukturierten und/oder mikrostrukturierten Schicht dienen soll. Eine teilweise Belegung mit wenigstens einer Lage von Nanopartikeln und/oder Mikropartikeln kann dagegen beispielsweise dann vorliegen, wenn nur ein Teilbereich der zu beschichtenden Vorderfläche und/oder nur ein Teilbereich der zu beschichtenden Rückfläche eines Brillenglases jeweils zur Ausbildung wenigstens einer nanostrukturierten und/oder mikrostrukturierten Schicht dienen soll. In letzterem Fall kann derjenige Teilbereich der zu beschichtenden Oberfläche, welcher nicht zur Ausbildung wenigstens einer nanostrukturierten und/oder mikrostrukturierten Schicht dienen soll, beispielsweise durch Abklebung und/oder Abdeckung desselben nicht mit wenigstens einer Lage von Nanopartikeln und/oder Mikropartikeln belegt werden. In wenigstens einer Lage von Nanopartikeln und/oder Mikropartikeln können die Nanopartikel und/oder Mikropartikel in einer dichtest möglichen Anordnung oder statistisch verteilt vorliegen. Bevorzugt sind in einer Monolage von Nanopartikeln und/oder Mikropartikeln die einzelnen Nanopartikel und/oder Mikropartikel so angeordnet, dass sie sich nur berühren, aber nicht überlappen. In einer Monolage von Nanopartikeln und/oder Mikropartikeln können diese benachbart und/oder aneinander angrenzend auf der zu beschichtenden Oberfläche vorliegen. Im Fall von kreisförmigen oder kugelförmigen Nanopartikeln und/oder Mikropartikeln ist deren Anordnung in der Monolage bei idealer Anordnung vergleichbar mit einer hexagonal dichtesten Kugelpackung, bei dem jeder kreisförmige oder kugelförmige Nanopartikel und/oder Mikropartikel jeweils von sechs weiteren kreisförmigen Nanopartikeln und/oder Mikropartikeln umringt ist. Dies ist beispielsweise in einer lichtmikroskopischen Aufsicht oder einer rasterelektronenmikroskopischen Aufsicht einer mit einer Monolage aus kreisförmigen oder kugelförmigen Nanopartikel und/oder Mikropartikeln einfach zu erkennen. In diesem Fall berührt jeder kreisförmige Nanopartikel und/oder Mikropartikel an sechs Stellen seine jeweils weiteren kreisförmigen benachbarten Nanopartikel und/oder Mikropartikel nicht. An genau diesen sechs Stellen ist nach Entfernung der Nanopartikel und/oder Mikropartikel dann die nanostrukturierte und/oder mikrostrukturierte Schicht zu finden. Die vorstehend genannten sechs Stellen werden immer in Bezug auf nur einen einzelnen Nanopartikel und/oder Mikropartikel gezählt, ein direkt benachbarter Nanopartikel und/oder Mikropartikel berührt bei dieser Zählweise somit seine jeweils sechs weiteren kreisförmigen benachbarten Nanopartikel und/oder Mikropartikel an sechs Stellen nicht. An den berührungsfreien Stellen zwischen den Nanopartikeln und/oder Mikropartikeln befindet sich wiederum die nanostrukturierte und/oder mikrostrukturierte Schicht, welche eine regelmäßige Struktur auf dem wenigstens einen, mit Nanopartikeln und/oder Mikropartikeln maskierten und/oder abgeschatteten kompletten Bereich oder Teilbereich der zu beschichtenden Oberfläche ausbildet. Bei dem kompletten Bereich der zu beschichtenden Oberfläche kann es sich um die komplette Vorderfläche und/oder die komplette Rückfläche eines Brillenglases handeln. Bei dem Teilbereich der zu beschichtenden Oberfläche kann es sich um einen Teilbereich der Vorderfläche und/oder einen Teilbereich der Rückfläche eines Brillenglases handeln. Dieser Teilbereich der zu beschichtenden Oberfläche kann jeweils als zu beschichtende Oberfläche zur Ausbildung wenigstens einer nanostrukturierten und/oder mikrostrukturierten Schicht dienen. Der jeweils andere Teilbereich der zu beschichtenden Oberfläche, welcher nicht mit wenigstens einer Lage von Nanopartikeln und/oder Mikropartikeln maskiert und/oder abgeschattet wurde, umfasst keine nanostrukturierte und/oder mikrostrukturierte Schicht.
Die wenigstens eine nanostruktuierte und/oder mikrostrukturierte Schicht kann als Zwischenraumstruktur sowohl entlang der zu beschichtenden Oberfläche als auch entlang der Normalen der zu beschichtenden Oberfläche ausgebildet sein. Die wenigstens eine nanostrukturierte und/oder mikrostrukturierte Schicht ist bevorzugt als Zwischenraumstruktur entlang der zu beschichtenden Oberfläche an denjenigen Stellen, an denen sich die Nanopartikel und/oder Mikropartikel nicht berühren, ausgebildet. Die wenigstens eine nanostrukturierte und/oder mikrostrukturierte Schicht ist weiterhin bevorzugt als Zwischenraumstruktur in derjenigen Richtung, welche von der zu beschichtenden Oberfläche abgewandt ist, ausgebildet.

Die wenigstens eine nanostrukturierte und/oder mikrostrukturierte Schicht kann, komplett oder teilweise, als zu beschichtende Oberfläche für die Ausbildung wenigstens einer weiteren nanostrukturierten und/oder mikrostrukturierten Schicht dienen. Die nanostrukturierte und/oder mikrostrukturierte Schicht kann zuvor mit wenigstens einer Schicht beschichtet werden. Zur Ausbildung der wenigstens einen weiteren nanostrukturierten und/oder mikrostrukturierten Schicht kann die wenigstens eine Lage von Nanopartikeln und/oder Mikropartikeln in Bezug auf die Form und/oder die mittlere Partikelgröße der Nanopartikel und/oder Mikropartikel gleich oder verschieden zu der wenigstens einen Lage von Nanopartikeln und/oder Mikropartikeln sein, welche zur Ausbildung der nanostrukturierten und/oder mikrostrukturierten Schicht der zu beschichtenden Oberfläche verwendet wurden.

Die sich ausbildende Zwischenraumstruktur der nanostrukturierten und/oder mikrostrukturierten Schicht ist neben den in der Lage von Nanopartikeln und/oder Mikropartikeln eingesetzten Nanopartikeln und/oder Mikropartikeln, insbesondere deren Form und deren Partikelgröße, bevorzugt deren mittlere Partikelgröße, auch von der Richtung, aus der die wenigstens eine Schicht auf die wenigstens eine Lage von Nanopartikeln und/oder Mikropartikeln aufgebracht wird, abhängig. Bevorzugt wird die wenigstens eine Lage von Nanopartikeln und/oder Mikropartikeln mit wenigstens einer Schicht beschichtet, wobei hierfür ein Beschichtungswinkel von 15° bis 90°, bezogen auf den Mittelpunkt der zu beschichtenden Oberfläche, besonders bevorzugt ist.

Zur Maskierung der zu beschichtenden Oberfläche mit wenigstens einer Lage von Nanopartikeln und/oder Mikropartikeln, bevorzugt mit wenigstens einer Monolage oder wenigstens einer Doppelschicht jeweils von Nanopartikeln und/oder Mikropartikeln, besonders bevorzugt mit wenigstens einer Monolage von Nanopartikeln und/oder Mikropartikeln, können Nanopartikel und/oder Mikropartikel basierend auf unterschiedlichen Materialien und/oder mit unterschiedlicher Form und/oder mit unterschiedlicher Partikelgröße, bevorzugt unterschiedlicher mittlerer Partikelgröße, verwendet werden. Die zur Belegung oder Maskierung der zu beschichtenden Oberfläche mit wenigstens einer Lage von Nanopartikeln und/oder Mikropartikeln einsetzbaren Nanopartikel und/oder Mikropartikel können beispielsweise kugelförmig, oval, vieleckig, dreieckig, viereckig, rechteckig, sechseckig, achteckig, stäbchenförmig, sternförmig und/oder in Form der von dem jeweiligen Nanopartikel und/oder Mikropartikel ausgebildeten Kristallstruktur vorliegen. Bevorzugt werden zur Maskierung der zu beschichtenden Oberfläche mit wenigstens einer Lage von Nanopartikeln und/oder Mikropartikeln kugelförmige, ovale und/oder stäbchenförmige Nanopartikel und/oder Mikropartikel eingesetzt. Besonders bevorzugt werden zur Maskierung der zu beschichtenden Oberfläche mit wenigstens einer Lage von Nanopartikeln und/oder Mikropartikeln kugelförmige Nanopartikel und/oder Mikropartikel eingesetzt.
Als Nanopartikel und/oder Mikropartikel können hierbei Kern-Hülle-Partikel, Janus-Partikel, Trägerpartikel, Nanopartikel und/oder Mikropartikel basierend auf wenigstens einem polymeren Material, Nanopartikel und/oder Mikropartikel basierend auf wenigstens einem Metalloxid, Metallhydroxid und/oder Metalloxidhydrat und/oder Nanopartikel und/oder Mikropartikel basierend auf wenigstens einem Metall eingesetzt werden.

Als Nanopartikel und/oder Mikropartikel basierend auf einer Kern-Hülle-Struktur können beispielsweise Nanopartikel und/oder Mikropartikel mit einem Kern umfassend wenigstens ein Metalloxid, Metallhydroxid und/oder Metalloxidhydrat aus oder mit Titan, bevorzugt TiO₂, und/oder aus oder mit Zirkonium, bevorzugt ZrO₂, und/oder aus oder mit Silizium, bevorzugt SiO₂, und/oder mit einem Kern umfassend wenigstens ein Metall, bevorzugt Gold, und/oder mit einem Kern umfassend wenigstens ein polymeres Material, bevorzugt Polystyrol eingesetzt werden. Die Hülle der Nanopartikel und/oder Mikropartikel mit einer Kern-Hülle-Struktur kann beispielsweise wenigstens ein Metalloxid, Metallhydroxid und/oder Metalloxidhydrat aus oder mit Silizium, bevorzugt SiO₂, und/oder aus oder mit Titan, bevorzugt TiO₂, und/oder wenigstens ein Metall, bevorzugt Kupfer, Silber und/oder Gold, und/oder wenigstens eine ein Farbmittel umfassende Hülle umfassen. Hierbei umfassen der Kern und die Hülle der auf einer Kern-Hülle-Struktur basierenden Nanopartikel und/oder Mikropartikel bevorzugt nicht die identische Zusammensetzung. Eine Ausnahme hiervon liegt beispielsweise für den Fall vor, dass eine Vielzahl kleinerer Nanopartikel als Hülle einen größeren Nanopartikel als Kern oder eine Vielzahl kleinerer Mikropartikel als Hülle einen größeren Mikropartikel als Kern oder eine Vielzahl Nanopartikel als Hülle einen Mikropartikel als Kern umhüllt. Als Nanopartikel und/oder Mikropartikel basierend auf einer Kern-Hülle-Struktur werden bevorzugt Nanopartikel und/oder Mikropartikel mit einem Kern umfassend wenigstens ein Metalloxid, Metallhydroxid und/oder Metalloxidhydrat aus oder mit Silizium, bevorzugt SiO₂, und/oder umfassend ein polymeres Material, bevorzugt Polystyrol, und mit einer Hülle umfassend wenigstens ein Metall, bevorzugt Aluminium, Silber und/oder Gold, verwendet. Die vorstehend erwähnte Hülle umfassend wenigstens ein Metall kann hierbei auch einen einschichtigen oder mehrschichtigen Aufbau umfassen. Beispielsweise kann der Kern zunächst mit einer Aluminiumhülle und anschließend noch mit einer Goldhülle umgeben sein. Weiterhin bevorzugt werden als Nanopartikel und/oder Mikropartikel basierend auf einer Kern-Hülle-Struktur Nanopartikel und/oder Mikropartikel mit einem Kern umfassend wenigstens ein Metalloxid, Metallhydroxid und/oder Metalloxidhydrat aus oder mit Silizium, bevorzugt SiO₂, und/oder umfassend wenigstens ein polymeres Material, bevorzugt Polystyrol, und einer Hülle umfassend wenigstens ein Metalloxid, Metallhydroxid und/oder Metalloxidhydrat aus oder mit Titan, bevorzugt TiO₂, und/oder wenigstens ein Metall, bevorzugt Gold, eingesetzt. Weiterhin bevorzugt werden als Nanopartikel und/oder Mikropartikel basierend auf einer Kern-Hülle-Struktur Nanopartikel und/oder Mikropartikel mit einem Kern umfassend wenigstens ein polymeres Material, bevorzugt Polystyrol, und einer, wenigstens ein Farbmittel umfassenden Hülle eingesetzt. Weiterhin bevorzugt werden als Nanopartikel und/oder Mikropartikel basierend auf einer Kern-Hülle-Struktur Nanopartikel und/oder Mikropartikel mit einem Kern umfassend wenigstens ein Metall, bevorzugt Gold, und einer kleinere Partikel als der Kern umfassenden Hülle eingesetzt, wobei die kleineren Partikel wenigstens ein Metalloxid, Metallhydroxid und/oder Metalloxidhydrat aus oder mit Silizium, bevorzugt SiO₂, und/oder aus oder mit Titan, bevorzugt TiO₂, umfassen. Als Nanopartikel und/oder Mikropartikel basierend auf einer Kern-Hülle-Struktur werden bevorzugt kugelförmige Kern-Hülle-Partikel eingesetzt.

Als Nanopartikel und/oder Mikropartikel basierend auf Janus-Partikeln können beispielsweise kugelförmige, ovale, vieleckige, dreieckige, viereckige, rechteckige, stäbchenförmige und/oder sternförmige Janus-Partikel eingesetzt werden. Bevorzugt werden kugelförmige, ovale und/oder stäbchenförmige, besonders bevorzugt kugelförmige Janus-Partikel eingesetzt. Als kugelförmige Janus-Partikel werden bevorzugt Kugeln umfassend wenigstens ein polymeres Material, bevorzugt Polystyrol, und/oder umfassend wenigstens ein Metalloxid, Metallhydroxid und/oder Metalloxidhydrat aus oder mit Silizium, bevorzugt SiO₂, welche teilweise, bevorzugt hälftig mit wenigstens einem Metall, bevorzugt Aluminium, Silber und/oder Gold, beschichtet sind, eingesetzt. Ist die teilweise, bevorzugt hälftig beschichtete Kugel sowohl mit Aluminium als auch mit Gold oder sowohl mit Silber als auch mit Gold beschichtet, ist die Goldschicht bevorzugt die der Kugel abgewandte Schicht. Als kugelförmige Janus-Partikel werden weiterhin bevorzugt Kugeln umfassend wenigstens ein Metall, bevorzugt Gold, welche teilweise, bevorzugt hälftig mit wenigstens einem Metalloxid, Metallhydroxid und/oder Metalloxidhydrat aus oder mit Silizium, bevorzugt SiO₂ und/oder aus oder mit Titan, bevorzugt TiO₂, beschichtet sind, eingesetzt. In letzterem Fall kann die Beschichtung mit wenigstens einem Metalloxid, Metallhydroxid und/oder Metalloxidhydrat wenigstens eine durchgehende Schicht oder einzelne Partikel, welche kleiner als die zu beschichtende Kugel sind, umfassen. Als kugelförmige Janus-Partikel werden weiterhin bevorzugt Kugeln umfassend wenigstens ein polymeres Material, bevorzugt Polystyrol, welche teilweise, bevorzugt hälftig mit wenigstens einer Farbmittel umfassenden Schicht belegt sind, eingesetzt.

Als Nanopartikel und/oder Mikropartikel basierend auf Trägerpartikeln können Partikel, welche beispielsweise mit einem polymeren Material befüllt werden können, eingesetzt werden.

Als Nanopartikel und/oder Mikropartikel basierend auf wenigstens einem polymeren Material können beispielsweise Nanopartikel umfassend Polyethylen, Polypropylen, Polystyrol und/oder Polymethylmethacrylat verwendet werden. Bevorzugt werden Polyethylen, Polypropylen, Polystyrol umfassende Nanopartikel und/oder Mikropartikel, besonders bevorzugt Polystyrol umfassende Nanopartikel und/oder Mikropartikel eingesetzt.

Als Nanopartikel und/oder Mikropartikel basierend auf wenigstens einem Metalloxid, Metallhydroxid und/oder Metalloxidhydrat können beispielsweise Nanopartikel basierend auf wenigstens einem Metalloxid, Metallhydroxid und/oder Metalloxidhydrat aus oder mit Titan, bevorzugt TiO₂ Nanopartikel, aus oder mit Silizium, bevorzugt SiO₂ Nanopartikel, aus oder mit Zirkonium, bevorzugt ZrO₂, aus oder mit Zinn, bevorzugt SnO₂, aus oder mit Antimon, bevorzugt Sb₂O₃, aus oder mit Eisen, bevorzugt Fe₃O₄ und/oder Fe₂O₃, aus oder mit Zinn, bevorzugt SnO und/oder SnO₂, aus oder mit Nickel, bevorzugt NiO, aus oder mit Molybdän, bevorzugt MoO₃, aus oder mit Cer, bevorzugt CeO₂, aus oder mit Yttrium, bevorzugt Y₂O₃, aus oder mit Kupfer, bevorzugt CuO und/oder aus oder mit Aluminium, bevorzugt Al₂O₃ oder AlO(OH), eingesetzt werden. Bevorzugt kommen Nanopartikel und/oder Mikropartikel basierend auf wenigsten einem Metalloxid, Metallhydroxid, Metalloxidhydrat aus oder mit Titan, Silizium, Eisen, Cer, Kupfer und/oder Zirkonium zum Einsatz. Besonders bevorzugt kommen Nanopartikel und/oder Mikropartikel basierend auf wenigsten einem Metalloxid, Metallhydroxid, Metalloxidhydrat aus oder mit Titan, Silizium und/oder Zirkonium zum Einsatz.

Als Nanopartikel und/oder Mikropartikel basierend auf wenigstens einem Metall können beispielsweise Nanopartikel aus oder mit Eisen, Aluminium, Gold, Kupfer, Nickel, Silber, Zink, Ytterbium, Chrom, Molybdän, Zinn, Palladium, Platin, Germanium, Gallium, Kobalt, Cadmium und/oder Mischungen hiervon und/oder Legierungen hiervon eingesetzt werden. Bevorzugt kommen auf wenigstens einem Metall basierende Nanopartikel und/oder Mikropartikel aus oder mit Aluminium, Gold, Kupfer, Silber, Platin und/oder Zink zum Einsatz. Besonders bevorzugt kommen auf wenigstens einem Metall basierende Nanopartikel und/oder Mikropartikel aus oder mit Aluminium, Gold und/oder Silber zum Einsatz.

Als Nanopartikel und/oder Mikropartikel, welche in einer Kristallstruktur vorliegen, können beispielsweise mit Bor dotierte Diamantpartikel zur Maskierung der zu beschichtenden Oberfläche eingesetzt werden.

Bevorzugt werden zur Maskierung der zu beschichtenden Oberfläche mit wenigstens einer Lage von Nanopartikeln und/oder Mikropartikeln Nanopartikel und/oder Mikropartikel basierend auf wenigstens einem polymeren Material, auf Trägerpartikeln und/oder Janus-Partikeln, besonders bevorzugt basierend auf wenigstens einem polymeren Material und/oder Janus-Partikeln eingesetzt.

Die Nanopartikel und/oder Mikropartikel können oberflächenmodifiziert sein.

Die zur Maskierung der zu beschichtenden Oberfläche in wenigstens einer Lage einsetzbaren kugelförmigen, vieleckigen, dreieckigen, viereckigen, rechteckigen, sechseckigen, achteckigen, sternförmigen Nanopartikel und/oder Mikropartikel weisen bevorzugt eine mittlere Partikelgröße aus einem Bereich von 0,001 µm bis 1000 µm, weiter bevorzugt aus einem Bereich von 0,005 µm bis 250 µm, weiter bevorzugt aus einem Bereich von 0,009 µm bis 150 µm, besonders bevorzugt aus einem Bereich von 0,01 µm bis 120 µm und ganz besonders bevorzugt aus einem Bereich von 0,011 µm bis 60 µm auf. Insbesondere bevorzugt weisen die einsetzbaren Nanopartikel und/oder Mikropartikel eine mittlere Partikelgröße aus einem Bereich von 0,01 µm bis 5 µm oder von 0,01 µm bis 0,025 µm auf. Zur Bestimmung der mittleren Partikelgröße der Nanopartikel und/oder Mikropartikel wird bevorzugt das Gerät Zetasizer Nano ZS der Firma Malvern verwendet.

Die Länge der stächenförmigen und ovalen Nanopartikel und/oder Mikropartikel liegt bevorzugt in einem Bereich von 1 nm bis 135 nm, besonders bevorzugt in einem Bereich von 5 nm bis 100 nm.
Die Breite der stäbchenförmigen und ovalen Nanopartikel und/oder Mikropartikel liegt bevorzugt in einem Bereich von 1 nm bis 65 nm, besonders bevorzugt in einem Bereich von 5 nm bis 50 nm. Zur Bestimmung der Länge und Breite der Nanopartikel und/oder Mikropartikel wird bevorzugt das Gerät Zetasizer Nano ZS der Firma Malvern verwendet.

Die Nanopartikel und/oder Mikropartikel können entweder in Reinform oder als Suspension auf die zu beschichtende Oberfläche aufgebracht werden. Bevorzugt werden die Nanopartikel und/oder Mikropartikel als Suspension auf die zu beschichtende Oberfläche aufgebracht. Die Nanopartikel und/oder Mikropartikel können in einem polaren oder unpolaren Lösungsmittel suspendiert sein. Die Nanopartikel und/oder Mikropartikel können beispielsweise in Wasser, Alkohol oder Öl suspendiert vorliegen.

Die wenigstens eine Lage von Nanopartikeln und/oder Mikropartikeln kann unter Zuhilfenahme einer Schüttelplatte, mittels Sprühbeschichtung, Schleuderbeschichtung oder Tauchbeschichtung auf die zu beschichtende Oberfläche aufgebracht werden. Die wenigstens eine Lage von Nanopartikeln und/oder Mikropartikeln kann auch unter Zuhilfenahme eines hydrodynamischen Druckverfahrens (englisch: hydrodynamic focus printing) aufgebracht werden. Die wenigstens eine Lage von Nanopartikeln und/oder Mikropartikeln kann von einer anderen Oberfläche auf die zu beschichtende Oberfläche überführt werden. In letzterem Fall kann nach Beschichtung der wenigstens einen Lage mit wenigstens einer Schicht, beispielsweise die Beschichtung eines Janus-Partikels nicht zusammen mit dem Janus-Partikel entfernt werden. Stattdessen verbleibt die Beschichtung des Janus-Partikel auf der zu beschichtenden Oberfläche zurück.

Vor Belegung der zu beschichtenden Oberfläche mit wenigstens einer Lage von Nanopartikeln und/oder Mikropartikeln kann die zu beschichtende Oberfläche vorab aktiviert werden. Die Aktivierung der zu beschichtenden Oberfläche kann mittels Plasma, durch chemische Aktivierung, beispielsweise mit einer Alkalilauge oder mit einer anorganischen Säure, und/oder durch Reibung erfolgen. Bevorzugt erfolgt die Aktivierung der zu beschichtenden Oberfläche mittels Plasma.

Der mit wenigstens einer Lage von Nanopartikeln und/oder Mikropartikeln zu belegende Teilbereich der zu beschichtenden Oberfläche kann beispielsweise durch Bedrucken der zu beschichtenden Oberfläche eingeschränkt werden. In diesem Fall kann auf die bedruckte Oberfläche keine Lage von Nanopartikeln und/oder Mikropartikeln aufgebracht werden. Nach optionalem Entfernen der bedruckten Oberfläche kann die darunter liegende Oberfläche und der mit wenigstens einer Lage von Nanopartikeln und/oder Mikropartikeln belegte Teilbereich der zu beschichtenden Oberfläche mit wenigstens einer Schicht beschichtet werden. Zum Bedrucken der zu beschichtenden Oberfläche kann beispielsweise eine Tintenstrahldrucktinte, bevorzugt basierend auf Wachsbasis, verwendet werden. Alternativ kann die zu beschichtende Oberfläche durch das Bedrucken mit beispielsweise einer Tintenstrahltinte in einzelne Teilbereiche eingeteilt werden, welche dann mit wenigstes einer Lage von Nanopartikeln und/oder Mikropartikeln ausgefüllt werden können. Eine derartige Einteilung der zu beschichtenden Oberfläche kann beispielsweise bei gekrümmten Oberflächen die Belegung mit wenigstens einer Lage von Nanopartikeln und/oder Mikropartikeln erleichtern. Die zur Einteilung der zu beschichtenden Oberfläche vorgenommene Bedruckung wird bevorzugt vor einer weiteren Beschichtung entfernt. Weiterhin ist es bevorzugt, dass die zur Einteilung der zu beschichtenden Oberfläche vorgenommene Bedruckung mit einer sehr geringen Linienstärke bzw. Linienweite erfolgt.

Die Begriffe "Schicht" und "Beschichtung" werden im Rahmen dieser Erfindung austauschbar verwendet.

Unter Beschichtung der wenigstens einen Lage von Nanopartikeln und/oder Mikropartikeln wird verstanden, dass die Beschichtung sowohl auf den, auf der zu beschichtenden Oberfläche immobilisierten, Nanopartikeln und/oder Mikropartikeln als auch auf dem Teilbereich der zu beschichtenden Oberfläche abgeschieden wird, welcher sich in den Zwischenräumen zwischen den immobilisierten Nanopartikeln und/oder Mikropartikeln befindet und/oder welcher nicht von immobilisierten Nanopartikeln und/oder Mikropartikeln während des Beschichtungsvorgangs maskiert und/oder abgeschattet wird.

Unter einer Lage von Nanopartikeln und/oder Mikropartikeln wird bevorzugt die vollständige Belegung der zu beschichtenden Oberfläche mit Nanopartikeln und/oder Mikropartikeln verstanden. Eine vollständige Belegung der zu beschichtenden Oberfläche schließt nicht aus, dass beispielsweise nur ein Teilbereich einer zu beschichtenden Oberfläche eines Brillenglases mit Nanopartikeln und/oder Mikropartikeln belegt ist. Dies kann beispielsweise dann der Fall sein, wenn die Ausbildung einer nanostrukturierten und/oder mikrostrukturierten Schicht nur in einem Teilbereich einer Oberfläche eines Brillenglases gewünscht ist. Eine vollständige Belegung der zu beschichtenden Oberfläche schließt weiterhin nicht aus, dass sich bedingt durch die Form und/oder die Partikelgröße, bevorzugt die mittlere Partikelgröße, der Nanopartikel und/oder Mikropartikel nicht belegte Zwischenräume auf der zu beschichtenden Oberfläche ausbilden. Genau diese Zwischenräume werden zur Ausbildung der wenigstens einen nanostrukturierten und/oder mikrostrukturierten Schicht benötigt.
Bei der Lage von Nanopartikeln und/oder Mikropartikeln handelt es sich bevorzugt um eine Monolage oder um eine Doppelschicht, besonders bevorzugt um eine Monolage. Bei der vollständigen Belegung der zu beschichtenden Oberfläche sind die Nanopartikel und/oder Mikropartikel bevorzugt aneinander angrenzend, aber in einer Monolage bevorzugt nicht überlappend, angeordnet. In einer Monolage von Nanopartikeln und/oder Mikropartikeln kann ein Teil der Nanopartikel und/oder Mikropartikel nicht aneinander angrenzend, sondern nur benachbart zueinander auf der jeweils zu beschichtenden Oberfläche vorliegen. Bei der vollständigen Belegung der zu beschichtenden Oberfläche mit einer Doppelschicht sind die Nanopartikel und/oder Mikropartikel sowohl in derjenigen Schicht der Doppelschicht, welche direkt angrenzend an die zu beschichtende Oberfläche ist als auch in derjenigen Schicht der Doppelschicht, welche nicht direkt angrenzend an die zu beschichtende Oberfläche ist, bevorzugt aneinander angrenzend, aber bevorzugt nicht überlappend, angeordnet. Unter vollständiger Belegung der zu beschichtenden Oberfläche wird verstanden, dass bevorzugt weniger als 15%, weiter bevorzugt weniger als 11%, besonders bevorzugt weniger als 8% und ganz besonders weniger als 6%, jeweils der zu beschichtenden Oberfläche nicht von aneinander angrenzenden Nanopartikeln und/oder Mikropartikeln belegt sind. Bei vorstehend genannten Zahlen ist derjenige Teilbereich einer Oberfläche eines Brillenglases, welcher nicht mit wenigstens einer nanostrukturierten und/oder mikrostrukturierten Schicht versehen werden soll, nicht berücksichtigt. Die Zwischenräume, die sich beispielsweise nur aufgrund der Form und/oder Partikelgröße, bevorzugt mittlerer Partikelgröße, der direkt aneinander angrenzenden Nanopartikel und/oder Mikropartikel auf der zu beschichtenden Oberfläche ausbilden, sind bei vorstehender Definition der vollständigen Belegung der zu beschichtenden Oberfläche nicht berücksichtigt. Mit anderen Worten werden Zwischenräume, welche bei einer idealen Anordnung der direkt aneinander angrenzenden, in einer Monolage nicht überlappenden Nanopartikel und/oder Mikropartikel aufgrund deren Form und/oder Partikelgröße, bevorzugt mittlerer Partikelgröße, entstehen, bei vorstehender Definition der zu beschichtenden Oberfläche nicht berücksichtigt. Im Fall von in einer Monolage in einer hexagonal dichtesten Kugelpackung angeordneten kugelförmigen Nanopartikeln und/oder Mikropartikeln sind diese Zwischenräume diejenigen Stellen auf der zu beschichtenden Oberfläche, an welchen sich die kugelförmigen Nanopartikel und/oder Mikropartikel nicht berühren. Bei vorstehender Definition der vollständigen Belegung der zu beschichtenden Oberfläche sind nur diejenigen Teilbereiche der zu beschichtenden Oberfläche berücksichtigt, welche von aneinander angrenzenden Nanopartikeln und/oder Mikropartikeln umringt sind und wobei die um diese Teilbereiche angeordneten Nanopartikel und/oder Mikropartikel jeweils nicht von der maximal mögliche Anzahl an direkt angrenzenden Nanopartikeln und/oder Mikropartikeln umgeben sind. Dies gilt sowohl für eine Monolage als auch für eine Doppelschicht von Nanopartikeln und/oder Mikropartikeln. Im Fall von kugelförmigen Nanopartikeln und/oder Mikropartikeln in einer Monolage sind diese Teilbereiche Bereiche, in denen kugelförmige Nanopartikel und/oder Mikropartikel nicht in einer hexagonal dichtesten Kugelpackung angeordnet sind und somit ein an diesen Teilbereich angrenzender Nanopartikel und/oder Mikropartikel an weniger als sechs benachbarte Nanopartikel und/oder Mikropartikel angrenzt. Die vollständige Belegung der zu beschichtenden Oberfläche wird anhand einer lichtmikroskopischen Aufsicht und/oder einer rasterelektronenmikroskopischen Aufsicht auf eine mit Nanopartikeln und/oder Mikropartikeln belegte Oberfläche ermittelt. Bevorzugt wird die vollständige Belegung der zu beschichtenden Oberfläche anhand einer rasterelektronenmikroskopischen Aufsicht ermittelt. Im Fall einer Doppelschicht wird die direkt an die zu beschichtende Oberfläche angrenzende Schicht zur Beurteilung der vollständigen Belegung herangezogen.
Unter einer Lage von Nanopartikeln und/oder Mikropartikeln wird bevorzugt auch eine nicht vollständige Belegung der zu beschichtenden Oberfläche mit Nanopartikeln und/oder Mikropartikeln verstanden. Bei der nicht vollständigen Belegung der zu beschichtenden Oberfläche grenzen die Nanopartikel und/oder Mikropartikel nicht an einen weiteren Nanopartikel und/oder Mikropartikel an. Bei der nicht vollständigen Belegung sind die Nanopartikel und/oder Mikropartikel entweder statistisch oder in einem regelmäßigen Abstand voneinander auf der zu beschichtenden Oberfläche verteilt. Bevorzugt sind die Nanopartikel und/oder Mikropartikel statistisch auf der zu beschichtenden Oberfläche verteilt. Bei der statistischen Verteilung der Nanopartikel und/oder Mikropartikel ist hierbei nicht ausgeschlossen, dass ein Teil der Nanopartikel und/oder Mikropartikel direkt aneinander angrenzend und ein weiterer Teil der Nanopartikel und/oder Mikropartikel nicht aneinander angrenzend auf der zu beschichtenden Oberfläche vorliegen. Bevorzugt sind bei einer nicht vollständigen Belegung der zu beschichtenden Oberfläche weniger als 6%, weiter bevorzugt weniger als 4%, besonders bevorzugt weniger als 2% der Nanopartikel und/oder Mikropartikel, jeweils bezogen auf die Gesamtanzahl der Nanopartikel und/oder Mikropartikel in einer Lage, direkt aneinander angrenzend angeordnet. Die nicht vollständige Belegung der zu beschichtenden Oberfläche wird anhand einer lichtmikroskopischen Aufsicht und/oder einer rasterelektronenmikroskopischen Aufsicht auf eine mit Nanopartikeln und/oder Mikropartikeln belegte Oberfläche ermittelt. Bevorzugt wird die nicht vollständige Belegung der zu beschichtenden Oberfläche anhand einer rasterelektronenmikroskopischen Aufsicht ermittelt. Vorstehende Definition der nicht vollständigen Belegung einer zu beschichtenden Oberfläche ist nicht zu verwechseln mit einem Teilbereich einer zu beschichtenden Oberfläche eines Brillenglases, welche nicht für die Ausbildung wenigstens einer nanostrukturierten und/oder mikrostrukturierten Schicht vorgesehen ist.
Eine Lage von Nanopartikeln und/oder Mikropartikeln kann, unabhängig von der vollständigen oder nicht vollständigen Belegung der zu beschichtenden Oberfläche, Nanopartikel und/oder Mikropartikel unterschiedlicher Art bzw. Zusammensetzung, unterschiedlicher Form und/oder unterschiedlicher Partikelgröße, bevorzugt unterschiedlicher mittlerer Partikelgröße, umfassen. Beispielsweise kann eine Lage von Nanopartikel und/oder Mikropartikeln ausschließlich Nanopartikel unterschiedlicher Art, beispielsweise Nanopartikel basierend auf einem polymeren Material und Nanopartikel basierend auf einem Metall, mit identischer Form, beispielsweise kugelförmig, in unterschiedlicher Partikelgröße, bevorzugt unterschiedlicher mittlerer Partikelgröße, umfassen.
Nach Belegung der zu beschichtenden Oberfläche mit wenigstens einer Lage von Nanopartikeln und/oder Mikropartikeln kann diese wenigstens eine Lage teilweise abgeschirmt werden und der nicht abgeschirmte Teil der Lage mit Plasma, bevorzugt induktiv gekoppeltem Plasma, behandelt werden. Die Nanopartikel und/oder Mikropartikel verändern durch die Plasmabehandlung ihre mittlere Partikelgröße, bevorzugt wird die mittlere Partikelgröße der Nanopartikel und/oder Mikropartikel durch die Plasmabehandlung verkleinert, so dass auf diese Weise von dem abgeschirmten Teil der wenigstens einen Lage zu dem nicht abgeschirmten Teil der wenigstens einen Lage ein Gradient in Bezug auf die mittlere Partikelgröße der Nanopartikel und/oder Mikropartikel erzeugt werden kann. Anschließend kann diese Lage von Nanopartikeln und/oder Mikropartikeln mit wenigstens einer Schicht beschichtet werden. Durch die Verkleinerung der Nanopartikel und/oder Mikropartikel sind die Zwischenräume zwischen den verkleinerten Nanopartikeln und/oder Mikropartikeln größer als zwischen den nicht verkleinerten Nanopartikeln und/oder Mikropartikeln. Unabhängig von der vollständigen oder nicht vollständigen Belegung der zu beschichtenden Oberfläche sind die Nanopartikel und/oder Mikropartikel auf der zu beschichtenden Oberfläche immobilisiert und verändern ihre einmal eingenommene Position bei der nachfolgenden Beschichtung mit wenigstens einer weiteren Schicht bevorzugt nicht.
Die jeweils zu beschichtende Oberfläche wird bevorzugt mit wenigstens einer Lage von Nanopartikeln und/oder Mikropartikeln maskiert und mit wenigstens einer weiteren Schicht beschichtet. Nach Entfernen der Nanopartikel und/oder Mikropartikel kann die so erhaltene strukturierte Oberfläche mit wenigstens einer weiteren Schicht beschichtet und/oder mit wenigstens einer weiteren Lage von Nanopartikeln und/oder Mikropartikeln maskiert und mit wenigstens einer weiteren Schicht beschichtet werden. Nach Entfernen der zuletzt zur Maskierung immobilisierten Nanopartikel und/oder Mikropartikel kann der vorstehend beschriebene Beschichtungsvorgang wiederholt werden. Hierbei können die zur Maskierung eingesetzten Nanopartikel und/oder Mikropartikel in Bezug auf ihre Zusammensetzung, ihre Partikelgröße, bevorzugt mittlere Partikelgröße, und/oder ihre Form identisch oder verschieden voneinander sein. Beispielsweise kann eine zu beschichtende Oberfläche mit einer Monolage umfassend Mikropartikel mit einer Partikelgröße, bevorzugt mittleren Partikelgröße, von 5 µm vollständig belegt und mit einer Entspiegelungsschicht beschichtet werden. Nach Entfernen dieser Mikropartikel mit einer Partikelgröße, bevorzugt mittleren Partikelgröße, von 5 µm kann die so erhaltene strukturierte Oberfläche mit einer weiteren Monolage von Nanopartikeln mit einer Partikelgröße, bevorzugt mittleren Partikelgröße, von 1 µm vollständig belegt und mit einer weiteren Entspiegelungsschicht beschichtet werden. Die in vorstehendem Beispiel eingesetzten Mikropartikel und Nanopartikel können hierbei eine identische Form, beispielsweise kugelförmig, oder eine voneinander verschiedene Form aufweisen. Weiterhin können die in vorstehendem Beispiel eingesetzten Mikropartikel und Nanopartikel eine identische Zusammensetzung, beispielsweise basierend auf einem polymeren Material, bevorzugt Polystyrol, oder eine nicht identische Zusammensetzung aufweisen.
Das Substrat kann auf der jeweils zu beschichtenden Oberfläche der Vorderfläche und auf der jeweils zu beschichtenden Oberfläche der Rückfläche mit einer voneinander verschiedenen Schichtenfolge belegt sein. Beispielsweise kann eine zu beschichtete Oberfläche der Vorderfläche des Substrats mit einer einzigen Monolage von Nanopartikeln und/oder Mikropartikeln, welche eine vollständige Belegung der zu beschichtenden Oberfläche ausbilden, maskiert sein und eine zu beschichtende Oberfläche der Rückfläche des Substrats einer einzigen Monolage von Nanopartikeln und/oder Mikropartikeln, welche keine vollständige Belegung der zu beschichtenden Oberfläche ausbilden, maskiert sein. Nach der Beschichtung beider Monolagen mit wenigstens einer identischen oder mit wenigstens einer voneinander verschiedenen Schicht und Entfernen der Nanopartikel und/oder Mikropartikel aus der jeweiligen wenigstens einen Schicht, kann beispielsweise nur die auf diese Weise erhaltene strukturierte Oberfläche der Rückfläche mit wenigstens einer weiteren Schicht und/oder beispielsweise mit wenigstens einer weiteren Monolage von Nanopartikeln und/oder Mikropartikeln, welche eine vollständige Belegung der zu beschichtenden Oberfläche ausbilden, maskiert und mit wenigstens einer weiteren Schicht beschichtet werden. Nach Entfernen der Nanopartikel und/oder Mikropartikel aus der zuletzt genannten wenigstens einen weiteren Schicht kann die nun erhaltene strukturierte Oberfläche wiederum mit wenigstens einer weiteren Schicht beschichtet werden. Anstelle einer Monolage kann auch eine Doppelschicht von Nanopartikeln und/oder Mikropartikeln zur Maskierung der zu beschichtenden Oberfläche eingesetzt werden.

Die wenigstens eine Lage von Nanopartikeln und/oder Mikropartikeln wird bevorzugt mit wenigstens einer Schicht beschichtet. Diese wenigstens eine Schicht kann aus der Gruppe bestehend aus wenigstens einer einzelnen Schicht eines Metalloxids, Metallhydroxids und/oder Metalloxidhydrats aus oder mit Silizium, bevorzugt einer einzelnen SiO₂-Schicht oder aus oder mit Titan, bevorzugt einer einzelnen TiO₂-Schicht oder aus oder mit Zirkonium, bevorzugt einer einzelnen ZrO₂-Schicht, wenigstens einer polarisierenden Schicht, wenigstens einer farbgebenden Schicht, wenigstens einer photochromen Schicht, wenigstens einer Hartlackschicht, wenigstens einer elektrisch leitfähigen oder elektrisch halbleitenden Schicht, wenigstens einer Entspiegelungsschicht, wenigstens einer Verspiegelungsschicht, wenigstens einer Antibeschlagsschicht und wenigstens einer Clean-Coat-Schicht ausgewählt sein. Die wenigstens eine elektrisch leitfähige Schicht oder elektrisch halbleitende Schicht kann hierbei Teil der wenigstens einen Entspiegelungsschicht sein. Bevorzugt handelt es sich bei der wenigstens einen Schicht um wenigstens eine Hartlackschicht, wenigstens eine Entspiegelungsschicht, um wenigstens eine Verspiegelungsschicht und/oder um wenigstens eine Clean-Coat-Schicht. Besonders bevorzugt handelt es sich bei der wenigstens einen Schicht um wenigstens eine Entspiegelungsschicht, wenigstens eine Clean-Coat-Schicht und/oder um wenigstens eine Verspiegelungsschicht.

Die Beschichtung der wenigstens einen Lage von Nanopartikeln und/oder Mikropartikeln kann mittels physikalischer Gasphasenabscheidung (PVD), chemischer Gasphasenabscheidung (CVD), Atomlagenabscheidung (ALD), plasmaunterstützter chemische Gasphasenabscheidung (PECVD), chemischer Gasphasenabscheidung bei Atmosphärendruck (ACVD), metall-organischer chemischer Gasphasenabscheidung (MOCVD) und/oder mittels eines Sol-Gel-Verfahrens erfolgen.

Wird die wenigstens eine Lage von Nanopartikeln und/oder Mikropartikeln, bevorzugt die wenigstens eine Monolage und/oder die wenigstens eine Doppelschicht jeweils von Nanopartikeln und/oder Mikropartikeln, besonders bevorzugt die wenigstens eine Monolage von Nanopartikeln und/oder Mikropartikeln, jeweils mit wenigstens einer polarisierenden Schicht beschichtet, kann diese beispielsweise eine in EP 1 965 235 A1, EP 0 217 502 A1, EP 1 674 898 A1, US 2006/0066947 A1, WO 2005/050265 A1, WO 2009/029198 A1, WO 2009/156784 A1 oder WO 2015/160612 A1 offenbarte Schicht mit polarisierenden Eigenschaften umfassen. In vorstehend genannten Anmeldungen ist die Schicht mit polarisierenden Eigenschaften jeweils Bestandteil einer dort beschriebenen Schichtenfolge. Im Rahmen dieser Erfindung wird vorzugsweise nur die in den genannten Anmeldungen beschriebene Schicht mit polarisierenden Eigenschaften als polarisierende Schicht eingesetzt. Nach Entfernen der Nanopartikel und/oder Mikropartikel umfasst die zu beschichtende Oberfläche die wenigstens eine polarisierende Schicht nur in denjenigen Teilbereichen der zu beschichtenden Oberfläche, welche während des Beschichtungsvorgangs nicht mit Nanopartikeln und/oder Mikropartikeln belegt und/oder welche während des Beschichtungsvorgangs nicht von Nanopartikeln und/oder Mikropartikeln abgeschattet war. Die zu beschichtende Oberfläche kann wenigstens eine farbgebende Schicht, wenigstens eine optisch fertig bearbeitete Fläche des Brillenglas-Halbfertigprodukts oder fertigen Brillenglases und/oder wenigstens eine nicht mit einem Brillenglas-Halbfertigprodukt, nicht mit einem fertiges Brillenglas oder nicht mit wenigstens einer Kunststofffolie verbundene Oberfläche eines Dünnstglases sein. Alternativ zu der vorstehend beschriebenen Beschichtung mit wenigstens einer polarisierenden Schicht kann eine Polarisationsfolie in das Substrat eingebettet oder auf das Substrat aufgebracht werden. Die Polarisationsfolie kann hierbei auf wenigstens einer Oberfläche mit wenigstens einer Lage von Nanopartikeln und/oder Mikropartikeln belegt sein, wobei die Belegung vollständig oder nicht vollständig sein kann. Die mit wenigstens einer Lage von Nanopartikeln und/oder Mikropartikeln belegte Polarisationsfolie kann bei der Herstellung eines Brillenglas-Halbfertigproduktes oder eines fertiges Brillenglases in das Brillenglas-Halbfertigprodukt oder in das fertige Brillenglas eingebettet oder auf die optisch fertig bearbeitete Oberfläche aufgebracht werden. Umfasst das Substrat wenigstens eine zwischen zwei Dünnstgläsern angeordnete Kunststofffolie kann die mit wenigstens einer Lage von Nanopartikeln und/oder Mikropartikeln belegte Polarisationsfolie alternativ oder zusätzlich zur wenigstens einen Kunststofffolie zwischen den beiden Dünnstgläsern, bevorzugt dem Objekt zugewandt, vorliegen. Alternativ kann die mit wenigstens einer Lage von Nanopartikeln und/oder Mikropartikeln belegte Oberfläche der Polarisationsfolie mit wenigstens einer Schicht, beispielsweise mit einer Entspiegelungsschicht, beschichtet sein. Nach Entfernen der Nanopartikel und/oder Mikropartikel kann die so erhaltene Polarisationsfolie wie vorstehend beschrieben in ein Substrat eingebettet oder auf das Substrat aufgebracht werden.

Wird die wenigstens eine Lage von Nanopartikeln und/oder Mikropartikeln, bevorzugt die wenigstens eine Monolage und/oder die wenigstens eine Doppelschicht jeweils von Nanopartikeln und/oder Mikropartikeln, besonders bevorzugt die wenigstens eine Monolage von Nanopartikeln und/oder Mikropartikeln, jeweils mit wenigstens einer farbgebenden Schicht beschichtet, umfasst diese bevorzugt eine färbbare Schicht gemäß US 4,355,135 A, insbesondere gemäß Anspruch 1, gemäß US 4,294,950 A, insbesondere gemäß einem der Ansprüche 1 oder 6 oder gemäß US 4,211,823 A, insbesondere gemäß einem der Ansprüche 1 oder 2. Besonders bevorzugt umfasst die farbgebende Schicht eine färbbare Schicht gemäß US 4,355,135 A. Das zur Einfärbung einsetzbare Farbmittel kann beispielsweise aus der Gruppe bestehend aus C.I. Disperse Yellow 5, C.I. Disperse Yellow 13, C.I. Disperse Yellow 33, C.I. Disperse Yellow 42, C.I. Disperse Yellow 51, C.I. Disperse Yellow 54, C.I. Disperse Yellow 64, C.I. Disperse Yellow 71, C.I. Disperse Yellow 86, C.I. Disperse Yellow 114, C.I. Disperse Yellow 201, C.I. Disperse Yellow 211, C.I. Disperse Orange 30, C.I. Disperse Orange 73, C.I. Disperse Red 4, C.I. Disperse Red 11, C.I. Disperse Red 15, C.I. Disperse Red 55, C.I. Disperse Red 58, C.I. Disperse Red 60, C.I. Disperse Red 73, C.I. Disperse Red 86, C.I. Disperse Red 91, C.I. Disperse Red 92, C.I. Disperse Red 127, C.I. Disperse Red 152, C.I. Disperse Red 189, C.I. Disperse Red 229, C.I. Disperse Red 279, C.I. Disperse Red 302, C.I. Disperse Red 302:1, C.I. Disperse Red 323, C.I. Disperse Blue 27, C.I. Disperse Blue 54, C.I. Disperse Blue 56, C.I. Disperse Blue 73, C.I. Disperse Blue 280, C.I. Disperse Violet 26, C.I. Disperse Violet 33, C.I. Solvent Yellow 179, C.I. Solvent Violet 36, C.I. Pigment Blue 15, C.I. Pigment Blue 80, C.I. Pigment Green 7, C.I. Pigment Orange 36, C.I. Pigment Orange 36, C.I. Pigment Yellow 13, C.I. Pigment Violet 23, C.I. Pigment Violet 37, C.I. Pigment Black 1, C.I. Pigment Black 6 und C.I. Pigment Black 7 ausgewählt sein. Alternativ hierzu kann die wenigstens eine farbgebende Schicht auch mittels einer Farbmittel umfassenden Drucktinte, insbesondere 3D-Drucktinte, auf die Lage von Nanopartikeln und/oder Mikropartikeln aufgebracht werden. Nach Entfernung der Nanopartikel und/oder Mikropartikel umfasst die zu beschichtende Oberfläche die wenigstens eine farbgebende Schicht in denjenigen Teilbereichen der zu beschichtenden Oberfläche, welche während der Aufbringung der wenigstens einen farbgebenden Schicht nicht von Nanopartikeln und/oder Mikropartikeln maskiert und/oder nicht von Nanopartikeln und/oder Mikropartikeln abgeschattet war. Bei der zu beschichtenden Oberfläche kann es sich um wenigstens eine polarisierende Schicht, um wenigstens eine optisch fertig bearbeitete Oberfläche des Brillenglas-Halbfertigprodukts oder fertigen Brillenglases und/oder um wenigstens eine nicht mit einem Brillenglas-Halbfertigprodukt, nicht mit einem fertiges Brillenglas oder nicht mit wenigstens einer Kunststofffolie verbundene Oberfläche eines Dünnstglases handeln.

Wird die wenigstens eine Lage von Nanopartikeln und/oder Mikropartikeln, bevorzugt die wenigstens eine Monolage und/oder die wenigstens eine Doppelschicht jeweils von Nanopartikeln und/oder Mikropartikeln, besonders bevorzugt die wenigstens eine Monolage von Nanopartikeln und/oder Mikropartikeln, jeweils mit wenigstens einer photochromen Schicht beschichtet, umfasst diese bevorzugt wenigstens eine Schicht gemäß US 2006/0269741 A1, insbesondere gemäß US 2006/0269741 A1, Anspruch 6, oder wenigstens eine Schicht gemäß US 2004/0220292 A1, insbesondere gemäß US 2004/0220292 A1, Anspruch 1. Nach Entfernen der Nanopartikel und/oder Mikropartikel umfasst die zu beschichtende Oberfläche die wenigstens eine photochrome Schicht nur in den Zwischenräumen zwischen den Nanopartikeln und/oder Mikropartikeln, welche während der Beschichtung mit der wenigstens einen photochromen Schicht nicht durch die Nanopartikel und/oder Mikropartikel maskiert waren und/oder in den Teilbereichen der zu beschichtenden Oberfläche, welche während der Beschichtung mit der wenigstens einen photochromen Schicht nicht von wenigstens einem Nanopartikel und/oder wenigstens einem Mikropartikel abgeschattet war. Bei der zu beschichtenden Oberfläche kann es sich um wenigstens eine farbgebende Schicht, wenigstens eine polarisierende Schicht, wenigstens optisch fertig bearbeitete Oberfläche des Substrats und/oder um wenigstens eine nicht mit einem Brillenglas-Halbfertigprodukt, nicht mit einem fertiges Brillenglas oder nicht mit wenigstens einer Kunststofffolie verbundene Oberfläche eines Dünnstglases handeln.

Wird die wenigstens eine Lage von Nanopartikeln und/oder Mikropartikeln, bevorzugt die wenigstens eine Monolage und/oder die wenigstens eine Doppelschicht jeweils von Nanopartikeln und/oder Mikropartikeln, besonders bevorzugt die wenigstens eine Monolage von Nanopartikeln und/oder Mikropartikeln, jeweils mit wenigstens einer Hartlackschicht beschichtet, wird für die Herstellung der wenigstens einen Hartlackschicht bevorzugt eine Zusammensetzung gemäß EP 2 578 649 A1, insbesondere gemäß EP 2 578 649 A1, Anspruch 1, eingesetzt. Nach Entfernen der Nanopartikel und/oder Mikropartikel umfasst die zu beschichtende Oberfläche die wenigstens eine Hartlackschicht in den Zwischenräumen zwischen den zur Maskierung immobilisierten Nanopartikeln und/oder Mikropartikeln und/oder in den nicht von den Nanopartikeln und/oder Mikropartikeln abgeschatteten Teilbereichen der zu beschichtenden Oberfläche. Die zu beschichtende Oberfläche kann beispielsweise wenigstens eine photochrome Schicht, wenigstens eine farbgebende Schicht, wenigstens eine optisch fertig bearbeitete Fläche des Brillenglas-Halbfertigprodukts oder fertigen Brillenglases und/oder wenigstens eine nicht mit einem Brillenglas-Halbfertigprodukt, nicht mit einem fertiges Brillenglas oder nicht mit wenigstens einer Kunststofffolie verbundene Oberfläche eines Dünnstglases sein. Alternativ zur vorstehend beschriebenen Beschichtung mit wenigstens einer Hartlackschicht können die Nanopartikel und/oder Mikropartikel der Zusammensetzung für die Herstellung der wenigstens einen Hartlackschicht zugesetzt werden und nach deren Aufbringung aus der wenigstens einen Hartlackschicht entfernt werden.

Wird die wenigstens eine Lage von Nanopartikeln und/oder Mikropartikeln, bevorzugt die wenigstens eine Monolage und/oder die wenigstens eine Doppelschicht jeweils von Nanopartikeln und/oder Mikropartikeln, besonders bevorzugt die wenigstens eine Monolage von Nanopartikeln und/oder Mikropartikeln, jeweils mit wenigstens einer elektrisch leitfähigen oder elektrisch halbleitenden Schicht beschichtet, kann diese beispielsweise wenigstens eine Schicht aus oder mit Indium-Zinn-Oxid (((In₂O₃)_{0.9} (SnO₂)_{0.1}; ITO), Fluor-Zinn-Oxid (SnO₂:F; FTO), Aluminium-Zink-Oxid (ZnO:Al; AZO) und/oder Antimon-Zinn-Oxid (SnO₂:Sb; ATO) umfassen. Bevorzugt umfasst die wenigstens eine elektrisch leitfähige oder elektrisch halbleitende Schicht eine Schicht aus oder mit ITO bzw. aus oder mit FTO. Die wenigstens eine elektrisch leitfähige Schicht oder elektrisch halbleitende Schicht kann eine Schicht der wenigstens einen Entspiegelungsschicht sein. Ist nach Entfernen der Nanopartikel und/oder Mikropartikel die wenigstens eine elektrisch leitfähige oder elektrisch halbleitende Schicht objektseitig oder augenseitig Bestandteil der jeweils substratabgewandt angeordneten äußersten Schicht, wird bevorzugt die statische Aufladung dieser äußersten Schicht vermindert oder vermieden. Dies wiederum erleichtert die Reinigung des so beschichteten erfindungsgemäßen Brillenglases. Mit Bestandteil der jeweils substratabgewandt angeordneten äußersten Schicht ist gemeint, dass die Zwischenräume zwischen den nicht mit Nanopartikeln und/oder Mikropartikeln maskierten Teilbereichen und/oder zwischen den nicht von Nanopartikeln und/oder Mikropartikeln abgeschatteten Teilbereichen der zu beschichteten Oberfläche die wenigstens eine elektrisch leitfähige oder elektrisch halbleitende Schicht umfassen. Bei der zu beschichtenden Oberfläche kann es sich beispielsweise um wenigstens eine Entspiegelungsschicht, um einen Teil der Schichten wenigstens einer Entspiegelungsschicht, um wenigstens eine optisch fertig bearbeitete Fläche des Brillenglas-Halbfertigprodukts oder fertigen Brillenglases und/oder wenigstens eine nicht mit einem Brillenglas-Halbfertigprodukt, nicht mit einem fertiges Brillenglas oder nicht mit wenigstens einer Kunststofffolie verbundene Oberfläche eines Dünnstglases handeln.

Wird die wenigstens eine Lage von Nanopartikeln und/oder Mikropartikeln, bevorzugt die wenigstens eine Monolage und/oder die wenigstens eine Doppelschicht jeweils von Nanopartikeln und/oder Mikropartikeln, besonders bevorzugt die wenigstens eine Monolage von Nanopartikeln und/oder Mikropartikeln, jeweils mit wenigstens einer Entspiegelungsschicht beschichtet, so umfasst diese bevorzugt alternierende diskrete Metalloxid-, Metallhydroxid- und/oder Metalloxidhydratschichten aus oder mit Eisen, Zinn, Nickel, Molybdän, Cer, Kupfer, Aluminium, Silizium, Zirkonium, Titan, Yttrium, Tantal, Neodym, Lanthan, Niob und/oder Praseodym. Die wenigstens eine Entspiegelungsschicht umfasst bevorzugt wenigstens eine Metalloxid-, Metallhydroxid- und/oder Metalloxidhydratschicht aus oder mit Silizium, wobei bevorzugt wenigstens eine Siliziumoxid-, Siliziumhydroxid- und/oder Siliziumoxidhydratschicht objektseitig und augenseitig jeweils die außenliegende Schicht der wenigstens einen Entspiegelungsschicht darstellt. Unter außenliegender Schicht wird in diesem Zusammenhang diejenige Schicht der Entspiegelungsschicht verstanden, welche sich in der Schichtenfolge am weitesten augenseitig bzw. am weitesten objektseitig befindet.
Die wenigstens eine Entspiegelungsschicht kann beispielsweise folgende Schichtenfolge von substratzugewandt zu substratabgewandt aufweisen:
a) Metalloxid, Metallhydroxid und/oder Metalloxidhydratschicht aus oder mit Titan,
b) Metalloxid, Metallhydroxid und/oder Metalloxidhydratschicht aus oder mit Silizium,
c) Metalloxid, Metallhydroxid und/oder Metalloxidhydratschicht aus oder mit Titan,
d) Metalloxid, Metallhydroxid und/oder Metalloxidhydratschicht aus oder mit Silizium,
e) Metalloxid, Metallhydroxid und/oder Metalloxidhydratschicht aus oder mit Titan,
f) Metalloxid, Metallhydroxid und/oder Metalloxidhydratschicht aus oder mit Silizium.
Die wenigstens eine Entspieglungsschicht kann weiterhin die in EP 2 437 084 A1, in den Figuren 3 und 5, jeweils die zwischen der superhydrohoben Schicht und der Hartlackschicht aufgezeigte Schichtenfolge und Schichtdicke aufweisen. Bevorzugt ist im Rahmen dieser Erfindung die dort jeweils an die Hartlackschicht angrenzende Schicht augenseitig und die jeweils an die superhydrophobe Schicht angrenzende Schicht objektseitig auf der Vorderfläche bzw. die dort jeweils an die Hartlackschicht angrenzende Schicht objektseitig und die jeweils an die superhydrophobe Schicht angrenzende Schicht augenseitig in der Schichtenfolge auf der Rückfläche angeordnet. Die Herstellung der wenigstens einen Entspiegelungsschicht erfolgt vorzugsweise mittels PVD-Verfahren. Nach Entfernen der Nanopartikel und/oder Mikropartikel umfasst die zu beschichtende Oberfläche die wenigstens eine Entspiegelungsschicht nur in denjenigen Teilbereichen der zu beschichtenden Oberfläche, welche während der Beschichtung mit der wenigstens einen Entspiegelungsschicht nicht mit Nanopartikeln und/oder Mikropartikeln maskiert und/oder welche während der Beschichtung mit der wenigstens einen Entspiegelungsschicht nicht von Nanopartikeln und/oder Mikropartikeln abgeschattet waren. Die zu beschichtende Oberfläche kann wenigstens eine Hartlackschicht, wenigstens eine Verspiegelungsschicht, wenigstens eine optisch fertig bearbeitete Fläche des Brillenglas-Halbfertigprodukts oder fertigen Brillenglases und/oder wenigstens eine nicht mit einem Brillenglas-Halbfertigprodukt, nicht mit einem fertiges Brillenglas oder nicht mit wenigstens einer Kunststofffolie verbundene Oberfläche eines Dünnstglases sein.

Wird die wenigstens eine Lage von Nanopartikeln und/oder Mikropartikeln, bevorzugt die wenigstens eine Monolage und/oder die wenigstens eine Doppelschicht jeweils von Nanopartikeln und/oder Mikropartikeln, besonders bevorzugt die wenigstens eine Monolage von Nanopartikeln und/oder Mikropartikeln, jeweils mit wenigstens einer Verspiegelungsschicht beschichtet, umfasst diese bevorzugt alternierende dielektrische Schichten im Sinne eines Bragg-Spiegels und/oder wenigstens eine semitransparente Metallschicht. Bei der Verspiegelungsschicht handelt es sich besonders bevorzugt um eine semitransparente Metallschicht. Die wenigstens eine semitransparente Metallschicht kann beispielsweise eine Aluminiumschicht, Chromschicht, Goldschicht und/oder eine Silberschicht umfassen. Die wenigstens eine semitransparente Metallschicht wird vorzugsweise mittels eines PVD-Verfahrens auf die wenigstens eine Lage von Nanopartikeln aufgebracht. Nach Entfernen der Nanopartikel und/oder Mikropartikel umfasst die zu beschichtende Oberfläche die wenigstens eine Verspiegelungsschicht nur in denjenigen Teilbereichen der zu beschichtenden Oberfläche, welche während der Beschichtung mit der wenigstens einen Verspiegelungsschicht nicht mit Nanopartikeln und/oder Mikropartikeln maskiert und/oder welche während der Beschichtung mit der wenigstens einen Verspiegelungsschicht nicht von Nanopartikeln und/oder Mikropartikeln abgeschattet waren. Die zu beschichtende Oberfläche kann wenigstens eine Hartlackschicht, wenigstens eine photochrome Schicht, wenigstens eine polarisierende Schicht, wenigstens eine optisch fertig bearbeitete Fläche des Brillenglas-Halbfertigprodukts oder fertigen Brillenglases und/oder wenigstens eine nicht mit einem Brillenglas-Halbfertigprodukt, nicht mit einem fertiges Brillenglas oder nicht mit wenigstens einer Kunststofffolie verbundene Oberfläche eines Dünnstglases sein.

Wird die wenigstens eine Lage von Nanopartikeln und/oder Mikropartikeln, bevorzugt die wenigstens eine Monolage und/oder die wenigstens eine Doppelschicht jeweils von Nanopartikeln und/oder Mikropartikeln, besonders bevorzugt die wenigstens eine Monolage von Nanopartikeln und/oder Mikropartikeln, jeweils mit wenigstens einer Antibeschlagsschicht beschichtet, umfasst diese bevorzugt ein Silanderivat gemäß EP 2 664 659 A1, besonders bevorzugt gemäß Anspruch 4 der EP 2 664 659 A1. Alternativ kann die wenigstens eine Antibeschlagsschicht auch gemäß dem in DE 10 2015 209 794 A1 beschriebenen Verfahren, insbesondere gemäß des in Anspruch 1 der DE 10 2015 209 794 A1 beschriebenen Verfahrens, hergestellt werden. Nach Entfernen der Nanopartikel und/oder Mikropartikel ist die wenigstens eine Antibeschlagsschicht nur in denjenigen Teilbereichen der zu beschichtenden Oberfläche zu finden, welche während der Beschichtung mit der wenigstens einen Antibeschlagsschicht nicht mit Nanopartikeln und/oder Mikropartikeln maskiert und/oder durch Nanopartikel und/oder Mikropartikel abgeschattet waren. Die zu beschichtende Oberfläche kann wenigstens eine Entspiegelungsschicht, bevorzugt die Metalloxid-, Metallhydroxid- und/oder Metalloxidhydratschicht aus oder mit Silizium der Entspiegelungsschicht, wenigstens eine optisch fertig bearbeitete Fläche des Brillenglas-Halbfertigprodukts oder des fertigen Brillenglases und/oder wenigstens eine nicht mit einem Brillenglas-Halbfertigprodukt, nicht mit einem fertiges Brillenglas oder nicht mit wenigstens einer Kunststofffolie verbundene Oberfläche eines Dünnstglases sein.

Wird die wenigstens eine Lage von Nanopartikeln und/oder Mikropartikeln, bevorzugt die wenigstens eine Monolage und/oder die wenigstens eine Doppelschicht jeweils von Nanopartikeln und/oder Mikropartikeln, besonders bevorzugt die wenigstens eine Monolage von Nanopartikeln und/oder Mikropartikeln, jeweils mit wenigstens einer Clean-Coat-Schicht beschichtet, umfasst diese vorzugsweise ein Material mit oleophoben und hydrophoben Eigenschaften, wie beispielsweise in EP 1 392 613 A1 offenbart, auf dem Wasser einen Kontaktwinkel von mehr als 90°, bevorzugt von mehr als 100° und besonders bevorzugt mehr als 110° einnimmt. Die wenigstens eine Clean-Coat-Schicht umfasst besonders bevorzugt eine fluororganische Schicht mit kovalenter Anbindung an das Substrat gemäß DE 198 48 591 A1, Anspruch 1, oder eine Schicht auf Basis von Perfluorpolyethern. Nach Entfernen der Nanopartikel und/oder Mikropartikel umfasst die zu beschichtende Oberfläche die wenigstens einen Clean-Coat-Schicht nur in denjenigen Teilbereichen der zu beschichtenden Oberfläche, welche während der Beschichtung mit der wenigstens einen Clean-Coat-Schicht nicht mit Nanopartikeln und/oder Mikropartikeln maskiert und/oder während der Beschichtung mit der wenigstens einen Clean-Coat-Schicht nicht von Nanopartikeln und/oder Mikropartikeln abgeschattet waren. Bei der zu beschichtenden Oberfläche kann es sich um wenigstens eine Entspiegelungsschicht, wenigstens eine optisch fertig bearbeitete Fläche des Brillenglas-Halbfertigprodukts oder des fertigen Brillenglases und/oder wenigstens wenigstens eine nicht mit einem Brillenglas-Halbfertigprodukt, nicht mit einem fertiges Brillenglas oder nicht mit wenigstens einer Kunststofffolie verbundene Oberfläche eines Dünnstglases handeln.

Die Entfernung der Nanopartikel und/oder Mikropartikel kann durch Abwaschen der hiermit belegten Oberfläche mit wenigstens einem Lösungsmittel erfolgen. Bei dem Lösungsmittel kann es sich hierbei um Wasser, einen Alkohol, wie beispielsweise Ethanol oder Isopropanol, oder um ein organisches Lösungsmittel, wie beispielsweise Aceton, Toluol, Pentanon oder Hexan, handeln.

Mit den Beschreibungen Entfernen der Nanopartikel und/oder Mikropartikel, Maskierung durch Nanopartikel und/oder Mikropartikel, Abschattung durch Nanopartikel und/oder Mikropartikel ist im Rahmen dieser Erfindung auch das Entfernen von, die Maskierung bzw. die Abschattung durch wenigstens einen Nanopartikel und/oder wenigstens einen Mikropartikel sowie das Entfernen von, die Maskierung bzw. die Abschattung durch einen einzigen Nanopartikel und/oder einen einzigen Mikropartikel umfasst.

Die maximale Schichtdicke der wenigstens einen Schicht, mit welcher die wenigstens eine Lage von Nanopartikeln und/oder Mikropartikeln beschichtet wird, ist bevorzugt kleiner als die mittlere Partikelgröße der in der wenigstens einen Lage vorliegenden Nanopartikel und/oder Mikropartikel. Umfasst die wenigstens eine Lage Nanopartikel und/oder Mikropartikel unterschiedlicher mittlerer Partikelgröße ist die mittlere Schichtdicke der wenigstens einen Schicht bevorzugt kleiner als die mittlere Partikelgröße der kleinsten Nanopartikel und/oder Mikropartikel der wenigstens einen Lage von Nanopartikeln und/oder Mikropartikeln. Bevorzugt beträgt die maximale Schichtdicke der wenigstens einen Schicht, mit welcher die wenigstens eine Lage von Nanopartikeln und/oder Mikropartikeln beschichtet wird, 75%, bevorzugt 50%, jeweils der mittleren Partikelgröße der in der wenigstens einen Lage vorliegenden kleinsten Nanopartikel und/oder Mikropartikel. Weiterhin bevorzugt beträgt die minimale Schichtdicke der wenigstens einen Schicht, mit welcher die wenigstens eine Lage von Nanopartikeln und/oder Mikropartikeln beschichtet wird, wenigstens 1 nm, bevorzugt wenigstens 2 nm. Die minimale und maximale Schichtdicke der wenigstens einen Schicht wird bevorzugt mittels einer rasterelektronenmikroskopischen Querschliffaufnahme bestimmt.

Die Oberfläche des Substrats kann ausgehend von der Oberfläche des Substrats wenigstens eine polarisierende Schicht, wenigstens eine farbgebende Schicht, wenigstens eine photochrome Schicht, wenigstens eine Hartlackschicht, wenigstens eine Entspiegelungsschicht und/oder wenigstens eine Clean-Coat-Schicht oder wenigstens eine Antibeschlagsschicht umfassen. Bei der Oberfläche des Substrats kann es sich um die optisch fertig bearbeitete Fläche des Brillenglas-Halbfertigprodukts oder des fertigen Brillenglases oder um die zu beschichtende Oberfläche eines Dünnstglases handeln. In vorstehend genannter Schichtenfolge ist die wenigstens Clean-Coat-Schicht oder die wenigstens eine Antibeschlagsschicht die am weitesten von der Oberfläche des Substrats entfernte Schicht. Die vorstehend genannte Schichtenfolge muss nicht jede Schicht der aufgeführten Schichten umfassen. Die vorstehend genannte Schichtenfolge kann sowohl auf der Vorderfläche als auch auf der Rückfläche des Substrats vorliegen, wobei die Schichtenfolge auf der Vorderfläche und auf der Rückfläche gleich oder verschieden voneinander sein kann. Jede der vorstehend genannten Schichten kann mit wenigstens einer Lage von Nanopartikeln und/oder Mikropartikeln belegt werden und diese wenigstens eine Lage von Nanopartikeln und/oder Mikropartikeln kann mit wenigstens einer der vorstehend genannten Schichten beschichtet werden, wobei bevorzugt die vorstehend genannte Schichtenfolge berücksichtigt wird. Wird die wenigstens eine Lage von Nanopartikeln und/oder Mikropartikeln mit wenigstens einer der vorstehend genannten Schichten beschichtet, beträgt deren minimale Schichtdicke bevorzugt wenigstens 1 nm und deren maximale Schichtdicke bevorzugt 75% der mittleren Partikelgröße der kleinsten Nanopartikel und/oder Mikropartikel der Lage. Wird die wenigstens eine Schicht nicht zur Beschichtung von wenigstens einer Lage von Nanopartikeln und/oder Mikropartikeln genutzt, gilt die Begrenzung für die maximale Schichtdicke nicht. Beispielsweise kann eine Entspiegelungsschicht dann eine Gesamtschichtdicke bevorzugt aus einem Bereich von 97 nm bis 2000 nm, weiter bevorzugt aus einem Bereich von 112 nm bis 1600 nm, weiter bevorzugt aus einem Bereich von 121 nm bis 1110 nm, besonders bevorzugt aus einem Bereich von 132 nm bis 760 nm und ganz besonders bevorzugt aus einem Bereich von 139 nm bis 496 nm oder eine Hartlackschicht eine mittlere Schichtdicke bevorzugt aus einem Bereich von 0,6 µm bis 7,1 µm, weiter bevorzugt aus einem Bereich von 0,8 µm bis 6,6 µm, besonders bevorzugt aus einem Bereich von 1,1 µm bis 5,8 µm und ganz besonders bevorzugt aus einem Bereich von 1,6 µm bis 4,9 µm aufweisen. Die Gesamtschichtdicke der Entspieglungsschicht und die mittlere Schichtdicke der Hartlackschicht werden jeweils bevorzugt anhand einer rasterelektronenmikroskopischen Querschliffaufnahme bestimmt.

Anstelle oder zusätzlich zur Belegung der zu beschichtenden Oberfläche mit wenigstens einer Lage von Nanopartikeln und/oder Mikropartikeln können auf die zu beschichtende Oberfläche mittels einer Tintenstrahltinte einzelne Tröpfchen aufgebracht werden, die mit wenigstens einer Schicht beschichtet werden können. Nach Entfernen der Nanopartikel und/oder Mikropartikel und/oder der Tintenstrahltintentröpfchen kann die so erhaltene Oberfläche mit wenigstens einer weiteren Schicht beschichtet werden. Die hierfür einzusetzende Tintenstrahltinte kann beispielsweise wenigstens ein Wachs und/oder wenigstens ein Ormocer umfassen. Des Weiteren kann die einzusetzende Tintenstrahltinte Ormocer, Ormocore, Ormoclad, Ormoclear, Epoclad, Positiv-Photoresiste und/oder Negativ-Photoresiste, jeweils Firma Microresist GmbH umfassen. Alternativ kann anstelle einer Tintenstrahltinte ein UV-härtbarer und/oder thermisch härtbarer Lack eingesetzt werden.

Bei einer bevorzugten Ausführungsform der Erfindung wird eine unbeschichtete zu beschichtende Oberfläche, also eine unbeschichtete optisch fertig bearbeitete Fläche des Brillenglas-Halbfertigprodukts oder des fertigen Brillenglases oder eine unbeschichtete außenliegende Oberfläche eines Dünnstglases, mit wenigstens einer Lage von Nanopartikeln und/oder Mikropartikeln belegt, diese wenigstens eine Lage von Nanopartikeln und/oder Mikropartikeln mit wenigstens einer Entspiegelungsschicht und/oder mit wenigstens einer Clean-Coat-Schicht beschichtet und abschließend die Nanopartikel und/oder Mikropartikel aus der wenigstens einen Entspiegelungsschicht und/oder mit wenigstens einen Clean-Coat-Schicht entfernt. Die unbeschichtete zu beschichtende Oberfläche kann die Vorderfläche und/oder die Rückfläche des Substrats sein.

Bei einer weiteren bevorzugten Ausführungsform der Erfindung wird eine mit wenigstens einer Entspiegelungsschicht belegte, zu beschichtende Oberfläche, mit wenigstens einer Lage von Nanopartikeln und/oder Mikropartikeln belegt, diese wenigstens eine Lage von Nanopartikeln und/oder Mikropartikeln mit wenigstens einer Entspiegelungsschicht und/oder mit wenigstens einer Clean-Coat-Schicht beschichtet und abschließend die Nanopartikel und/oder Mikropartikel aus der wenigstens einen Entspiegelungsschicht und/oder mit wenigstens einen Clean-Coat-Schicht entfernt. Die mit wenigstens einer Entspiegelungsschicht belegte, zu beschichtende Oberfläche kann die Vorderfläche und/oder die Rückfläche des Substrats sein.

Bei einer weiteren Ausführungsform der Erfindung werden die Nanopartikel und/oder Mikropartikel nicht entfernt. Insbesondere bei der Verwendung von Janus-Partikeln werden diese mit wenigstens einer Schicht beschichtet und nicht wieder aus dieser wenigstens einen Schicht entfernt. Es ist auch möglich, Janus-Partikel und andere Nanopartikel und/oder Mikropartikel auf derselben Oberfläche des Substrats oder auf verschiedenen Oberflächen des Substrats, wobei nur die anderen Nanopartikel und/oder Mikropartikel wieder entfernt werden. Beispielsweise kann die zu beschichtende Oberfläche der Rückfläche wenigstens eine Lage aus Janus-Partikel und die zu beschichtende Oberfläche der Vorderfläche wenigstens eine Lage aus anderen Nanopartikel und/oder Mikropartikel umfassen. Nach Beschichten beider Lagen mit wenigstens einer Schicht, werden dann bevorzugt nur die anderen Nanopartikel und/oder Mikropartikel wieder entfernt.
Werden beispielsweise Nanopartikel und/oder Mikropartikel basierend auf wenigstens einem Metall nicht wieder entfernt, können diese, sofern sie nur mit wenigstens einer sehr dünnen Schicht beschichtet werden, ihren metallischen Glanz der Beschichtung verleihen. Gleiches gilt für eingefärbte Nanopartikel und/oder Mikropartikel, deren Farbe dann der Beschichtung innewohnt.

Die Erfindung soll anhand nachfolgender Beispiele näher erläutert werden.

### Herstellung der erfindungsgemäßen Brillengläser

Für die Herstellung der erfindungsgemäßen Beispiele wurde als Entspiegelungsschicht die in EP 2 437 084 A1, in den Figuren 3 und 5, jeweils die zwischen der superhydrohoben Schicht und der Hartlackschicht aufgezeigte Entspiegelungsschicht mit der dort aufgeführten Schichtenfolge und Schichtdicke eingesetzt. Auf der Vorderfläche ist die dort jeweils an die Hartlackschicht angrenzende Schicht augenseitig und die jeweils an die superhydrophobe Schicht angrenzende Schicht objektseitig angeordnet. Als Clean-Coat-Schicht wurde die in DE 198 48 591 A1, Beispiel 1, offenbarte Wirksubstanz eingesetzt. Als Hartlackschicht wurde die in EP 2 578 649 A1, Beispiel 2 offenbarte Schicht eingesetzt.

### Beispiel 1

Es wurde ein unbeschichtetes Substrat, basierend auf Diallyldiglycolcarbonat mit einem Brechungsindex n_{D} = 1,5, Firma Carl Zeiss Vision GmbH, für 180 Sekunden mit Plasma, Firma Pink GmbH, Plasma-System V80-G, aktiviert. Anschließend wurden 100µL einer 10 Gew.-%igen wässrigen Polystyrol-Mikropartikelsuspension, mittlere Partikelgröße der Polystyrol Mikropartikel: 5 µm, Firma Merck KGaA, 1:1 mit demineralisiertem Wasser verdünnt und auf der Vorderfläche des mit Plasma voraktivierten Substrates homogen verteilt. Hierzu wurde das Substrat in kreisförmigen Bewegungen bewegt. Zum Trocknen der Mikropartikelsuspension auf der Vorderfläche des Substrates wurde das Substrat auf den multifunktionalen 3D-Schüttler PS-M3D, Firma Grant Instruments, gelegt, welcher sich solange drehte, bis die Mikropartikelsuspension auf der Vorderfläche des Substrates getrocknet war. Es wurde auf der Vorderfläche des Substrats eine Monolage aus Mikropartikeln erhalten, welche anschließend mit einer Entspiegelungsschicht mit einer Gesamtschichtdicke von 200 nm und einer Clean-Coat-Schicht überbeschichtet wurde. Die Mikropartikel wurden durch Abspülen der Vorderfläche des Substrats mit demineralisiertem Wasser entfernt. Es wurde ein Brillenglas erhalten, welches auf der Vorderfläche eine mikrostrukturierte Schicht aufwies.

### Beispiel 2

Es wurde ein mit einer Hartlackschicht beschichtetes Substrat, basierend auf Diallyldiglycolcarbonat mit einem Brechungsindex n_{D} = 1,5, Firma Carl Zeiss Vision GmbH, für 180 Sekunden mit Plasma, Firma Pink GmbH, Plasma-System V80-G, aktiviert. Anschließend wurden 100µL einer 10 Gew.-%igen wässrigen Polystyrol-Mikropartikelsuspension, mittlere Partikelgröße der Polystyrol Mikropartikel: 5 µm, Firma Merck KGaA, 1:1 mit Ethanol zur Analyse verdünnt und auf der Vorderfläche des mit Plasma voraktivierten Substrates homogen verteilt. Hierzu wurde das Substrat in kreisförmigen Bewegungen bewegt. Zum Trocknen der Mikropartikelsuspension auf der Vorderfläche des Substrates, wurde das Substrat auf den multifunktionalen 3D-Schüttler, PS-M3D, Firma Grant Instruments gelegt, welcher sich solange drehte, bis die Mikropartikelsuspension auf der Vorderfläche des Substrates getrocknet war. Es wurde auf der Vorderfläche des Substrats eine Monolage aus Mikropartikeln erhalten, welche anschließend mit einer Entspiegelungsschicht mit einer Gesamtschichtdicke von 180 nm und einer Clean-Coat-Schicht überbeschichtet wurde. Die Mikropartikel wurden durch Abspülen der Vorderfläche des Substrats mit demineralisiertem Wasser entfernt. Es wurde ein Brillenglas erhalten, welches auf der Vorderfläche eine mikrostrukturierte Schicht aufwies.

### Beispiel 3

Es wurde ein mit einer Entspiegelungsschicht beschichtetes Substrat, basierend auf Diallyldiglycolcarbonat mit einem Brechungsindex n_{D} = 1,5, Firma Carl Zeiss Vision GmbH, für 180 Sekunden mit Plasma, Pink GmbH, Plasma-System V80-G, aktiviert. Anschließend wurden 100µL einer wässrigen 10 Gew.-%igen Polystyrol-Mikropartikelsuspension mit einer mittleren Partikelgröße der Polystyrol Mikropartikel von 5 µm, Firma Merck KGaA, 1:1 mit Methanol zur Analyse verdünnt und auf der Vorderfläche des mit Plasma voraktivierten Substrates homogen verteilt. Hierzu wurde das Substrat in kreisförmigen Bewegungen bewegt. Zum Trocknen der Mikropartikelsuspension auf der Vorderfläche des Substrates, wurde das Substrat auf den multifunktionalen 3D-Schüttler, PS-M3D, Firma Grant Instruments gelegt, welcher sich solange drehte, bis die Mikropartikelsuspension auf der Vorderfläche des Substrates getrocknet war. Es wurde auf der Vorderfläche des Substrats eine Monolage aus Mikropartikeln erhalten, welche anschließend mit einer Entspiegelungsschicht mit einer Gesamtschichtdicke von 160 nm und einer Clean-Coat-Schicht überbeschichtet wurde. Die Mikropartikel wurden durch Abspülen der Vorderfläche des Substrats mit demineralisiertem Wasser entfernt. Es wurde ein Brillenglas erhalten, welches auf der Vorderfläche eine mikrostrukturierte Schicht aufwies.

### Beispiel 4

Es wurde ein unbeschichtetes Substrat, basierend auf Diallyldiglycolcarbonat mit einem Brechungsindex n_{D} = 1,5, Firma Carl Zeiss Vision GmbH, für 180 Sekunden mit Plasma, Firma Pink GmbH, Plasma-System V80-G, aktiviert. Anschließend wurden 100µL einer 10 Gew.-%igen wässrigen Polystyrol-Mikropartikelsuspension, mittlere Partikelgröße der Polystyrol Mikropartikel: 5 µm, Firma Merck KGaA, 1:1 mit demineralisiertem Wasser verdünnt und auf der Vorderfläche des mit Plasma voraktivierten Substrates homogen verteilt. Hierzu wurde das Substrat in kreisförmigen Bewegungen bewegt. Zum Trocknen der Mikropartikelsuspension auf der Vorderfläche des Substrates wurde das Substrat auf den multifunktionalen 3D-Schüttler PS-M3D, Firma Grant Instruments, gelegt, welcher sich solange drehte, bis die Mikropartikelsuspension auf der Vorderfläche des Substrates getrocknet war. Es wurde auf der Vorderfläche des Substrats eine Monolage aus Mikropartikeln erhalten, welche anschließend mit einer Chromschicht mit einer mittleren Schichtdicke von 50 nm und einer Clean-Coat-Schicht überbeschichtet wurde. Die Mikropartikel wurden durch Abspülen der Vorderfläche des Substrats mit demineralisiertem Wasser entfernt. Es wurde ein Brillenglas erhalten, welches auf der Vorderfläche eine mikrostrukturierte Schicht aufwies.

### Beispiel 5

Es wurde ein mit einer Hartlackschicht beschichtetes Substrat, basierend auf Diallyldiglycolcarbonat mit einem Brechungsindex n_{D} = 1,5, Firma Carl Zeiss Vision GmbH, für 180 Sekunden mit Plasma, Firma Pink GmbH, Plasma-System V80-G, aktiviert. Anschließend wurden 50 µL einer 10 Gew.-%igen wässrigen Polystyrol-Mikropartikelsuspension, mittlere Partikelgröße der Polystyrol Mikropartikel: 5 µm, und 50 µL einer 10 Gew.-%igen wässrigen Polystyrol-Mikropartikelsuspension, mittlere Partikelgröße der Polystyrol Mikropartikel: 1 µm, jeweils Firma Merck KGaA, auf der Vorderfläche des mit Plasma voraktivierten Substrates homogen verteilt. Hierzu wurde das Substrat in kreisförmigen Bewegungen bewegt. Zum Trocknen der Mikropartikelsuspension auf der Vorderfläche des Substrates wurde das Substrat auf den multifunktionalen 3D-Schüttler PS-M3D, Firma Grant Instruments, gelegt, welcher sich solange drehte, bis die Mikropartikelsuspension auf der Vorderfläche des Substrates getrocknet war. Es wurde auf der Vorderfläche des Substrats eine Monolage aus Mikropartikeln erhalten, welche anschließend mit einer Entspiegelungsschicht mit einer Gesamtschichtdicke von 140 nm und einer Clean-Coat-Schicht überbeschichtet wurde. Die Mikropartikel wurden durch Abspülen der Vorderfläche des Substrats mit demineralisiertem Wasser entfernt. Es wurde ein Brillenglas erhalten, welches auf der Vorderfläche eine mikrostrukturierte Schicht aufwies.

### Beispiel 6

Es wurde ein mit einer Hartlackschicht beschichtetes Substrat, basierend auf Diallyldiglycolcarbonat mit einem Brechungsindex n_{D} = 1,5, Firma Carl Zeiss Vision GmbH, für 180 Sekunden mit Plasma, Firma Pink GmbH, Plasma-System V80-G, aktiviert. Anschließend wurden 100µL einer 1:1 Mikropartikelsuspension, basierend Polystyrol-Mikropartikeln mit einer mittleren Partikelgröße von 5 µm, welche 10 Gew.-%ig in Wasser vorlagen und ebenfalls basierend auf Siliziumoxid-Nanopartikeln mit einer mittleren Partikelgröße von 200 nm, welche 10 Gew.-%ig in Ethanol vorlagen, jeweils von der Firma Merck KGaA, auf der Vorderfläche des mit Plasma voraktivierten Substrates homogen verteilt. Hierzu wurde das Substrat in kreisförmigen Bewegungen bewegt. Zum Trocknen der Mikropartikelsuspension auf der Vorderfläche des Substrates wurde das Substrat auf den multifunktionalen 3D-Schüttler PS-M3D, Firma Grant Instruments, gelegt, welcher sich solange drehte, bis die Mikropartikelsuspension auf der Vorderfläche des Substrates getrocknet war. Es wurde auf der Vorderfläche des Substrats eine Monolage aus Nanopartikel und Mikropartikeln erhalten, welche anschließend mit einer Entspiegelungsschicht mit einer Gesamtschichtdicke von 120 nm und einer Clean-Coat-Schicht überbeschichtet wurde. Die Mikropartikel wurden durch Abspülen der Vorderfläche des Substrats mit demineralisiertem Wasser entfernt. Es wurde ein Brillenglas erhalten, welches auf der Vorderfläche eine nano- und mikrostrukturierte Schicht aufwies.

### Beispiel 7

Es wurde ein unbeschichtetes Substrat, basierend auf Diallyldiglycolcarbonat mit einem Brechungsindex n_{D} = 1,5, Firma Carl Zeiss Vision GmbH, für 180 Sekunden mit Plasma, Firma Pink GmbH, Plasma-System V80-G, aktiviert. Anschließend wurden 100µL einer 10 Gew.-%igen wässrigen Polystyrol-Mikropartikelsuspension, mittlere Partikelgröße der Polystyrol Mikropartikel: 5 µm, Firma Merck KGaA, auf der Vorderfläche des mit Plasma voraktivierten Substrates homogen verteilt. Hierzu wurde das Substrat in kreisförmigen Bewegungen bewegt. Zum Trocknen der Mikropartikelsuspension auf der Vorderfläche des Substrates wurde das Substrat auf den multifunktionalen 3D-Schüttler PS-M3D, Firma Grant Instruments, gelegt, welcher sich solange drehte, bis die Mikropartikelsuspension auf der Vorderfläche des Substrates getrocknet war. Es wurde auf der Vorderfläche des Substrats eine Monolage aus Mikropartikeln erhalten, welche anschließend mit einer Siliziumdioxidschicht mit einer mittleren Schichtdicke von 100 nm überbeschichtet wurde. Die Mikropartikel wurden durch Abspülen der Vorderfläche des Substrats mit demineralisiertem Wasser entfernt. Es wurde ein Brillenglas erhalten, welches auf der Vorderfläche eine mikrostrukturierte Schicht aufwies.

### Beispiel 8

Es wurde ein mit einer Entspiegelungsschicht beschichtetes Substrat, basierend auf Diallyldiglycolcarbonat mit einem Brechungsindex n_{D} = 1,5, Firma Carl Zeiss Vision GmbH, mit einer Tintenstrahltinte auf Wachsbasis mit einem Wabenmuster bedruckt und für 180 Sekunden mit Plasma, Pink GmbH, Plasma-System V80-G, aktiviert. Anschließend wurden 100µL einer 10 Gew.-%igen wässrigen Polystyrol-Mikropartikelsuspension, mittlere Partikelgröße der Polystyrol Mikropartikel: 1 µm, Firma Merck KGaA, auf der Vorderfläche des mit Plasma voraktivierten Substrates homogen verteilt. Hierzu wurde das Substrat in kreisförmigen Bewegungen bewegt. Zum Trocknen der Mikropartikelsuspension auf der Vorderfläche des Substrates wurde das Substrat auf den multifunktionalen 3D-Schüttler PS-M3D, Firma Grant Instruments, gelegt, welcher sich solange drehte, bis die Mikropartikelsuspension auf der Vorderfläche des Substrates getrocknet war. Es wurde auf der Vorderfläche des Substrats eine Monolage aus Mikropartikeln erhalten, welche anschließend mit einer Siliziumdioxidschicht mit einer mittleren Schichtdicke von 100 nm überbeschichtet wurde. Die Mikropartikel wurden durch Abspülen der Vorderfläche des Substrats mit demineralisiertem Wasser entfernt. Es wurde ein Brillenglas erhalten, welches auf der Vorderfläche eine mikrostrukturierte Schicht aufwies.

### Beispiel 9

Es wurde ein mit einer Hartlackschicht beschichtetes Substrat, basierend auf Diallyldiglycolcarbonat mit einem Brechungsindex n_{D} = 1,5, Firma Carl Zeiss Vision GmbH, für 180 Sekunden mit Plasma, Firma Pink GmbH, Plasma-System V80-G, aktiviert. Anschließend wurden 100µL einer 10 Gew.-%igen wässrigen Polystyrol-Nanopartikelsuspension, mittlere Partikelgröße der Polystyrol Nanopartikel: 200 nm, Firma Merck KGaA, auf der Vorderfläche des mit Plasma voraktivierten Substrates homogen verteilt. Hierzu wurde das Substrat in kreisförmigen Bewegungen bewegt. Zum Trocknen der Nanopartikelsuspension auf der Vorderfläche des Substrates wurde das Substrat auf den multifunktionalen 3D-Schüttler PS-M3D, Firma Grant Instruments, gelegt, welcher sich solange drehte, bis die Nanopartikelsuspension auf der Vorderfläche des Substrates getrocknet war. Es wurde auf der Vorderfläche des Substrats eine Monolage aus Nanopartikeln erhalten, welche anschließend mit einer Titandioxidschicht mit einer mittleren Schichtdicke von 100 nm überbeschichtet wurde. Die Mikropartikel wurden durch Abspülen der Vorderfläche des Substrats mit demineralisiertem Wasser entfernt. Es wurde ein Brillenglas erhalten, welches auf der Vorderfläche eine nanostrukturierte Schicht aufwies.

### Beispiel 10

Es wurde ein mit einer Clean-Coat beschichtetes Substrat, basierend auf Diallyldiglycolcarbonat mit einem Brechungsindex n_{D} = 1,5, Firma Carl Zeiss Vision GmbH, für 180 Sekunden mit Plasma, Pink GmbH, Plasma-System V80-G, aktiviert. Anschließend wurden 100µL einer 10 Gew.-%igen wässrigen Polystyrol-Mikropartikelsuspension, mittlere Partikelgröße der Polystyrol Mikropartikel: 5 µm, Firma Merck KGaA, auf der Vorderfläche des mit Plasma voraktivierten Substrates homogen verteilt. Hierzu wurde das Substrat in kreisförmigen Bewegungen bewegt. Zum Trocknen der Mikropartikelsuspension auf der Vorderfläche des Substrates wurde das Substrat auf den multifunktionalen 3D-Schüttler PS-M3D, Firma Grant Instruments, gelegt, welcher sich solange drehte, bis die Mikropartikelsuspension auf der Vorderfläche des Substrates getrocknet war. Es wurde auf der Vorderfläche des Substrats eine Monolage aus Mikropartikeln erhalten, welche anschließend mit einer Chromschicht mit einer mittleren Schichtdicke von 27 nm überbeschichtet wurde. Die Mikropartikel wurden durch Abspülen der Vorderfläche des Substrats mit demineralisiertem Wasser entfernt. Es wurde ein Brillenglas erhalten, welches auf der Vorderfläche eine mikrostrukturierte Schicht aufwies.

### Beispiel 11

Es wurde ein mit einem Teil einer Entspiegelungsschicht beschichtetes Substrat, basierend auf Diallyldiglycolcarbonat mit einem Brechungsindex n_{D} = 1,5, Firma Carl Zeiss Vision GmbH, für 180 Sekunden mit Plasma, Pink GmbH, Plasma-System V80-G, aktiviert. Anschließend wurden 100µL einer wässrigen 10 Gew.-%igen Polystyrol-Mikropartikelsuspension mit einer mittleren Partikelgröße der Polystyrol Mikropartikel von 200 nm, Firma Merck KGaA auf der Vorderfläche des mit Plasma voraktivierten Substrates homogen verteilt. Hierzu wurde das Substrat in kreisförmigen Bewegungen bewegt. Zum Trocknen der Mikropartikelsuspension auf der Vorderfläche des Substrates, wurde das Substrat auf den multifunktionalen 3D-Schüttler, PS-M3D, Firma Grant Instruments gelegt, welcher sich solange drehte, bis die Mikropartikelsuspension auf der Vorderfläche des Substrates getrocknet war. Es wurde auf der Vorderfläche des Substrats eine Monolage aus Mikropartikeln erhalten, welche anschließend mit dem restlichen Teil einer Entspiegelungsschicht mit einer Gesamtschichtdicke von 160 nm überbeschichtet wurde. Die Mikropartikel wurden durch Abspülen der Vorderfläche des Substrats mit demineralisiertem Wasser entfernt. Es wurde ein Brillenglas erhalten, welches auf der Vorderfläche eine mikrostrukturierte Schicht aufwies.

### Beispiel 12

Es wurde ein mit einem Teil einer Entspiegelungsschicht beschichtetes Substrat, basierend auf Diallyldiglycolcarbonat mit einem Brechungsindex n_{D} = 1,5, Firma Carl Zeiss Vision GmbH, für 180 Sekunden mit Plasma, Pink GmbH, Plasma-System V80-G, aktiviert. Anschließend wurden 100µL einer wässrigen 10 Gew.-%igen Polystyrol-Mikropartikelsuspension mit einer mittleren Partikelgröße der Polystyrol Mikropartikel von 200 nm, Firma Merck KGaA auf der Vorderfläche des mit Plasma voraktivierten Substrates homogen verteilt. Hierzu wurde das Substrat in kreisförmigen Bewegungen bewegt. Zum Trocknen der Mikropartikelsuspension auf der Vorderfläche des Substrates, wurde das Substrat auf den multifunktionalen 3D-Schüttler, PS-M3D, Firma Grant Instruments gelegt, welcher sich solange drehte, bis die Mikropartikelsuspension auf der Vorderfläche des Substrates getrocknet war. Es wurde auf der Vorderfläche des Substrats eine Monolage aus Mikropartikeln erhalten, welche anschließend mit dem restlichen Teil einer Entspiegelungsschicht mit einer Gesamtschichtdicke von 160 nm und einer Clean-Coat-Schicht überbeschichtet wurde. Die Mikropartikel wurden durch Abspülen der Vorderfläche des Substrats mit demineralisiertem Wasser entfernt. Es wurde ein Brillenglas erhalten, welches auf der Vorderfläche eine mikrostrukturierte Schicht aufwies.

### Beispiel 13

Es wurde ein mit einer Entspiegelungsschicht beschichtetes Substrat, basierend auf Diallyldiglycolcarbonat mit einem Brechungsindex n_{D} = 1,5, Firma Carl Zeiss Vision GmbH, für 180 Sekunden mit Plasma, Pink GmbH, Plasma-System V80-G, aktiviert. Anschließend wurden 100µL einer wässrigen 10 Gew.-%igen Polystyrol-Mikropartikelsuspension mit einer mittleren Partikelgröße der Polystyrol Mikropartikel von 200 nm, Firma Merck KGaA auf der Vorderfläche des mit Plasma voraktivierten Substrates homogen verteilt. Hierzu wurde das Substrat in kreisförmigen Bewegungen bewegt. Zum Trocknen der Mikropartikelsuspension auf der Vorderfläche des Substrates, wurde das Substrat auf den multifunktionalen 3D-Schüttler, PS-M3D, Firma Grant Instruments gelegt, welcher sich solange drehte, bis die Mikropartikelsuspension auf der Vorderfläche des Substrates getrocknet war. Es wurde auf der Vorderfläche des Substrats eine Monolage aus Mikropartikeln erhalten, welche anschließend mit der Clean-Coat-Schicht überbeschichtet wurde. Die Mikropartikel wurden durch Abspülen der Vorderfläche des Substrats mit demineralisiertem Wasser entfernt. Diese mikrostrukturierte Schicht aus einer Clean-Coat-Schicht, wurde nochmals mit einer Clean-Coat-Schicht überbeschichtet. Es wurde ein Brillenglas erhalten, welches auf der Vorderfläche eine mikrostrukturierte Schicht aufwies.

### Beispiel 14

Es wurde ein mit einer Entspiegelungsschicht beschichtetes Substrat, basierend auf Diallyldiglycolcarbonat mit einem Brechungsindex n_{D} = 1,5, Firma Carl Zeiss Vision GmbH, für 180 Sekunden mit Plasma, Pink GmbH, Plasma-System V80-G, aktiviert. Anschließend wurden 100µL einer wässrigen 10 Gew.-%igen Polystyrol-Mikropartikelsuspension mit einer mittleren Partikelgröße der Polystyrol Mikropartikel von 200 nm, Firma Merck KGaA auf der Vorderfläche des mit Plasma voraktivierten Substrates homogen verteilt. Hierzu wurde das Substrat in kreisförmigen Bewegungen bewegt. Zum Trocknen der Mikropartikelsuspension auf der Vorderfläche des Substrates, wurde das Substrat auf den multifunktionalen 3D-Schüttler, PS-M3D, Firma Grant Instruments gelegt, welcher sich solange drehte, bis die Mikropartikelsuspension auf der Vorderfläche des Substrates getrocknet war. Es wurde auf der Vorderfläche des Substrats eine Monolage aus Mikropartikeln erhalten, welche anschließend mit der Clean-Coat-Schicht überbeschichtet wurde. Die Mikropartikel wurden durch Abspülen der Vorderfläche des Substrats mit demineralisiertem Wasser entfernt. Es wurde ein Brillenglas erhalten, welches auf der Vorderfläche eine mikrostrukturierte Schicht aufwies.

### Beispiel 15

Es wurde ein unbeschichtetes Substrat, basierend auf Diallyldiglycolcarbonat mit einem Brechungsindex n_{D} = 1,5, Firma Carl Zeiss Vision GmbH, für 180 Sekunden mit Plasma, Firma Pink GmbH, Plasma-System V80-G, aktiviert. Anschließend wurden 100µL einer 10 Gew.-%igen wässrigen Polystyrol-Mikropartikelsuspension, mittlere Partikelgröße der Polystyrol Mikropartikel: 200 nm, Firma Merck KGaA auf der Vorderfläche des mit Plasma voraktivierten Substrates homogen verteilt. Hierzu wurde das Substrat in kreisförmigen Bewegungen bewegt. Zum Trocknen der Mikropartikelsuspension auf der Vorderfläche des Substrates wurde das Substrat auf den multifunktionalen 3D-Schüttler PS-M3D, Firma Grant Instruments, gelegt, welcher sich solange drehte, bis die Mikropartikelsuspension auf der Vorderfläche des Substrates getrocknet war. Es wurde auf der Vorderfläche des Substrats eine Monolage aus Mikropartikeln erhalten, auf dieser Vorderfläche wurden dann anschließend 5mL flüssiger Hartlack homogen verteilt. Die Hartlackschicht mit den Mikropartikeln wurde in einem Ofen getrocknet. Die Mikropartikel wurden durch tränken der Vorderfläche des Substrats mit Aceton entfernt. Es wurde ein Brillenglas erhalten, welches auf der Vorderfläche eine mikrostrukturierte Schicht aufwies.

### Beispiel 16

Es wurde ein mit einer Hartlackschicht beschichtetes Substrat, basierend auf Diallyldiglycolcarbonat mit einem Brechungsindex n_{D} = 1,5, Firma Carl Zeiss Vision GmbH, für 180 Sekunden mit Plasma, Firma Pink GmbH, Plasma-System V80-G, aktiviert. Anschließend wurden 100µL einer 10 Gew.-%igen wässrigen Polystyrol-Nanopartikelsuspension, mittlere Partikelgröße der Polystyrol Nanopartikel: 200 nm, Firma Merck KGaA, auf der Vorderfläche des mit Plasma voraktivierten Substrates homogen verteilt. Hierzu wurde das Substrat in kreisförmigen Bewegungen bewegt. Zum Trocknen der Nanopartikelsuspension auf der Vorderfläche des Substrates wurde das Substrat auf den multifunktionalen 3D-Schüttler PS-M3D, Firma Grant Instruments, gelegt, welcher sich solange drehte, bis die Nanopartikelsuspension auf der Vorderfläche des Substrates getrocknet war. Es wurde auf der Vorderfläche des Substrats eine Monolage aus Nanopartikeln erhalten, welche anschließend mit einer Entspiegelungsschicht mit einer Gesamtschichtdicke von 160 nm überbeschichtet wurde. Die Mikropartikel wurden durch Abspülen der Vorderfläche des Substrats mit demineralisiertem Wasser entfernt. Anschließend wurden 100µL einer 5 Gew.-%igen wässrigen Polystyrol-Nanopartikelsuspension, mittlere Partikelgröße der Polystyrol Nanopartikel: 20 nm, Firma Merck KGaA, auf der Vorderfläche des mit Plasma voraktivierten Substrates homogen auf der Monolage aus Nanopartikeln verteilt. Hierzu wurde das Substrat in kreisförmigen Bewegungen bewegt. Zum Trocknen der Nanopartikelsuspension auf der Vorderfläche des Substrates wurde das Substrat auf den multifunktionalen 3D-Schüttler PS-M3D, Firma Grant Instruments, gelegt, welcher sich solange drehte, bis die Nanopartikelsuspension auf der Vorderfläche des Substrates getrocknet war. Es wurde auf der Vorderfläche des Substrats eine Monolage aus Nanopartikeln auf der schon vorhandenen Monolage aus Nanopartikeln erhalten, welche anschließend mit einer Clean-Coat-Schicht überbeschichtet wurde. Die Mikropartikel wurden durch Abspülen der Vorderfläche des Substrats mit demineralisiertem Wasser entfernt. Es wurde ein Brillenglas erhalten, welches auf der Vorderfläche eine Beschichtung mit einer mikrostrukturierten und einer nanostrukturierten Schicht aufwies.

### Beispiel 17

Es wurde ein mit einer Hartlackschicht beschichtetes Substrat, basierend auf Diallyldiglycolcarbonat mit einem Brechungsindex n_{D} = 1,5, Firma Carl Zeiss Vision GmbH, für 180 Sekunden mit Plasma, Firma Pink GmbH, Plasma-System V80-G, aktiviert. Anschließend wurden 100µL einer 10 Gew.-%igen wässrigen Polystyrol-Nanopartikelsuspension, mittlere Partikelgröße der Polystyrol Nanopartikel: 200 nm, Firma Merck KGaA, auf der Vorderfläche des mit Plasma voraktivierten Substrates homogen verteilt. Hierzu wurde das Substrat in kreisförmigen Bewegungen bewegt. Zum Trocknen der Nanopartikelsuspension auf der Vorderfläche des Substrates wurde das Substrat auf den multifunktionalen 3D-Schüttler PS-M3D, Firma Grant Instruments, gelegt, welcher sich solange drehte, bis die Nanopartikelsuspension auf der Vorderfläche des Substrates getrocknet war. Es wurde auf der Vorderfläche des Substrats eine Monolage aus Nanopartikeln erhalten, welche anschließend mit einer Entspiegelungsschicht mit einer Gesamtschichtdicke von 160 nm überbeschichtet wurde. Die Mikropartikel wurden durch Abspülen der Vorderfläche des Substrats mit demineralisiertem Wasser entfernt. Anschließend wurden 100µL einer 5 Gew.-%igen wässrigen Polystyrol-Nanopartikelsuspension, mittlere Partikelgröße der Polystyrol Nanopartikel: 20 nm, Firma Merck KGaA, auf der Vorderfläche des mit Plasma voraktivierten Substrates homogen auf der Monolage aus Nanopartikeln verteilt. Hierzu wurde das Substrat in kreisförmigen Bewegungen bewegt. Zum Trocknen der Nanopartikelsuspension auf der Vorderfläche des Substrates wurde das Substrat auf den multifunktionalen 3D-Schüttler PS-M3D, Firma Grant Instruments, gelegt, welcher sich solange drehte, bis die Nanopartikelsuspension auf der Vorderfläche des Substrates getrocknet war. Es wurde auf der Vorderfläche des Substrats eine Monolage aus Nanopartikeln auf der schon vorhandenen Monolage aus Nanopartikeln erhalten, welche anschließend mit einer Clean-Coat-Schicht überbeschichtet wurde. Die Mikropartikel wurden durch Abspülen der Vorderfläche des Substrats mit demineralisiertem Wasser entfernt. Abschließend wurde nochmals mit einer Clean-Coat-Schicht überbeschichtet. Es wurde ein Brillenglas erhalten, welches auf der Vorderfläche eine Beschichtung mit einer mikrostrukturierten und einer nanostrukturierten Schicht aufwies.

## Patentansprüche

1. Verfahren zur Herstellung eines Brillenglases umfassend wenigstens ein Substrat und wenigstens eine nanostrukturierte und/oder mikrostrukturierte Schicht, wobei das Verfahren die folgenden Schritte umfasst:
a) Bereitstellen eines Substrats mit einer zu beschichtenden Oberfläche,
b) Maskieren oder Belegen der zu beschichtenden Oberfläche mit wenigstens einer Lage von Nanopartikeln und/oder Mikropartikeln,
c) Beschichten der wenigstens einen Lage von Nanopartikeln und/oder Mikropartikeln und der zu beschichtenden Oberfläche mit wenigstens einer Schicht,
d) Entfernen der Nanopartikel und/oder Mikropartikel aus der wenigstens einen Schicht aus Schritt c) unter Ausbildung einer Zwischenraumstruktur, welche sich auf der zu beschichtenden Oberfläche innerhalb der wenigstens einen Lage von Nanopartikeln und/oder Mikropartikeln nur an denjenigen Stellen ausbildet, an denen sich die Nanopartikel und/oder Mikropartikel nicht berühren,
e) optional Beschichten der nach Schritt d) erhaltenen nanostrukturierten und/oder mikrostrukturierten Schicht mit wenigstens einer weiteren Schicht, welche nicht identisch zu der wenigstens einen Schicht aus Schritt c) ist,
**dadurch gekennzeichnet, dass** die Zeit, welche das Brillenglas für das Erreichen von 90% des konstanten Gleichgewichtswerts der Wasseraufnahme und der Wasserabgabe in einer Atmosphäre mit einer Temperatur aus einem Bereich von 30°C bis 50°C und einer relativen Luftfeuchtigkeit aus einem Bereich von 86% bis 97% weniger als 10 Stunden länger ist als für das identische Substrat in identischer Atmosphäre.

2. Verfahren nach Anspruch 1, **dadurch gekennzeichnet, dass** das in Schritt a) bereitgestellte Substrat wenigstens ein polymeres Material und/oder ein mineralisches Glas umfasst.

3. Verfahren nach einem der vorstehenden Ansprüche, **dadurch gekennzeichnet, dass** die Zwischenraum struktur regelmäßig oder unregelmäßig ist.

4. Verfahren nach einem der vorstehenden Ansprüche, **dadurch gekennzeichnet, dass** die Form der Nanopartikel und/oder Mikropartikel kugelförmig, annähernd kugelförmig, stäbchenförmig, oval oder eine Mischform hiervon ist.

5. Verfahren nach einem der vorstehenden Ansprüche, **dadurch gekennzeichnet, dass** die Nanopartikel und/oder Mikropartikel in Mischung verschiedener Formen vorliegen.

6. Verfahren nach einem der vorstehenden Ansprüche, **dadurch gekennzeichnet, dass** die kugelförmigen oder annähernd kugelförmigen Nanopartikel und/oder Mikropartikel eine mittlere Partikelgröße aus einem Bereich von 3 nm bis 450 nm und die stäbchenförmigen oder ovalen Nanopartikel und/oder Mikropartikel eine Länge aus einem Bereich von 100 nm bis 1 µm und eine Breite aus einem Bereich von 15 nm bis 300 nm aufweisen.

7. Verfahren nach einem der vorstehenden Ansprüche, **dadurch gekennzeichnet, dass** die kugelförmigen oder annähernd kugelförmigen Nanopartikel und/oder Mikropartikel eine mittlere Partikelgröße aus einem Bereich 1 von 3 nm bis ≤ 50 nm und aus einem Bereich 2 von 50 nm bis 450 nm aufweisen.

8. Verfahren nach einem der vorstehenden Ansprüche, **dadurch gekennzeichnet, dass** die wenigstens eine Schicht aus Schritt c) aus der Gruppe bestehend aus wenigstens einer Hartlackschicht, wenigstens einer Entspiegelungsschicht, wenigstens einer Verspiegelungsschicht, wenigstens einer elektrisch leitfähigen Schicht, wenigstens einer elektrisch halbleitenden Schicht, wenigstens einer Clean-Coat-Schicht, wenigstens einer Antibeschlagsschicht, wenigstens einer photochromen Schicht, wenigstens einer polarisierenden Schicht und wenigstens einer farbgebenden Schicht ausgewählt ist.

9. Verfahren nach einem der vorstehenden Ansprüche, **dadurch gekennzeichnet, dass** die in Schritt d) erhaltene nanostrukturierte und/oder mikrostrukturierte Schicht als zu beschichtende Oberfläche für die Ausbildung wenigstens einer weiteren nanostrukturierten und/oder mikrostrukturierten Schicht dient.

10. Verfahren nach einem der vorstehenden Ansprüche, **dadurch gekennzeichnet, dass** die wenigstens eine Lage von Nanopartikeln und/oder Mikropartikeln zur Ausbildung der wenigstens einen weiteren nanostrukturierten und/oder mikrostrukturierten Schicht in Bezug auf die Form und/oder die mittlere Partikelgröße der Nanopartikel und/oder Mikropartikel gleich oder verschieden zu der wenigstens einen Lage von Nanopartikeln und/oder Mikropartikeln ist, welche zur Ausbildung der nanostrukturierten und/oder mikrostrukturierten Schicht der zu beschichtenden Oberfläche verwendet wurde.

11. Verfahren nach einem der vorstehenden Ansprüche, **dadurch gekennzeichnet, dass** die wenigstens eine Lage von Nanopartikeln und/oder Mikropartikeln eine Monolage oder eine Doppelschicht ist.

12. Verfahren nach einem der vorstehenden Ansprüche, **dadurch gekennzeichnet, dass** in einer Monolage wenigstens 50%, der Nanopartikel und/oder Mikropartikel auf der jeweils zu beschichtenden Oberfläche benachbart vorliegen.

13. Verfahren nach einem der vorstehenden Ansprüche, **dadurch gekennzeichnet, dass** die maximale Schichtdicke der wenigstens einen Schicht aus Schritt c), kleiner als die mittlere Partikelgröße der in der wenigstens einen Lage vorliegenden Nanopartikel und/oder Mikropartikel ist.

14. Verfahren nach einem der vorstehenden Ansprüche, **dadurch gekennzeichnet, dass** das Verfahren nach Schritt b) einen Schritt b') umfasst:
b') Eintrag hochfrequenter Energie in Gegenwart von Sauerstoff, Ozon, Tetrafluormethan und/oder Trifluormethan auf die wenigstens eine Lage von Nanopartikeln und/oder Mikropartikeln aus Schritt b).

15. Verfahren nach einem der vorstehenden Ansprüche 1 bis 14, **dadurch gekennzeichnet, dass** die zu beschichtende Oberfläche des Substrats eine beschichtete Oberfläche des Substrats ist.

## Claims

1. Method of producing a spectacle lens comprising at least one substrate and at least one nanostructured and/or microstructured layer, wherein the method comprises the following steps:
a) providing a substrate having a surface to be coated,
b) masking or covering the surface to be coated with at least one layer of nanoparticles and/or microparticles,
c) coating the at least one layer of nanoparticles and/or microparticles and the surface to be coated with at least one layer,
d) removing the nanoparticles and/or microparticles from the at least one layer from step c) to form an interspace structure that forms on the surface to be coated within the at least one layer of nanoparticles and/or microparticles only at those sites where the nanoparticles and/or microparticles are not in contact,
e) optionally coating the nanostructured and/or microstructured layer obtained after step d) with at least one further layer that is not identical to the at least one layer from step c),
**characterized in that** the time which the spectacle lens for the attainment of 90% of the constant equilibrium value of water absorption and water release in an atmosphere at a temperature from a range from 30°C to 50°C and a relative air humidity from a range from 86% to 97% is less than 10 hours longer than for the identical substrate in an identical atmosphere.

2. Method according to Claim 1, **characterized in that** the substrate provided in step a) comprises at least one polymeric material and/or a mineral glass.

3. Method according to either of the preceding claims, **characterized in that** the interspace structure is regular or irregular.

4. Method according to any of the preceding claims, **characterized in that** the shape of the nanoparticles and/or microparticles is spherical, approximately spherical, rod-shaped, oval or a mixed form thereof.

5. Method according to any of the preceding claims, **characterized in that** the nanoparticles and/or microparticles are in a mixture of various shapes.

6. Method according to any of the preceding claims, **characterized in that** the spherical or approximately spherical nanoparticles and/or microparticles have an average particle size from a range from 3 nm to 450 nm and the rod-shaped or oval nanoparticles and/or microparticles have a length from a range from 100 nm to 1 µm and a width from a range from 15 nm to 300 nm.

7. Method according to any of the preceding claims, **characterized in that** the spherical or approximately spherical nanoparticles and/or microparticles have an average particle size from a range 1 from 3 nm to ≤ 50 nm and from a range 2 from 50 nm to 450 nm.

8. Method according to any of the preceding claims, **characterized in that** the at least one layer from step c) is selected from the group consisting of at least one hardcoat layer, at least one antireflection layer, at least one reflection layer, at least one electrically conductive layer, at least one electrically semiconductive layer, at least one clean-coat layer, at least one antifog layer, at least one photochromic layer, at least one polarizing layer and at least one colouring layer.

9. Method according to any of the preceding claims, **characterized in that** the nanostructured and/or microstructured layer obtained in step d) serves as surface to be coated for the formation of at least one further nanostructured and/or microstructured layer.

10. Method according to any of the preceding claims, **characterized in that** the at least one layer of nanoparticles and/or microparticles for the formation of the at least one further nanostructured and/or microstructured layer, in relation to the shape and/or average particle size of the nanoparticles and/or microparticles, is identical to or different from the at least one layer of nanoparticles and/or microparticles that was used to form the nanostructured and/or microstructured layer of the surface to be coated.

11. Method according to any of the preceding claims, **characterized in that** the at least one layer of nanoparticles and/or microparticles is a monolayer or a double layer.

12. Method according to any of the preceding claims, **characterized in that** at least 50% of the nanoparticles and/or microparticles in a monolayer are adjacent to the respective surface to be coated.

13. Method according to any of the preceding claims, **characterized in that** the maximum layer thickness of the at least one layer from step c) is smaller than the average particle size of the nanoparticles and/or microparticles present in the at least one layer.

14. Method according to any of the preceding claims, **characterized in that** the method comprises, after step b), a step b'):
b') introducing high-frequency energy in the presence of oxygen, ozone, tetrafluoromethane and/or trifluoromethane onto the at least one layer of nanoparticles and/or microparticles from step b).

15. Method according to any of the preceding Claims 1 to 14, **characterized in that** the surface of the substrate to be coated is a coated surface of the substrate.

## Revendications

1. Procédé de fabrication d'un verre de lunettes comprenant au moins un substrat et au moins une couche nanostructurée et/ou microstructurée, le procédé comprenant les étapes suivantes :
a) la fourniture d'un substrat muni d'une surface à revêtir,
b) le masquage ou le garnissage de la surface à revêtir avec au moins une strate de nanoparticules et/ou microparticules,
c) le revêtement de l'au moins une strate de nanoparticules et/ou microparticules et de la surface à revêtir avec au moins une couche,
d) l'élimination des nanoparticules et/ou microparticules de l'au moins une couche de l'étape c) avec formation d'une structure d'espace intermédiaire, qui se forme sur la surface à revêtir au sein de l'au moins une strate de nanoparticules et/ou microparticules uniquement aux emplacements auxquels les nanoparticules et/ou microparticules ne se touchent pas,
e) éventuellement le revêtement de la couche nanostructurée et/ou microstructurée obtenue selon l'étape d) avec au moins une couche supplémentaire, qui n'est pas identique à l'au moins une couche de l'étape c),
**caractérisé en ce que** le temps que le verre de lunettes pour atteindre 90 % de la valeur d'équilibre constante de l'absorption d'eau et de l'émission d'eau dans une atmosphère ayant une température dans une plage allant de 30 °C à 50 °C et une humidité relative de l'air dans une plage allant de 86 % à 97 % est moins de 10 heures plus long que pour le substrat identique dans une atmosphère identique.

2. Procédé selon la revendication 1, **caractérisé en ce que** le substrat fourni dans l'étape a) comporte au moins un matériau polymère et/ou un verre minéral.

3. Procédé selon l'une quelconque des revendications précédentes, **caractérisé en ce que** la structure d'espace intermédiaire est régulière ou irrégulière.

4. Procédé selon l'une quelconque des revendications précédentes, **caractérisé en ce que** la forme des nanoparticules et/ou microparticules est sphérique, approximativement sphérique, en forme de bâtonnets, ovale ou une forme mixte de celles-ci.

5. Procédé selon l'une quelconque des revendications précédentes, **caractérisé en ce que** les nanoparticules et/ou microparticules se présentent en un mélange de différentes formes.

6. Procédé selon l'une quelconque des revendications précédentes, **caractérisé en ce que** les nanoparticules et/ou microparticules sphériques ou approximativement sphériques présentent une taille de particule moyenne dans une plage allant de 3 nm à 450 nm et les nanoparticules et/ou microparticules en forme de bâtonnets ou ovales présentent une longueur dans une plage allant de 100 nm à 1 µm et une largeur dans une plage allant de 15 nm à 300 nm.

7. Procédé selon l'une quelconque des revendications précédentes, **caractérisé en ce que** les nanoparticules et/ou microparticules sphériques ou approximativement sphériques présentent une taille de particule moyenne dans une plage 1 allant de 3 nm à ≤ 50 nm et dans une plage 2 allant de 50 nm à 450 nm.

8. Procédé selon l'une quelconque des revendications précédentes, **caractérisé en ce que** l'au moins une couche de l'étape c) est choisie dans le groupe constitué par au moins une couche de vernis dur, au moins une couche antireflet, au moins une couche réfléchissante, au moins une couche électriquement conductrice, au moins une couche électriquement semiconductrice, au moins une couche Clean Coat, au moins une couche antibuée, au moins une couche photochrome, au moins une couche polarisante et au moins une couche colorante.

9. Procédé selon l'une quelconque des revendications précédentes, **caractérisé en ce que** la couche nanostructurée et/ou microstructurée obtenue dans l'étape d) sert de surface à revêtir pour la formation d'au moins une couche nanostructurée et/ou microstructurée supplémentaire.

10. Procédé selon l'une quelconque des revendications précédentes, **caractérisé en ce que** l'au moins une strate de nanoparticules et/ou microparticules pour la formation de l'au moins une couche nanostructurée et/ou microstructurée supplémentaire est identique ou différente, au regard de la forme et/ou de la taille de particule moyenne des nanoparticules et/ou microparticules, de l'au moins une strate de nanoparticules et/ou microparticules qui a été utilisée pour la formation de la couche nanostructurée et/ou microstructurée de la surface à revêtir.

11. Procédé selon l'une quelconque des revendications précédentes, **caractérisé en ce que** l'au moins une strate de nanoparticules et/ou microparticules est une monostrate ou une double couche.

12. Procédé selon l'une quelconque des revendications précédentes, **caractérisé en ce que**, dans une monocouche, au moins 50 % des nanoparticules et/ou microparticules sont adjacentes sur la surface à revêtir respective.

13. Procédé selon l'une quelconque des revendications précédentes, **caractérisé en ce que** l'épaisseur de couche maximale de l'au moins une couche de l'étape c) est inférieure à la taille de particule moyenne des nanoparticules et/ou microparticules présentes dans l'au moins une strate.

14. Procédé selon l'une quelconque des revendications précédentes, **caractérisé en ce que** le procédé comprend une étape b') après l'étape b) :
b') l'apport d'énergie de haute fréquence en présence d'oxygène, d'ozone, de tétrafluorométhane et/ou de trifluorométhane à l'au moins une strate de nanoparticules et/ou microparticules de l'étape b).

15. Procédé selon l'une quelconque des revendications 1 à 14 précédentes, **caractérisé en ce que** la surface à revêtir du substrat est une surface revêtue du substrat.
